# EUROPEAN PATENT APPLICATION

(11) **EP 2 451 170 A1**
(43) Date of publication of application: **09.05.2012**
(21) Application number: 10794026.4
(22) Date of filing: 22.06.2010
(51) Int. Cl.: H04N 13/00, H04N 7/173, H04N 7/26

(54) **STEREOSCOPIC IMAGE DATA TRANSMITTER AND METHOD FOR TRANSMITTING STEREOSCOPIC IMAGE DATA**

(30) Priority: 29.06.2009 JP 2009153686; 20.01.2010 JP 2010010536
(71) Applicant: Sony Corporation, Tokyo 108-0075 (JP)
(72) Inventor: TSUKAGOSHI, Ikuo, Tokyo 108-0075 (JP)
(74) Representative: Thévenet, Jean-Bruno
(86) International application number: PCT/JP2010/060584
(87) International publication number: WO 2011/001856

(57) **Abstract**

[Object] To maintain perspective consistency among individual objects in an image in display of superimposition information in an image display apparatus.

[Solution] A set top box 200 transmits, to an external apparatus (such as a television receiver), a disparity information set including disparity information of one of a left-eye image and a right-eye image with respect to the other together with stereo image data including left-eye image data and right-eye image data using an HDMI interface. When the disparity information set is transmitted using the HDMI interface, (1) HDMI Vendor Specific InfoFrame is used, or (2) an active space of 3D video format of a frame packing method or the like is used. A disparity information set of a first type includes a certain number of disparity vectors (disparity information) and pieces of position information (block IDs) indicating positions in an image area to which the respective disparity vectors belong. A disparity information set of a second type includes division information of an image area and pieces of disparity information representing respective division areas.

## Description

### Technical Field

The present invention relates to a stereo image data transmitting apparatus and a stereo image data transmitting method, and particularly relates to a stereo image data transmitting apparatus or the like capable of favorably performing display of superimposition information (such as a menu and a program table).

### Background Art

For example, a method for transmitting stereo image data using television airwaves is suggested in PTL 1. In this case, stereo image data including left-eye image data and right-eye image data is transmitted, and stereo image display using binocular disparity is performed in a television receiver.

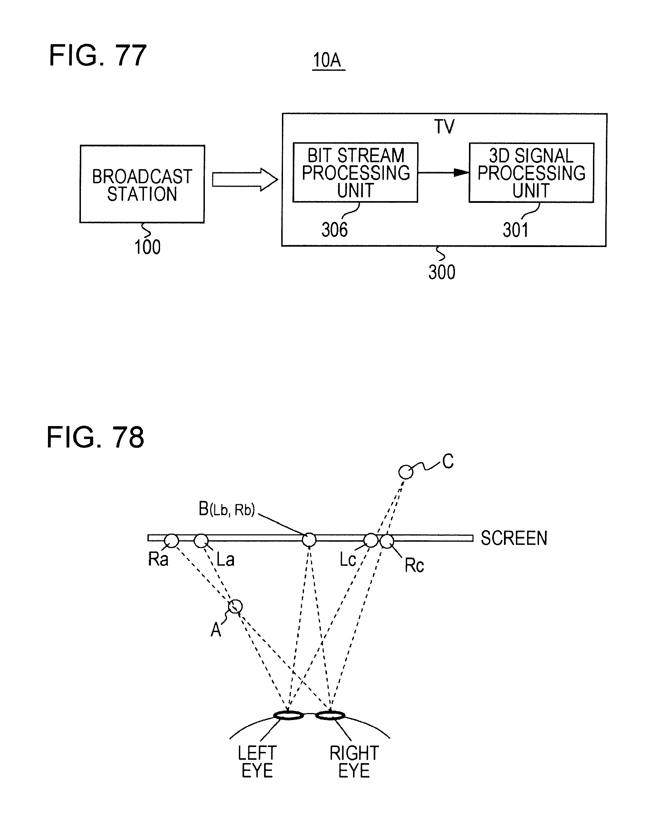

Fig. 78 illustrates a relationship between the display positions of left and right images of an object on a screen and the reproduction position of the stereo image formed therefrom in stereo image display using binocular disparity. For example, regarding an object A, a left image La of which is displayed so as to be shifted to the right side and a right image Ra of which is displayed so as to be shifted to the left side on the screen, as illustrated in the figure, left and right lines of sight cross in front of a screen surface, and thus the reproduction position of the stereo image thereof is in front of the screen surface.

Also, for example, regarding an object B, a left image Lb and a right image Rb of which are displayed at the same position on the screen, as illustrated in the figure, left and right lines of sight cross on the screen surface, and thus the reproduction position of the stereo image thereof is on the screen surface. Furthermore, for example, regarding an object C, a left image Lc of which is displayed so as to be shifted to the left side and a right image Rc of which is displayed so as to be shifted to the right side on the screen, as illustrated in the figure, left and right lines of sight cross behind the screen surface, and thus the reproduction position of the stereo image thereof is behind the screen surface.

### Citation List

### Patent Literature

PTL 1: Japanese Unexamined Patent Application Publication No. 2005-6114

### Summary of Invention

### Technical Problem

As described above, in stereo image display, a viewer normally recognizes perspective in a stereo image using binocular disparity. Regarding superimposition information that is to be superimposed on an image, such as closed-caption information, subtitle information, graphics information, and text information, for example, it is expected to be rendered in conjunction with stereo image display not only in a two-dimensional space but also in three-dimensional perspective.

For example, in the case of performing superimposition display (overlay display) of a caption, which is closed-caption information or subtitle information, on an image, a viewer may feel perspective inconsistency unless the caption is displayed in front of the nearest object in the image in terms of perspective. Also, in the case of performing superimposition display of other graphics information or text information on an image, it is expected that disparity adjustment is to be performed in accordance with the perspective of individual objects in the image and perspective consistency is to be maintained.

An object of the present invention is to maintain perspective consistency among individual objects in an image in display of superimposition information (such as a menu and a program table) in an image display apparatus.

### Solution to Problem

A concept of the present invention is in a stereo image data transmitting apparatus including a data transmitting unit that transmits stereo image data including left-eye image data and right-eye image data and a disparity information set including disparity information of one of a left-eye image and a right-eye image with respect to the other to an external apparatus via a transmission path.

In the present invention, stereo image data and a disparity information set are transmitted to an external apparatus via a transmission path by the data receiving unit. The stereo image data includes left-eye image data and right-eye image data. The disparity information set includes disparity information of one of a left-eye image and a right-eye image with respect to the other.

In the present invention, for example, the data transmitting unit is caused to transmit the image data to the external apparatus via the transmission path using a plurality of channels and using a differential signal, and to transmit the disparity information set to the external apparatus by inserting the disparity information set in a blanking period of the image data.

Also, in the present invention, for example, the data transmitting unit is caused to include a transmission data generating unit that generates transmission data in which a video field period serves as a unit, the video field period being divided using a vertical synchronization signal and including a horizontal blanking period, a vertical blanking period, and an active video period, and a transmission data transmitting unit that transmits the transmission data generated by the transmission data generating unit to the external apparatus via the transmission path using a plurality of channels and using a differential signal. The active video period is caused to include a main video area and an auxiliary video area. The transmission data generating unit is caused to arrange image data in the main video area and arrange the disparity information set related to the image data arranged in the main video area in the auxiliary video area.

Also, in the present invention, for example, the disparity information set is caused to include pieces of disparity information corresponding to a certain number of positions in an image area and pieces of position information indicating positions in the image area to which the respective pieces of disparity information belong.

Also, in the present invention, for example, the disparity information set is caused to include division information of an image area and pieces of disparity information representing respective division areas.

Also, in the present invention, for example, the disparity information set is caused to be added with identification information indicating whether the type of the disparity information set is a first type or a second type. The disparity information set is caused to include pieces of disparity information corresponding to a certain number of positions in an image area and pieces of position information indicating positions in the image area to which the respective pieces of disparity information belong when the identification information indicates the first type, and to include division information of the image area and pieces of disparity information representing respective division areas when the identification information indicates the second type.

In this way, in the present invention, a disparity information set including disparity information of one of a left-eye image and a right-eye image with respect to the other is transmitted to an external apparatus via a transmission path together with stereo image data including left-eye image data and right-eye image data. Thus, in the external apparatus, for example, in an image display apparatus such as a television receiver, information in which disparity adjustment has been performed in accordance with the perspective of individual objects in an image can be used as the same pieces of superimposition information (such as a menu and a program table) that are to be superimposed on a left-eye image and a right-eye image, and the perspective consistency among the individual objects in the image can be maintained in display of the superimposition information.

### Advantageous Effects of Invention

According to the present invention, a disparity information set including disparity information of one of a left-eye image and a right-eye image with respect to the other is transmitted to an external apparatus together with stereo image data including left-eye image data and right-eye image data. Information in which disparity adjustment has been performed in accordance with the perspective of individual objects in an image can be used as superimposition information (such as a menu and a program table). The perspective consistency among the individual objects in the image can be maintained in display of the superimposition information.

### Brief Description of Drawings

[Fig. 1] Fig. 1 is a block diagram illustrating an example configuration of a stereo image display system as an embodiment of the present invention.
[Fig. 2] Fig. 2 is a block diagram illustrating an example configuration of a transmission data generating unit in a broadcast station.
[Fig. 3] Fig. 3 is a diagram illustrating image data of a pixel format of 1920 x 1080 pixels.
[Fig. 4] Fig. 4 includes diagrams for explaining a "Top & Bottom" method, a "Side By Side" method, and a "Frame Sequential" method, which are methods for transmitting stereo image data (3D image data).
[Fig. 5] Fig. 5 is a diagram for explaining an example of detecting a disparity vector of a right-eye image with respect to a left-eye image.
[Fig. 6] Fig. 6 is a diagram for explaining obtaining a disparity vector using a block matching method.
[Fig. 7] Fig. 7 includes diagrams illustrating an example of a disparity vector W at a certain position in an image, detected by a disparity vector detecting unit.
[Fig. 8] Fig. 8 is a diagram illustrating transmission content of disparity vectors.
[Fig. 9] Fig. 9 includes diagrams illustrating an example of disparity detection blocks and transmission content of disparity vectors in that case.
[Fig. 10] Fig. 10 includes diagrams for explaining examples of timings to detect and transmit disparity vectors.
[Fig. 11] Fig. 11 is a diagram for explaining examples of timings to detect and transmit disparity vectors.
[Fig. 12] Fig. 12 is a diagram illustrating an example of individual data streams multiplexed in the transmission data generating unit.
[Fig. 13] Fig. 13 is a block diagram illustrating another example configuration of the transmission data generating unit in the broadcast station.
[Fig. 14] Fig. 14 illustrates an example of individual streams multiplexed in the transmission data generating unit in the broadcast station.
[Fig. 15] Fig. 15 is a block diagram illustrating another example configuration of the transmission data generating unit in the broadcast station.
[Fig. 16] Fig. 16 illustrates an example of individual streams multiplexed in the transmission data generating unit in the broadcast station.
[Fig. 17] Fig. 17 includes diagrams for explaining superimposed positions or the like of left-eye graphics information and right-eye graphics information in a case where a transmission method is a first transmission method ("Top & Bottom" method).
[Fig. 18] Fig. 18 includes diagrams for explaining a method for generating left-eye graphics information and right-eye graphics information in a case where a transmission method is the first transmission method ("Top & Bottom" method).
[Fig. 19] Fig. 19 includes diagrams for explaining a method for generating left-eye graphics information and right-eye graphics information in a case where a transmission method is a second transmission method ("Side By Side" method).
[Fig. 20] Fig. 20 is a diagram for explaining a method for generating left-eye graphics information and right-eye graphics information in a case where a transmission method is the second transmission method ("Side By Side" method).
[Fig. 21] Fig. 21 is a block diagram illustrating another example configuration of the transmission data generating unit in the broadcast station.
[Fig. 22] Fig. 22 is a block diagram illustrating another example configuration of the transmission data generating unit in the broadcast station.
[Fig. 23] Fig. 23 is a diagram illustrating an example image in a case where the values of disparity vectors of respective pixels are used as luminance values of the respective pixels.
[Fig. 24] Fig. 24 is a diagram illustrating an example of disparity vectors of respective blocks.
[Fig. 25] Fig. 25 includes diagrams illustrating an example of a downsizing process that is performed in a disparity information set creating unit in the transmission data generating unit.
[Fig. 26] Fig. 26 is a diagram for explaining disparity vectors of respective areas in individual layers managed by the disparity information set creating unit.
[Fig. 27] Fig. 27 is a diagram illustrating an example of the content of a disparity information set.
[Fig. 28] Fig. 28 includes diagrams illustrating superimposed positions of left-eye graphics information and right-eye graphics information in a case where a transmission method is the second transmission method ("Side By Side" method).
[Fig. 29] Fig. 29 includes diagrams illustrating a state where a graphics image based on graphics data that is extracted from bit stream data and that is transmitted using a conventional method is superimposed as is on a left-eye image and a right-eye image.
[Fig. 30] Fig. 30 includes diagrams illustrating disparity vectors (View Vectors) at three object positions at times T0, T1, T2, and T3, respectively.
[Fig. 31] Fig. 31 includes diagrams illustrating an example display of a caption (graphics information) on an image and the perspective of a background, a foreground object, and the caption.
[Fig. 32] Fig. 32 includes diagrams illustrating an example display of a caption (graphics information) on an image and left-eye graphics information LGI and right-eye graphics information RGI for displaying a caption.
[Fig. 33] Fig. 33 includes diagrams for explaining using, as a disparity vector, a disparity vector corresponding to the superimposed position among disparity vectors detected at a plurality of positions in an image.
[Fig. 34] Fig. 34 includes diagrams illustrating that individual objects A, B, and C exist in an image and that text information indicating annotations of the respective objects is superimposed at the vicinity of these respective objects.
[Fig. 35] Fig. 35 is a block diagram illustrating an example configuration of a set top box forming the stereo image display system.
[Fig. 36] Fig. 36 is a block diagram illustrating an example configuration of a bit stream processing unit forming the set top box.
[Fig. 37] Fig. 37 is a diagram illustrating an example of speaker output control in a case where a disparity vector VV1 is larger in a video object on the left side in the direction of a television display.
[Fig. 38] Fig. 38 is a diagram illustrating the correspondence between individual data streams transmitted from the broadcast station and disparity vectors.
[Fig. 39] Fig. 39 is a diagram illustrating the correspondence between individual data streams transmitted from the broadcast station and disparity vectors.
[Fig. 40] Fig. 40 is a block diagram illustrating another example configuration of the bit stream processing unit forming the set top box.
[Fig. 41] Fig. 41 is a diagram illustrating the correspondence between individual data streams transmitted from the broadcast station and disparity vectors.
[Fig. 42] Fig. 42 is a diagram illustrating the correspondence between individual data streams transmitted from the broadcast station and disparity vectors.
[Fig. 43] Fig. 43 is a diagram illustrating the correspondence between individual data streams transmitted from the broadcast station and disparity vectors.
[Fig. 44] Fig. 44 is a block diagram illustrating another example configuration of the bit stream processing unit forming the set top box.
[Fig. 45] Fig. 45 is a block diagram illustrating another example configuration of the bit stream processing unit forming the set top box.
[Fig. 46] Fig. 46 is a diagram illustrating an example configuration of a television receiver forming the stereo image display system.
[Fig. 47] Fig. 47 is a block diagram illustrating an example configuration of an HDMI transmitting unit (HDMI source) and an HDMI receiving unit (HDMI sink).
[Fig. 48] Fig. 48 is a block diagram illustrating an example configuration of an HDMI transmitter forming the HDMI transmitting unit and an HDMI receiver forming the HDMI receiving unit.
[Fig. 49] Fig. 49 is a diagram illustrating an example structure of TMDS transmission data (a case where image data of horizontal 1920 pixels x vertical 1080 lines is transmitted).
[Fig. 50] Fig. 50 is a diagram illustrating a pin-out (type A) of an HDMI terminal connected to HDMI cables of a source apparatus and a sink apparatus.
[Fig. 51] Fig. 51 is a diagram illustrating an example data structure of E-EDID.
[Fig. 52] Fig. 52 is a diagram illustrating an example data structure of a Vender Specific area (HDMI Vendor Specific Data Block).
[Fig. 53] Fig. 53 is a diagram illustrating a 3D video format of a frame packing method, which is one of TMDS transmission data structures of stereo image data.
[Fig. 54] Fig. 54 is a diagram illustrating a 3D video format of a line alternative method, which is one of TMDS transmission data structures of stereo image data.
[Fig. 55] Fig. 55 is a diagram illustrating a 3D video format of a side by side (Full) method, which is one of TMDS transmission data structures of stereo image data.
[Fig. 56] Fig. 56 is a block diagram illustrating another example configuration of the set top box forming the stereo image display system.
[Fig. 57] Fig. 57 is a diagram illustrating another example configuration of the television receiver forming the stereo image display system.
[Fig. 58] Fig. 58 is a diagram illustrating an example of the content of a disparity information set that is transmitted from the set top box to the television receiver.
[Fig. 59] Fig. 59 is a diagram for explaining individual blocks BK0 to BK8 obtained by dividing an image (picture) area into nine blocks and the arrangement of disparity vectors of the respective blocks in that case.
[Fig. 60] Fig. 60 is a diagram illustrating an example packet structure of HDMI Vendor Specific InfoFrame in a case where HDMI Vendor Specific InfoFrame is used to transmit a disparity information set.
[Fig. 61] Fig. 61 is a diagram illustrating an example packet structure of HDMI Vendor Specific InfoFrame in a case where an active space area is used to transmit a disparity information set.
[Fig. 62] Fig. 62 is a diagram illustrating a configuration of a disparity information set arranged in an active space area.
[Fig. 63] Fig. 63 is a diagram illustrating the content of individual pieces of information of a disparity information set structure.
[Fig. 64] Fig. 64 includes diagrams for explaining examples of arrangement of an information set of each disparity vector according to a block size.
[Fig. 65] Fig. 65 is a diagram illustrating an example packet structure of HDMI Vendor Specific InfoFrame in a case where HDMI Vendor Specific InfoFrame is used to transmit a disparity information set (second type).
[Fig. 66] Fig. 66 is a diagram illustrating an example packet structure of HDMI Vendor Specific InfoFrame in a case where HDMI Vendor Specific InfoFrame is used to transmit a disparity information set (first type).
[Fig. 67] Fig. 67 is a diagram illustrating the content of main information included in a packet of HDMI Vendor Specific InfoFrame.
[Fig. 68] Fig. 68 includes diagrams for explaining information "Dimension" included in a packet of HDMI Vendor Specific InfoFrame.
[Fig. 69] Fig. 69 includes diagrams for explaining a disparity information set of the first type included in a packet of HDMI Vendor Specific InfoFrame.
[Fig. 70] Fig. 70 is a diagram illustrating an example packet structure of HDMI Vendor Specific InfoFrame in a case where HDMI Vendor Specific InfoFrame is used to transmit a disparity information set (only second type).
[Fig. 71] Fig. 71 is a diagram illustrating an example packet structure of HDMI Vendor Specific InfoFrame in a case where an active space area is used to transmit a disparity information set (first type and second type).
[Fig. 72] Fig. 72 is a diagram illustrating a structure of a disparity information set (second type) arranged in an active space area.
[Fig. 73] Fig. 73 is a diagram illustrating a structure of a disparity information set (first type) arranged in an active space area.
[Fig. 74] Fig. 74 is a diagram illustrating the content of individual pieces of information of a structure of a disparity information set (first type ad second type) arranged in an active space area.
[Fig. 75] Fig. 75 includes diagrams for explaining examples of the arrangement of an information set of each disparity vector according to a block size.
[Fig. 76] Fig. 76 is a diagram illustrating an example packet structure of HDMI Vendor Specific InfoFrame in a case where an active space area is used to transmit a disparity information set (only first type or only second type).
[Fig. 77] Fig. 77 is a diagram illustrating another example configuration of the stereo image display system.
[Fig. 78] Fig. 78 is a diagram illustrating a relationship between the display positions of left and right images of an object on a screen and the reproduction position of the stereo image thereof in stereo image display using binocular disparity.

### Description of Embodiments

Hereinafter, an embodiment for carrying out the invention (hereinafter referred to as "embodiment") will be described. Note that the description will be given in the following order.

### 1. Embodiment

### 2. Modification

### <1. Embodiment>

### [Example configuration of stereo image display system]

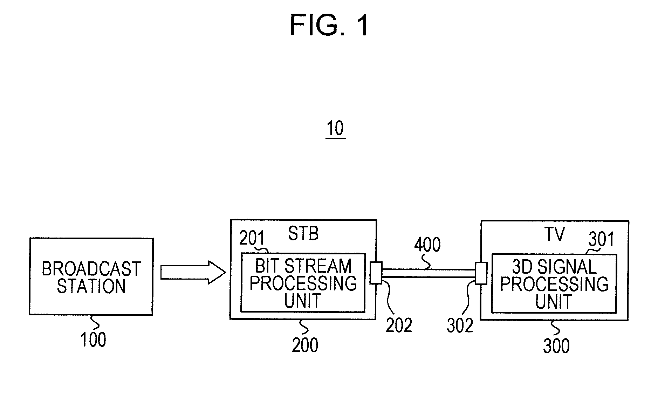

Fig. 1 illustrates an example configuration of a stereo image display system 10 as an embodiment. The stereo image display system 10 includes a broadcast station 100, a set top box (STB) 200, and a television receiver 300.

The set top box 200 and the television receiver 300 are connected to each other via an HDMI (High Definition Multimedia Interface) cable 400. The set top box 200 is provided with an HDMI terminal 202. The television receiver 300 is provided with an HDMI terminal 302. One end of the HDMI cable 400 is connected to the HDMI terminal 202 of the set top box 200, and the other end of the HDMI cable 400 is connected to the HDMI terminal 302 of the television receiver 300.

### [Description of broadcast station]

The broadcast station 100 transmits bit stream data using airwaves. The bit stream data includes stereo image data including left-eye image data and right-eye image data, audio data, superimposition information data, and furthermore disparity information (disparity vectors), etc. Here, the superimposition information data may be closed-caption data, subtitle data, graphics data, text data, and the like.

### [Example configuration of transmission data generating unit]

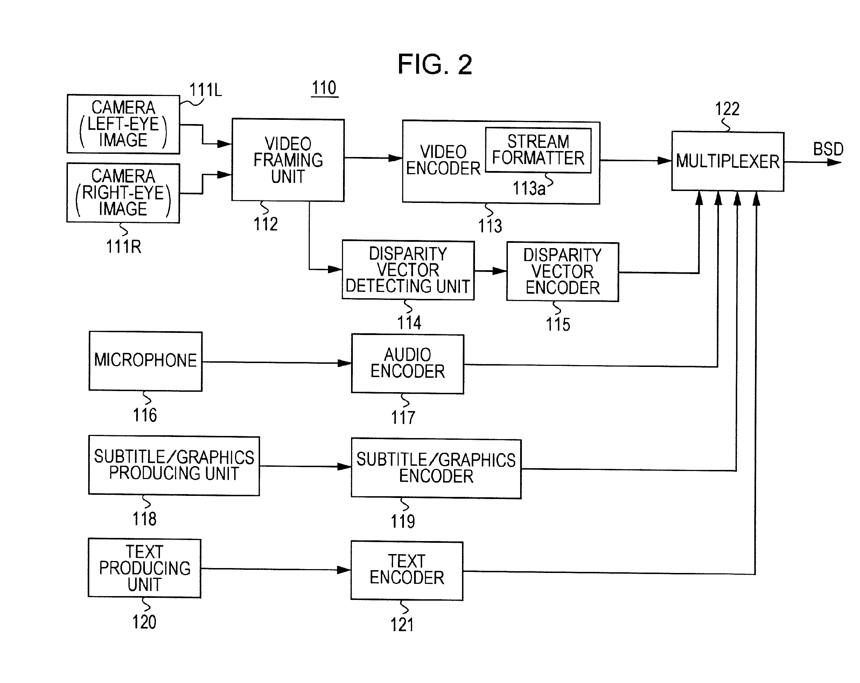

Fig. 2 illustrates an example configuration of a transmission data generating unit 110 that generates the above-described bit stream data in the broadcast station 100. This example configuration is an example of transmitting disparity vectors as numerical information. The transmission data generating unit 110 includes cameras 111L and 111R, a video framing unit 112, a video encoder 113, a disparity vector detecting unit 114, and a disparity vector encoder 115.

Also, the transmission data generating unit 110 includes a microphone 116, an audio encoder 117, a subtitle/graphics producing unit 118, a subtitle/graphics encoder 119, a text producing unit 120, a text encoder 121, and a multiplexer 122. Note that, in this embodiment, the text producing unit 120 also functions as a unit for producing closed-caption data. The closed-caption data may be text data for displaying a closed-caption.

The camera 111L captures a left-eye image and obtains left-eye image data for displaying a stereo image. The camera 111R captures a right-eye image and obtains right-eye image data for displaying a stereo image. The video framing unit 112 processes the left-eye image data obtained by the camera 111L and the right-eye image data obtained by the camera 111R into a state in accordance with a transmission method.

### [Examples of method for transmitting stereo image data]

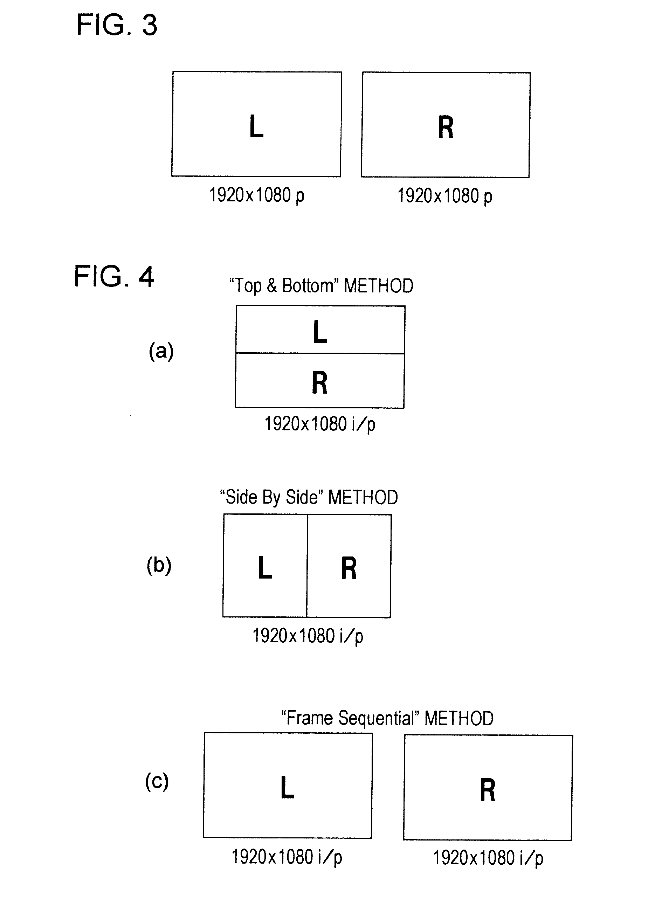

Here, the following first to third methods are used as methods for transmitting stereo image data (3D image data), but another transmission method may be used instead. Here, a description will be given of a case where each of image data of a left eye (L) and image data of a right eye (R) is image data of a determined resolution, for example, of a pixel format of 1920 x 1080 pixels, as illustrated in Fig. 3.

The first transmission method is a "Top & Bottom" method, that is, a method for transmitting data of each line of left-eye image data from a first half in the vertical direction, and transmitting data of each line of left-eye image data from a latter half in the vertical direction, as illustrated in Fig. 4(a). In this case, the lines of the left-eye image data and right-eye image data are thinned to one half, so that the vertical resolution is reduced to half that of the original signal.

The second transmission method is a "Side By Side" method, that is, a method for transmitting pixel data of left-eye image data from a first half in the horizontal direction, and transmitting pixel data of right-eye image data from a latter half in the horizontal direction, as illustrated in Fig. 4(b). In this case, in each of the left-eye image data and right-eye image data, the pixel data in the horizontal direction is thinned to one half. The horizontal resolution is reduced to half that of the current signal.

The third transmission method is a "Frame Sequential" method, that is, a method for transmitting left-eye image data and right-eye image data by sequentially switching therebetween for each field, as illustrated in Fig. 4(c).

Referring back to Fig. 2, the video encoder 113 performs encoding on the stereo image data that has been processed by the video framing unit 112 in accordance with MPEG4-AVC, MPEG2, VC-1, or the like, thereby obtaining encoded video data. Also, the video encoder 113 includes a stream formatter 113a in a latter stage. With the stream formatter 113a, the video encoder 113 generates a video elementary stream that includes encoded video data in a payload portion.

The disparity vector detecting unit 114 detects disparity vectors, which are disparity information of one of a left-eye image and a right-eye image with respect to the other, at certain positions in an image on the basis of left-eye image data and right-eye image data. Here, the certain positions in an image may be all pixel positions, representative positions of respective areas made up of a plurality of pixels, or a representative position of an area on which superimposition information, such as graphic information or text information here, is to be superimposed.

### [Detection of disparity vectors]

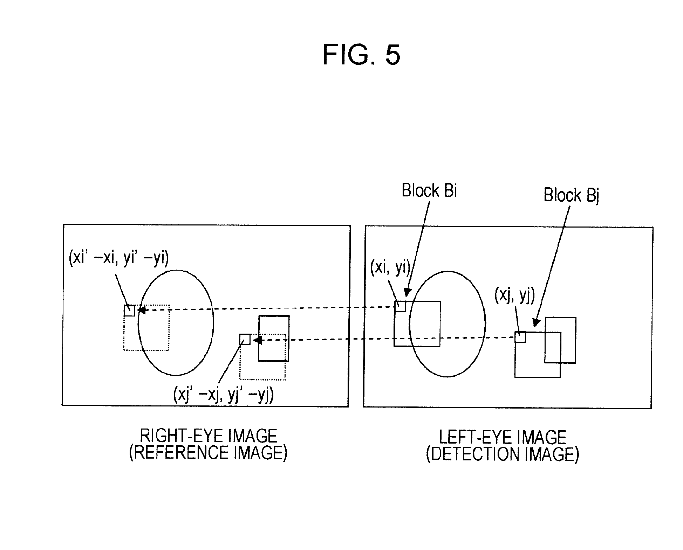

An example of detecting disparity vectors will be described. Here, an example of detecting disparity vectors of a right-eye image with respect to a left-eye image will be described. As illustrated in Fig. 5, the left-eye image is regarded as a detection image, and the right-eye image is regarded as a reference image. In this example, the disparity vectors at the positions (xi, yi) and (xj, yj) are detected.

The case of detecting a disparity vector at the position (xi, yi) will be described as an example. In this case, a pixel block (disparity detection block) Bi of 8 x 8 or 16 x 16, for example, with the pixel at the position (xi, yi) being at the top-left, is set in the left-eye image. Then, a pixel block that matches the pixel block Bi is searched for in the right-eye image.

In this case, a search range having the position (xi, yi) at the center is set in the right-eye image, and comparison blocks of 8 x 8 or 16 x 16, for example, similar to the above-described pixel block Bi, are sequentially set by sequentially regarding the individual pixels in the search range as a target pixel.

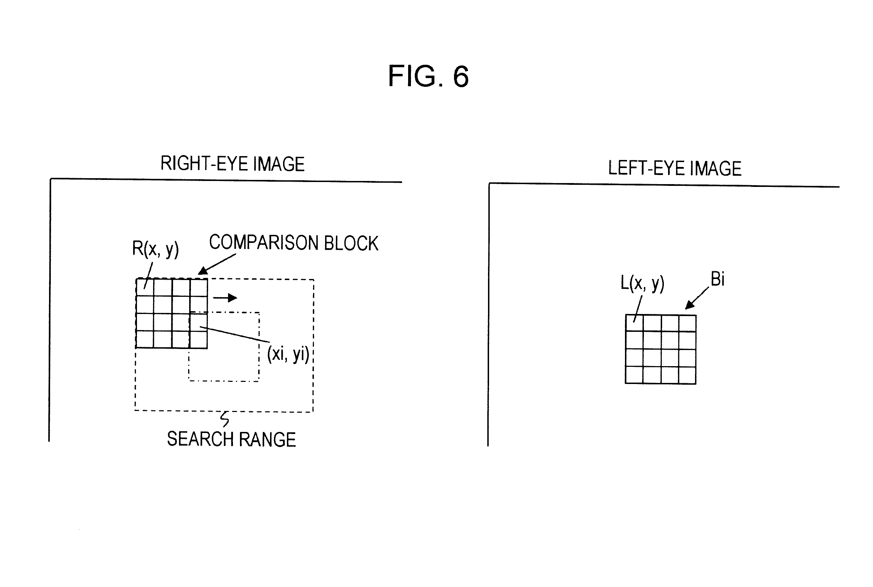

The sums of absolute values of differences between pixels corresponding to each other are obtained between the pixel block Bi and the comparison blocks that are sequentially set. Here, as illustrated in Fig. 6, when the pixel value of the pixel block Bi is L(x, y) and the pixel value of the comparison block is R(x, y), the sum of absolute values of differences between the pixel block Bi and a certain comparison block is expressed by Σ|L(x, y) - R(x, y)|.

When n pixels are included in the search range that is set in the right-eye image, n sums S1 to Sn are eventually obtained, and a minimum sum Smin is selected from among them. Then, the position (xi', yi') of the pixel at the top-left is obtained from the comparison block from which the sum Smin is obtained. Accordingly, the disparity vector at the position (xi, yi) is detected as (xi'-xi, yi'-yi). Although a detailed description is omitted, the disparity vector at the position (xj, yj) is also detected in a similar process procedure, with a pixel block Bj of 8 x 8 or 16 x 16, for example, being set with the pixel at the position (xj, yj) being at the top-left in the left-eye image.

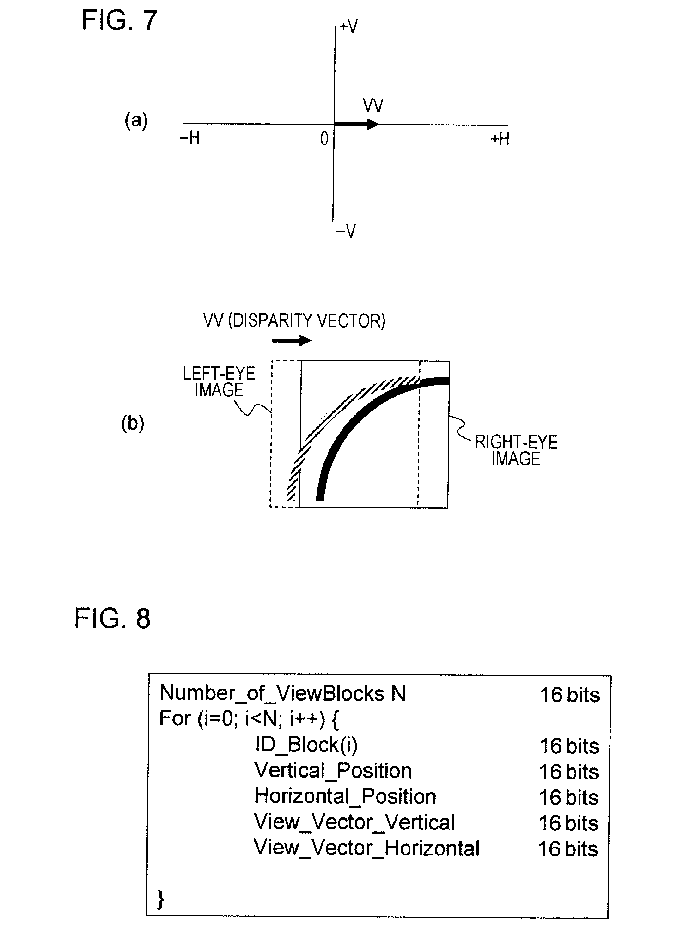

Fig. 7(a) illustrates an example of a disparity vector VV at a certain position in an image, detected by the disparity vector detecting unit 114. In this case, as illustrated in Fig. 7(b), the left-eye image (detection image) overlaps the right-eye image (reference image) when being shifted by the disparity vector VV at the certain position in this image.

Referring back to Fig. 2, the disparity vector encoder 115 generates an elementary stream of disparity vectors including the disparity vectors detected by the disparity vector detecting unit 114. Here, the elementary stream of disparity vectors includes the following content. That is, an ID (ID_Block), vertical position information (Vertical_Position), horizontal position information (Horizontal_Position), and a disparity vector (View_Vector) form one set. Then, this one set is repeated the number of disparity detection blocks, which is N.

Fig. 8 illustrates transmission content of disparity vectors. A disparity vector includes a vertical direction component (View_Vector_Verticai) and a horizontal direction component (View_Vector_Horizontal). Note that the vertical and horizontal positions of a disparity detection block serve as offset values in the vertical direction and the horizontal direction from the origin at the top-left of the image to the pixel at the top-left of the block. The ID of a disparity detection block is attached when transmitting each disparity vector in order to establish a link to the pattern of superimposition information, such as closed-caption information, subtitle information, graphics information, and text information, displayed while being superimposed on an image.

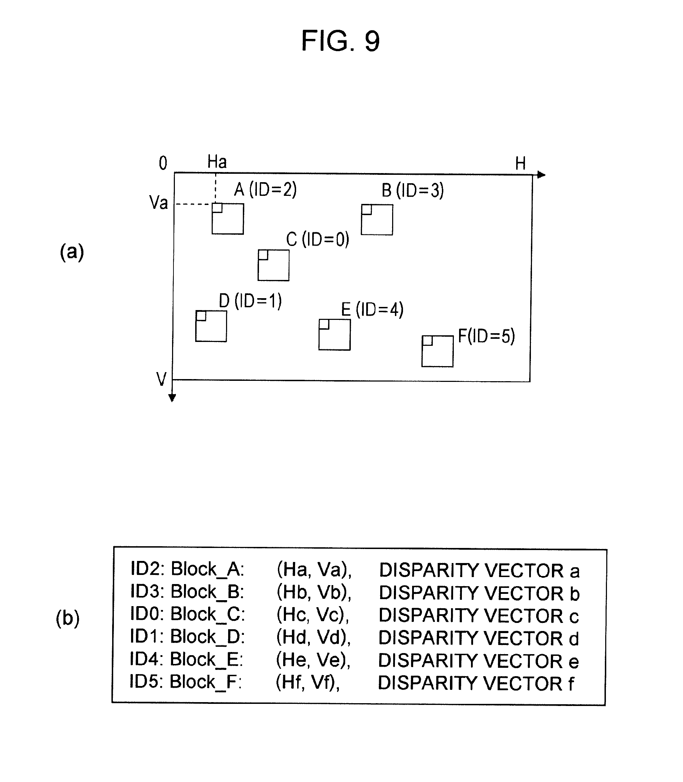

For example, when disparity detection blocks A to F exist, as illustrated in Fig. 9(a), transmission content includes the IDs of the disparity detection blocks A to F, vertical and horizontal position information, and disparity vectors, as illustrated in Fig. 9(b). For example, in Fig. 9(b), regarding the disparity detection block A, ID2 represents the ID of the disparity detection block A, (Ha, Va) represents the vertical and horizontal position information of the disparity detection block A, and disparity vector a represents the disparity vector of the disparity detection block A.

Now, the timing to detect and transmit disparity vectors will be described. The following first to fourth examples are available for this timing.

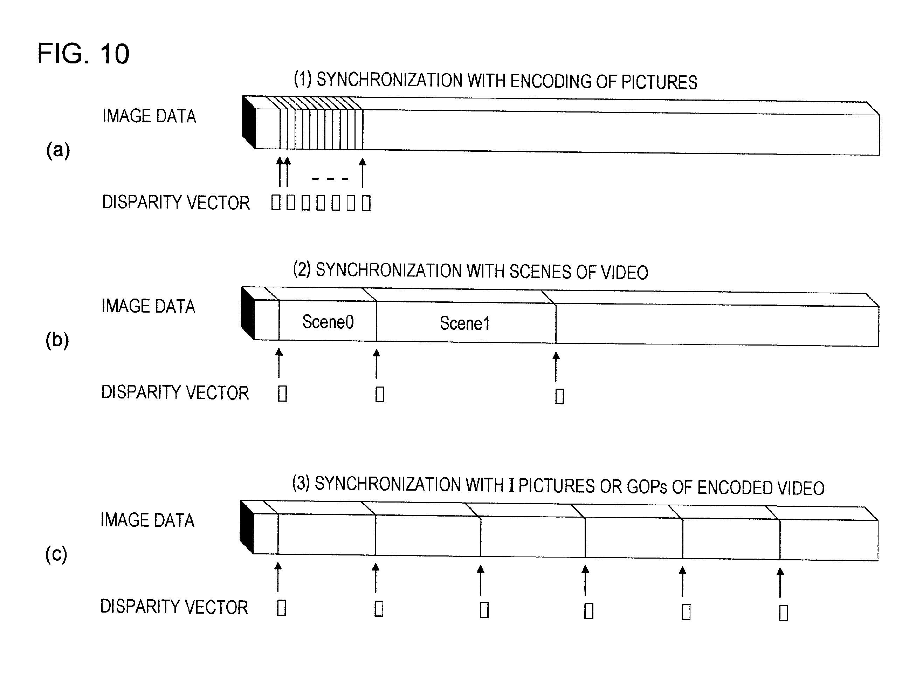

In the first example, the timing is synchronized with encoding of pictures, as illustrated in Fig. 10(a). In this case, disparity vectors are transmitted in units of pictures. The picture is the smallest unit for transmitting disparity vectors. In the second example, the timing is synchronized with scenes of video, as illustrated in Fig. 10(b). In this case, disparity vectors are transmitted in units of scenes.

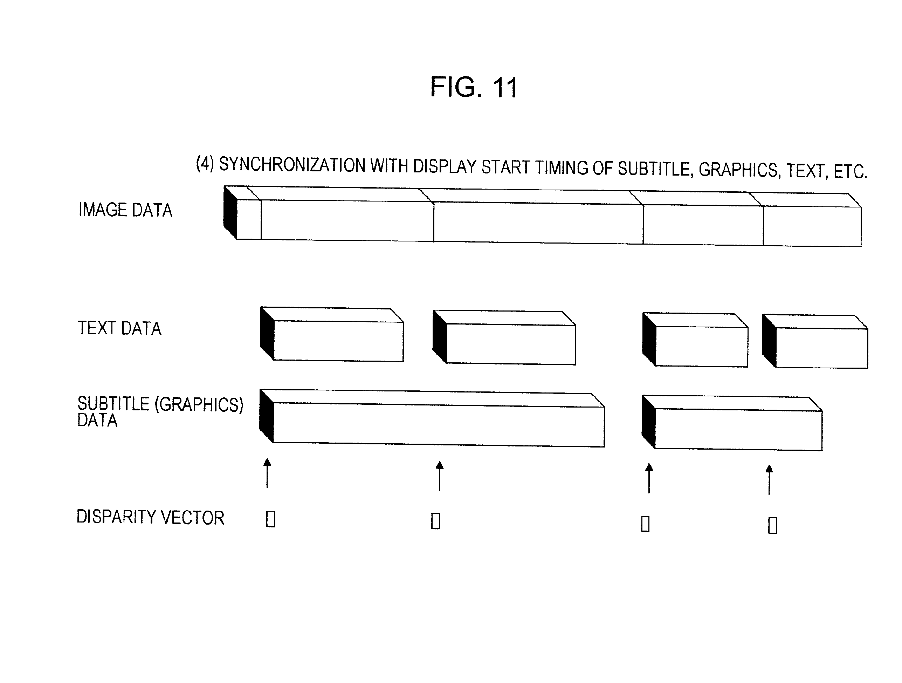

In the third example, the timing is synchronized with I pictures (Intra pictures) or GOPs (Groups Of Pictures) of encoded video, as illustrated in Fig. 10(c). In the fourth example, the timing is synchronized with the display start timing of subtitle information, graphics information, text information, etc., that is displayed while being superimposed on an image, as illustrated in Fig. 11.

Referring back to Fig. 2, the microphone 116 detects the audio corresponding to the images captured by the cameras 111L and 111R, thereby obtaining audio data. The audio encoder 117 performs encoding on the audio data obtained by the microphone 116 in accordance with MPEG-2 Audio AAC or the like, thereby generating an audio elementary stream.

The subtitle/graphics producing unit 118 produces the data of subtitle information or graphics information (subtitle data or graphics data) that is to be superimposed on an image. The subtitle information may be a caption, for example. Also, the graphics information may be a logo, for example. The subtitle data and graphics data are bitmap data. The subtitle data and graphics data are added with idling offset information indicating a superimposed position on an image.

The idling offset information indicates offset values in the vertical direction and the horizontal direction from the origin at the top-left of an image to the pixel at the top-left at the superimposed position of subtitle information or graphics information, for example. Note that a standard for transmitting caption data as bitmap data is standardized as DVB_Subtitling by DVB, which is a digital broadcasting standard in Europe, and is operated.

The subtitle/graphics encoder 119 inputs the data of subtitle information or graphics information (subtitle data or graphics data) that is produced by the subtitle/graphics producing unit 118. Then, the subtitle/graphics encoder 119 generates an elementary stream including those pieces of data in a payload portion.

The text producing unit 120 produces the data of text information (text data) that is to be superimposed on an image. The text information may be an electronic program table or the content of text broadcasting, for example. Like the above-described graphics data, the text data is added with idling offset information indicating a superimposed position on an image. The idling offset information indicates offset values in the vertical direction and the horizontal direction from the origin at the top-left of an image to the pixel at the top-left at the superimposed position of the text information, for example. Note that examples of transmitting text data include EPG that is operated for reserving a program and CC_data (Closed Caption) of an American digital terrestrial standard ATSC.

The text encoder 121 inputs the text data produced by the text producing unit 120. Then, the text encoder 121 generates an elementary stream including the data in a payload portion.

The multiplexer 122 multiplexes the packetized elementary streams output from the encoders 113, 115, 117, 119, and 121. Then, the multiplexer 122 outputs bit stream data (transport stream) BSD serving as transmission data.

The operation of the transmission data generating unit 110 illustrated in Fig. 2 will be briefly described. A left-eye image is captured by the camera 111L. The left-eye image data that is obtained by the camera 111L and that is for displaying a stereo image is supplied to the video framing unit 112. Also, a right-eye image is captured by the camera 111R. The right-eye image data that is obtained by the camera 111R and that is for displaying a stereo image is supplied to the video framing unit 112. In the video framing unit 112, the left-eye image data and the right-eye image data are processed into a state in accordance with a transmission method, so that stereo image data is obtained (see Figs. 4(a) to 4(c)).

The stereo image data obtained by the video framing unit 112 is supplied to the video encoder 113. In the video encoder 113, encoding is performed on the stereo image data in accordance with MPEG4-AVC, MPEG2, VC-1, or the like, so that a video elementary stream including the encoded video data is generated. This video elementary stream is supplied to the multiplexer 122.

Also, the left-eye image data and the right-eye image data obtained by the cameras 111L and 111R are supplied to the disparity vector detecting unit 114 via the video framing unit 112. In the disparity vector detecting unit 114, disparity detection blocks are set at certain positions in an image on the basis of the left-eye image data and the right-eye image data, and disparity vectors, which serve as disparity information of one of the left-eye image and the right-eye image with respect to the other, are detected.

The disparity vectors at the certain positions in the image detected by the disparity vector detecting unit 114 are supplied to the disparity vector encoder 115. In this case, the ID of a disparity detection block, the vertical position information of the disparity detection block, the horizontal position information of the disparity detection block, and a disparity vector are supplied as one set. In the disparity vector encoder 115, a disparity vector elementary stream including the transmission content of disparity vectors (see Fig. 8) is generated. This disparity vector elementary stream is supplied to the multiplexer 122.

Also, in the microphone 116, the audio corresponding to the images captured by the cameras 111L and 111R is detected. The audio data obtained by the microphone 116 is supplied to the audio encoder 117. In the audio encoder 117, encoding is performed on the audio data in accordance with MPEG-2 Audio AAC or the like, so that an audio elementary stream including the encoded audio data is generated. This audio elementary stream is supplied to the multiplexer 122.

Also, in the subtitle/graphics producing unit 118, the data of subtitle information or graphics information (subtitle data or graphics data) that is to be superimposed on an image is produced. The data (bitmap data) is supplied to the subtitle/graphics encoder 119. The subtitle/graphics data is added with idling offset information indicating a superimposed position on an image. In the subtitle/graphics encoder 119, certain encoding is performed on the graphics data, so that an elementary stream including the encoded data is generated. This elementary stream is supplied to the multiplexer 122.

Also, in the text producing unit 120, the data of text information (text data) that is to be superimposed on an image is produced. The text data is supplied to the text encoder 121. Like the above-described graphics data, the text data is added with idling offset information indicating a superimposed position on an image. In the text encoder 121, certain encoding is performed on the text data, so that an elementary stream including the encoded data is generated. This elementary stream is supplied to the multiplexer 122.

In the multiplexer 122, the packets of the elementary streams supplied from the respective encoders are multiplexed, so that bit stream data (transport stream) BSD as transmission data is obtained.

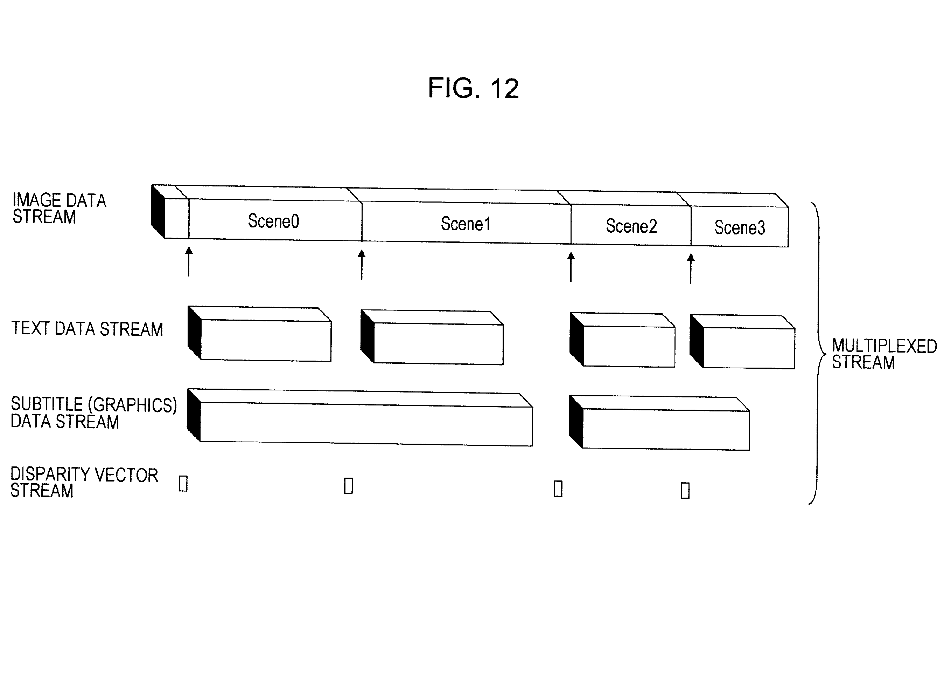

Fig. 12 illustrates an example of individual data streams multiplexed in the transmission data generating unit 110 illustrated in Fig. 2. Note that this example shows a case where disparity vectors are detected and transmitted in units of scenes of video (see Fig. 10(b)). Note that the packets of the individual streams are added with a time stamp for synchronized display, so that the timing to superimpose subtitle information, graphics information, text information, or the like on an image can be controlled on a receiver side.

### [Another example configuration of transmission data generating unit]

Note that the above-described transmission data generating unit 110 illustrated in Fig. 2 has a configuration for transmitting the transmission content of disparity vectors (see Fig. 8) as an independent elementary stream to a receiver side. However, the transmission content of disparity vectors may be transmitted while being embedded in another stream. For example, the transmission content of disparity vectors may be transmitted while being embedded as user data in a video stream. Also, for example, the transmission content of disparity vectors may be transmitted while being embedded in a stream of subtitle, graphics, or text.

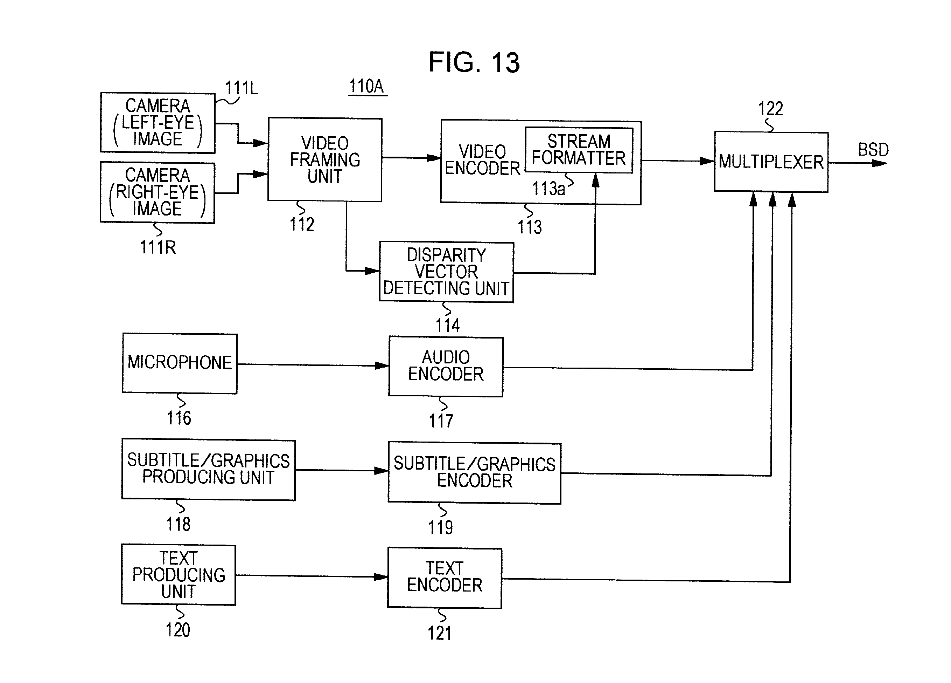

Fig. 13 illustrates an example configuration of a transmission data generating unit 110A. This example is also an example of transmitting disparity vectors as numerical information. The transmission data generating unit 110A has a configuration for transmitting the transmission content of disparity vectors by embedding it as user data in a video stream. In Fig. 13, the parts corresponding to those in Fig. 2 are denoted by the same reference numerals, and the detailed description thereof is omitted.

In the transmission data generating unit 110A, disparity vectors at certain positions in an image detected by the disparity vector detecting unit 114 are supplied to the stream formatter 113a in the video encoder 113. In this case, the ID of a disparity detection block, the vertical position information of the disparity detection block, the horizontal position information of the disparity detection block, and a disparity vector are supplied as one set. In the stream formatter 113a, the transmission content of disparity vectors (see Fig. 8) is embedded as user data in a video stream.

Other than that, the transmission data generating unit 110A illustrated in Fig. 13 is configured similarly to the transmission data generating unit 110 illustrated in Fig. 2, although a detailed description is omitted.

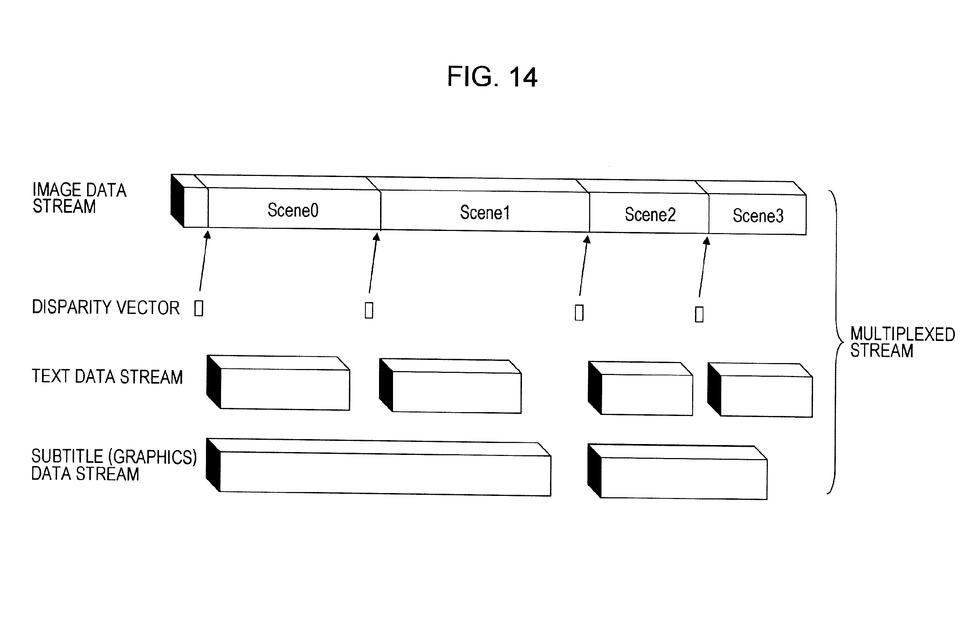

Fig. 14 illustrates an example of an image data stream, a subtitle or graphics data stream, and a text data stream that are multiplexed in the transmission data generating unit 110A illustrated in Fig. 13. Disparity vectors (disparity information) are transmitted while being embedded in the image data stream.

### [Another example configuration of transmission data generating unit]

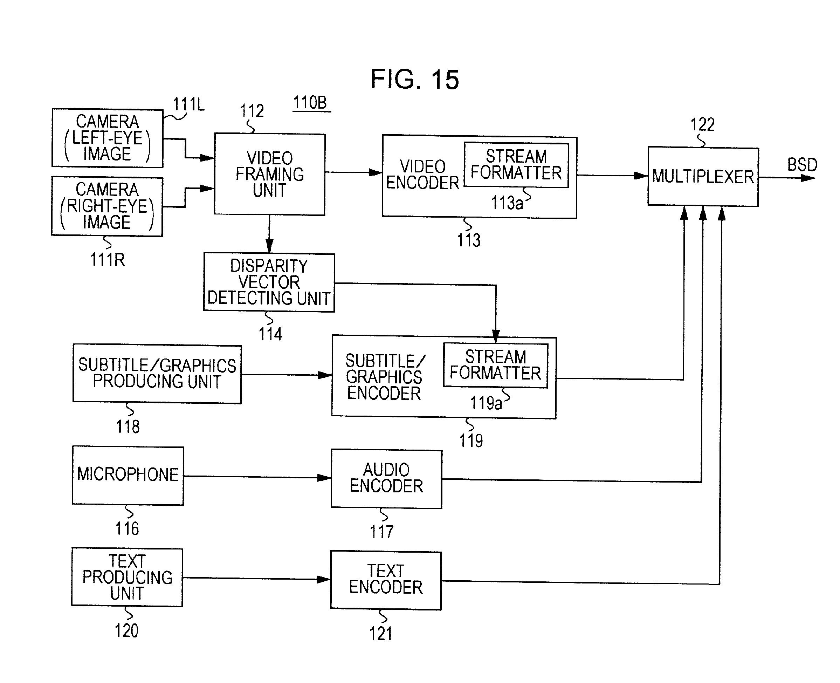

Fig. 15 illustrates an example configuration of a transmission data generating unit 110B. This example is also an example of transmitting disparity vectors as numerical information. The transmission data generating unit 110B has a configuration for transmitting the transmission content of disparity vectors by embedding it in a subtitle or graphics data stream. In Fig. 15, the parts corresponding to those in Fig. 2 are denoted by the same reference numerals, and the detailed description thereof is omitted.

In the transmission data generating unit 110B, disparity vectors at certain positions in an image detected by the disparity vector detecting unit 114 are supplied to a stream formatter 119a in the subtitle/graphics encoder 119. In this case, the ID of a disparity detection block, the vertical position information of the disparity detection block, the horizontal position information of the disparity detection block, and a disparity vector are supplied as one set. In the stream formatter 119a, the transmission content of disparity vectors (see Fig. 8) is embedded in a subtitle or graphics data stream.

Other than that, the transmission data generating unit 110B illustrated in Fig. 15 is configured similarly to the transmission data generating unit 110 illustrated in Fig. 2 and operates similarly thereto, although a detailed description is omitted.

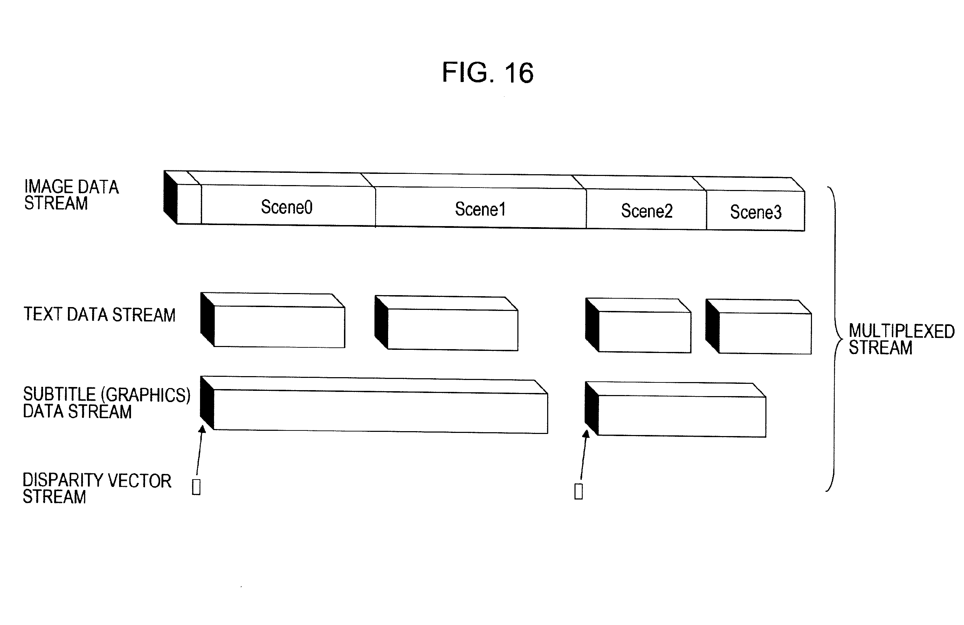

Fig. 16 illustrates an example of an image data stream, a subtitle or graphics data stream, and a text data stream that are multiplexed in the transmission data generating unit 110B illustrated in Fig. 15. Disparity vectors (disparity information) are transmitted while being embedded in a subtitle or graphics data stream.

### [Another example configuration of transmission data generating unit]

Also, the above-described transmission data generating units 110, 110A, and 110B illustrated in Fig. 2, Fig. 13, and Fig. 15 transmit disparity vectors as numerical information (see Fig. 8). However, instead of transmitting disparity vectors as numerical information, the disparity information may be reflected in advance in the data of superimposition information (such as subtitle information, graphics information, and text information, for example) that is to be superimposed on an image on a transmitter side, before transmitting the information disparity.

For example, in the case of reflecting the disparity information in the data of graphics information, graphics data corresponding to both the left-eye graphics information that should be superimposed on a left-eye image and right-eye graphics information that should be superimposed on a right-eye image is generated on a transmitter side. In this case, the left-eye graphics information and the right-eye graphics information are the same graphics information. However, the display position in an image of the right-eye graphics information is shifted in the horizontal direction by the horizontal direction component of the disparity vector corresponding to the display position with respect to the left-eye graphics information, for example.

For example, a disparity vector corresponding to the superimposed position among the disparity vectors detected at a plurality of positions in an image is used as a disparity vector. Also, for example, a disparity vector at the nearest position recognized in terms of perspective among the disparity vectors detected at a plurality of positions in an image is used as a disparity vector. Note that this is the same in the case of reflecting disparity information in the data of subtitle information or graphics information, although a detailed description is omitted.

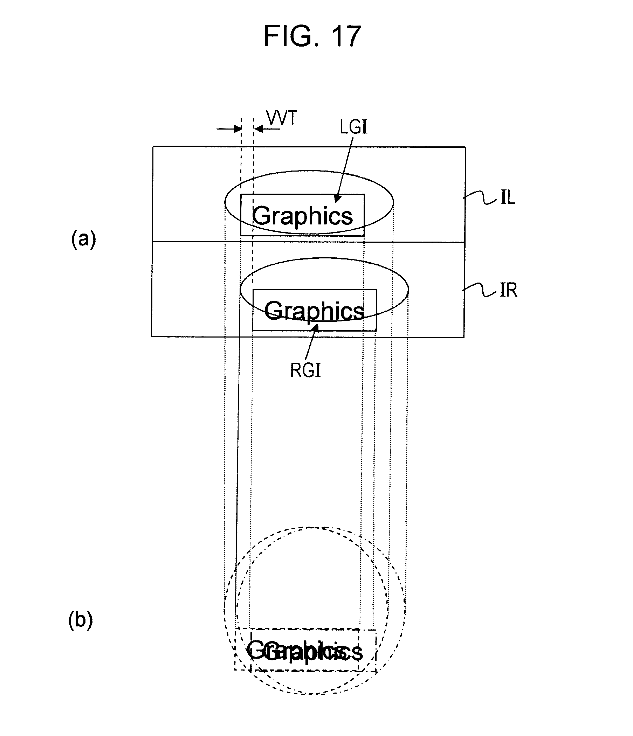

Fig. 17(a) illustrates the superimposed positions of left-eye graphics information and right-eye graphics information in a case where the transmission method is the above-described first transmission method ("Top & Bottom" method). The left-eye graphics information and the right-eye graphics information are the same graphics information. However, the right-eye graphics information RGI superimposed on a right-eye image IR is at the position shifted in the horizontal direction by a horizontal direction component VVT of a disparity vector with respect to the left-eye graphics information LGI superimposed on a left-eye image IL.

Graphics data is generated so that the individual pieces of graphics information LGI and RGI are superimposed on the respective images IL and IR, as illustrated in Fig. 17(a). Accordingly, a viewer can observe the individual pieces of graphics information LGI and RGI with disparity together with the respective images IL and IR, as illustrated in Fig. 17(b), and perspective can be recognized also in the graphics information.

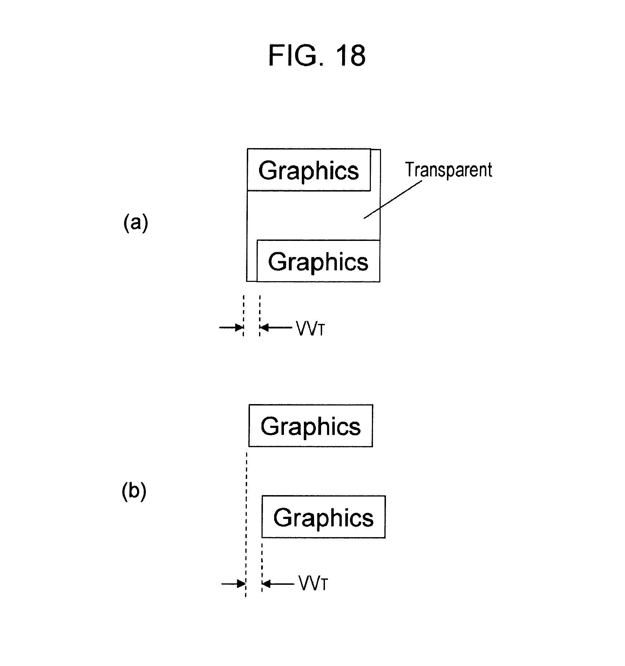

For example, the graphics data of the individual pieces of graphics information LGI and RGI is generated as data of a single area, as illustrated in Fig. 18(a). In this case, the data of the portion other than the individual pieces of graphics information LGI and RGI may be generated as transparent data. Also, for example, the graphics data of the individual pieces of graphics information LGI and RGI is generated as data of separate areas, as illustrated in Fig. 18(b).

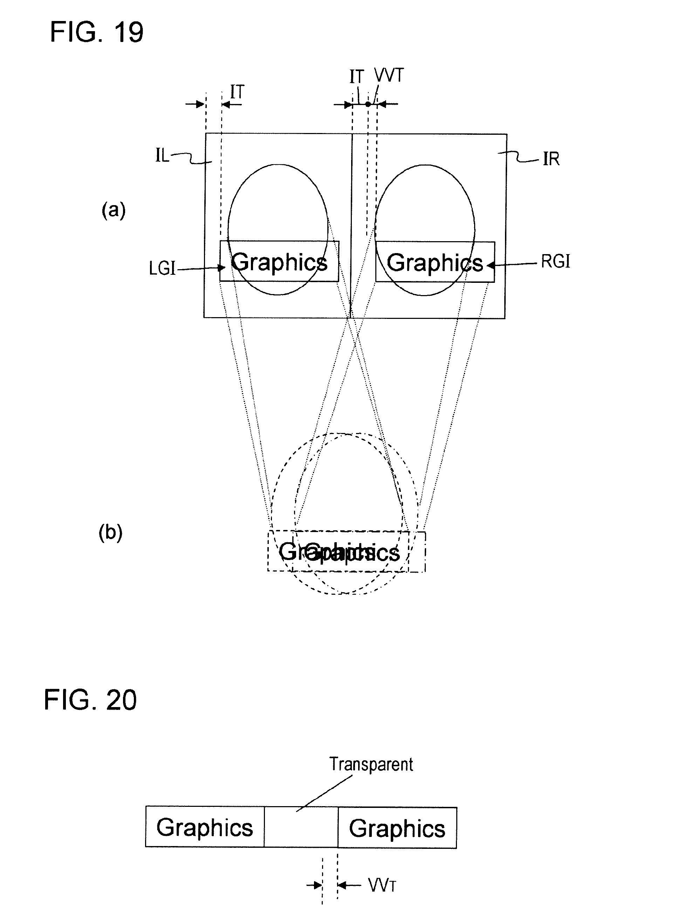

Fig. 19(a) illustrates the superimposed positions of left-eye graphics information and right-eye graphics information in a case where the transmission method is the above-described second transmission method ("Side By Side" method). The left-eye graphics information and the right-eye graphics information are the same graphics information. However, the right-eye graphics information RGI superimposed on the right-eye image IR is at the position shifted in the horizontal direction by the horizontal direction component VVT of the disparity vector with respect to the left-eye graphics information LGI superimposed on the left-eye image IL. Note that IT is an idling offset value.

Graphics data is generated so that the individual pieces of graphics information LGI and RGI are superimposed on the respective images IL and IR, as illustrated in Fig. 19(a). Accordingly, a viewer can observe the individual pieces of graphics information LGI and RGI with disparity together with the respective images IL and IR, as illustrated in Fig. 19(b), and perspective can be recognized also in the graphics information.

For example, the graphics data of the individual pieces of graphics information LGI and RGI is generated as data of a single area, as illustrated in Fig. 20. In this case, the data of the portion other than the individual pieces of graphics information LGI and RGI may be generated as transparent data.

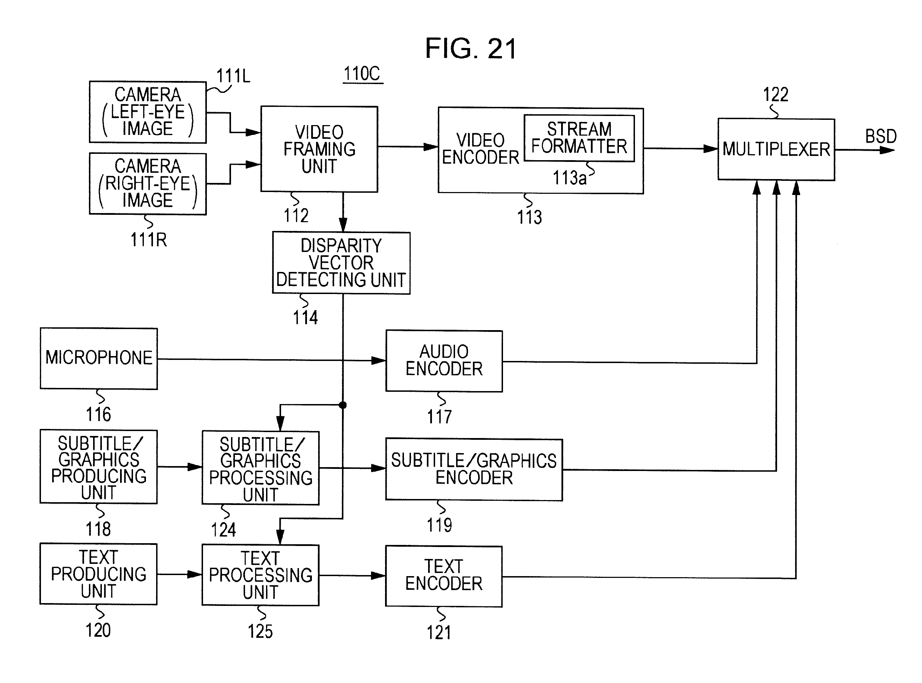

Fig. 21 illustrates an example configuration of a transmission data generating unit 110C. The transmission data generating unit 110C has a configuration for reflecting disparity information in the data of superimposition information, such as closed-caption information, subtitle information, graphics information, and text information, and transmitting it. In Fig. 21, the parts corresponding to those in Fig. 2 are denoted by the same reference numerals, and the detailed description thereof is omitted.

In the transmission data generating unit 110C, a subtitle/graphics processing unit 124 is inserted between the subtitle/graphics producing unit 118 and the subtitle/graphics encoder 119. Also, in the transmission data generating unit 110C, a text processing unit 125 is inserted between the text producing unit 120 and the text encoder 121. Also, the disparity vectors at certain positions in an image detected by the disparity vector detecting unit 114 are supplied to the subtitle/graphics processing unit 124 and the text processing unit 125.

In the subtitle/graphics processing unit 124, the data of pieces of subtitle or graphics information LGI and RGI for a left eye and a right eye, which are to be superimposed on the left-eye image IL and the right-eye image IR, is generated. In this case, the data is produced on the basis of the subtitle data or graphics data produced by the subtitle/graphics producing unit 118. The pieces of subtitle information or graphics information for a left eye and a right eye are the same information. However, the superimposed position in an image of the right-eye subtitle information or graphics information is shifted in the horizontal direction by the horizontal direction component VVT of the disparity vector with respect to the left-eye subtitle information or graphics information, for example (see Fig. 17(a) and Fig. 19(a)).

The subtitle data or graphics data generated in this way by the subtitle/graphics processing unit 124 is supplied to the subtitle/graphics encoder 119. Note that the subtitle data or graphics data is added with idling offset information indicating the superimposed position on an image. In the subtitle/graphics encoder 119, an elementary stream of the subtitle data or graphics data generated by the subtitle/graphics processing unit 124 is generated.

Also, in the text processing unit 125, the data of left-eye text information that is to be superimposed on a left-eye image and the data of right-eye text information that is to be superimposed on a right-eye image are generated on the basis of the text data produced by the text producing unit 120. In this case, the left-eye text information and the right-eye text information are the same text information, but the superimposed position in an image of the right-eye text information is shifted in the horizontal direction by the horizontal direction component VVT of the disparity vector with respect to the left-eye text information, for example.

The text data generated in this way by the text processing unit 125 is supplied to the text encoder 121. Note that the text data is added with idling offset information indicating the superimposed position on an image. In the text encoder 121, an elementary stream of the text data generated by the text processing unit is generated.

Other than that, the transmission data generating unit 110C illustrated in Fig. 21 is configured similarly to the transmission data generating unit 110 illustrated in Fig. 2, although a detailed description is omitted.

### [Another example configuration of transmission data generating unit]

In the transmission data generating units 110, 110A, and 110B illustrated in Fig. 2, Fig. 13, and Fig. 15, disparity vectors (disparity information) at certain positions in an image are detected on the basis of left-eye image data and right-eye image data in the disparity vector detecting unit 114. The transmission data generating units 110, 110A, and 110B have a configuration for transmitting disparity information at certain positions in an image detected by the disparity vector detecting unit 114 to a receiver side as is.

However, for example, disparity vectors may be detected by the disparity vector detecting unit 114 in units of pixels, a downsizing process may be performed thereon, and disparity vectors of respective areas in individual layers, which are obtained by hierarchically dividing an image area, may be obtained. Also, a disparity information set may be created, in which disparity vectors of respective areas in a layer selected on the basis of the space density of disparity vectors requested by a receiver side or a transmission band are arranged in hierarchical order, and this disparity information set may be transmitted to the receiver side.

Also, disparity vectors (disparity information) of respective pixels may be recorded on a data recording medium together with the left-eye image data and right-eye image data that are to be transmitted. In that case, a downsizing process may be performed thereon, and disparity vectors of respective areas in individual layers, which are obtained by hierarchically dividing an image area, may be obtained. Also, a disparity information set may be created, in which disparity vectors of respective areas in a layer selected on the basis of the space density of disparity vectors requested by a receiver side or a transmission band are arranged in hierarchical order after being read from the data recoding medium, and this disparity information set may be transmitted to the receiver side.

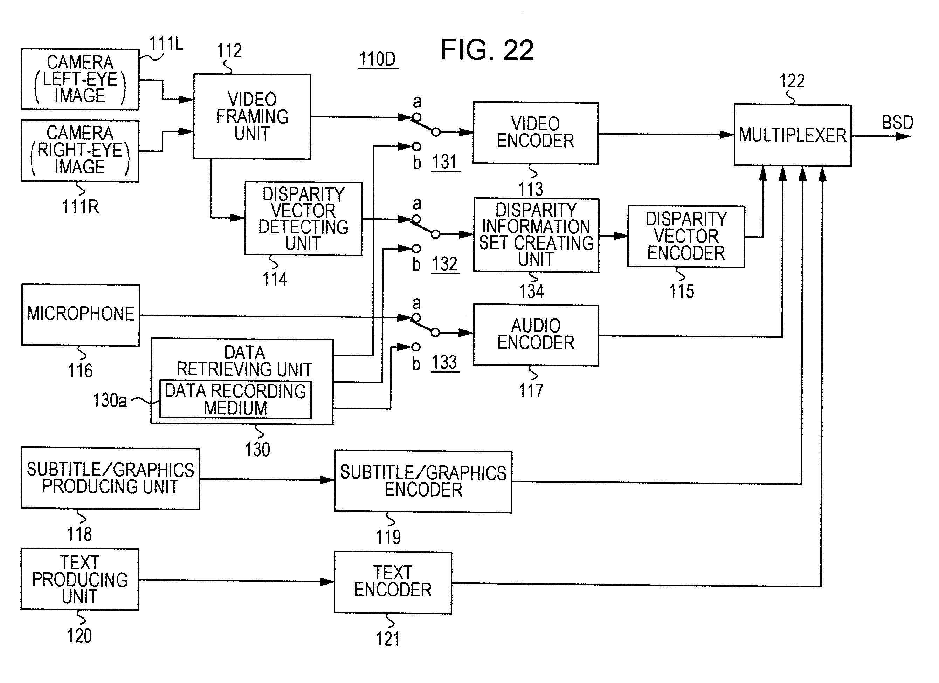

Fig. 22 illustrates an example configuration of a transmission data generating unit 110D. The transmission data generating unit 110D has a configuration for creating a disparity information set in which disparity vectors of respective areas in a selected layer are arranged in hierarchical order and for transmitting this disparity information set to a receiver side. In Fig. 22, the parts corresponding to those in Fig. 2 are denoted by the same reference numerals, and the detailed description thereof is appropriately omitted.

The transmission data generating unit 110D includes the cameras 111L and 111R, the video framing unit 112, the video encoder 113, the disparity vector detecting unit 114, and the disparity vector encoder 115. Also, the transmission data generating unit 110D includes the microphone 116, the audio encoder 117, the subtitle/graphics producing unit 118, the subtitle/graphics encoder 119, the text producing unit 120, the text encoder 121, and the multiplexer 122. Also, the transmission data generating unit 110D includes a data retrieving unit 130, switches 131 to 133, and a disparity information set creating unit 134.

A data recording medium 130a is loaded to the data retrieving unit 130 in a removable manner, for example. Audio data, data of superimposition information, and disparity vectors are recorded on the data recording medium 130a together with stereo image data including left-eye image data and right-eye image data, while being associated with each other. The data retrieving unit 130 retrieves stereo image data, audio data, data of superimposition information, disparity vectors, etc., from the data recording medium 130a, and outputs them.

Here, the stereo image data recorded on the data recording medium 130a corresponds to the stereo image data obtained by the video framing unit 112. Also, the data of superimposition information recorded on the data recording medium 130a is subtitle data, graphics data, text data, or the like. Also, the disparity vectors recorded on the data recording medium 130a are disparity vectors of respective pixels positioned in the bottom layer, for example.

The disparity vector detecting unit 114 detects disparity vectors of respective pixels positioned in the bottom layer, for example, on the basis of left-eye image data and right-eye image data. The switch 131 retrieves the stereo image data obtained by the video framing unit 112 in a live mode and retrieves the stereo image data output from the data retrieving unit 130 in a reproduction mode, and supplies it to the video encoder 113.

The switch 132 retrieves the disparity vectors obtained by the disparity vector detecting unit 114 in the live mode and retrieves the disparity vectors output from the data retrieving unit 130 in the reproduction mode, and supplies them to the disparity information set creating unit 134. The switch 133 retrieves the audio data obtained by the microphone 116 in the live mode and retrieves the audio data output from the data retrieving unit 130 in the reproduction mode, and supplies it to the audio encoder 117.

The disparity information set creating unit 134 performs a downsizing process on the disparity vectors retrieved by the switch 132, that is, disparity vectors of respective pixels positioned in the bottom layer, and obtains disparity information of respective areas in individual layers, which are obtained by hierarchically dividing an image (picture) area.

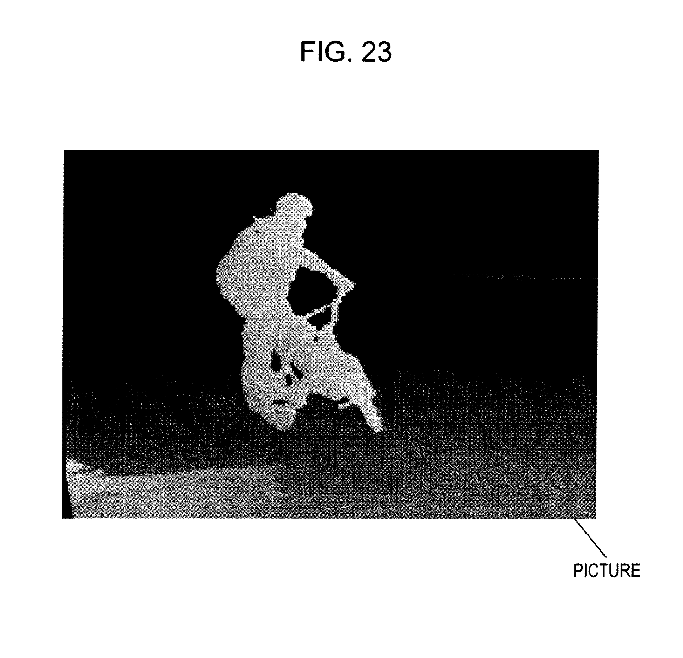

Fig. 23 illustrates an example of data in a relative depth direction that is given as the luminance values of respective pixels. Here, the data in the relative depth direction can be handled as disparity vectors of respective pixels by using certain conversion. In this example, the luminance value is large in the portion of the person. This means that the value of a disparity vector is large in the portion of the person, and thus means that the portion of the person is perceived as being popped up in stereo image display. Also, in this example, the luminance value is small in the portion of the background. This means that the value of a disparity vector is small in the portion of the background, and thus means that the portion of the background is perceived as being on the back side in stereo image display.

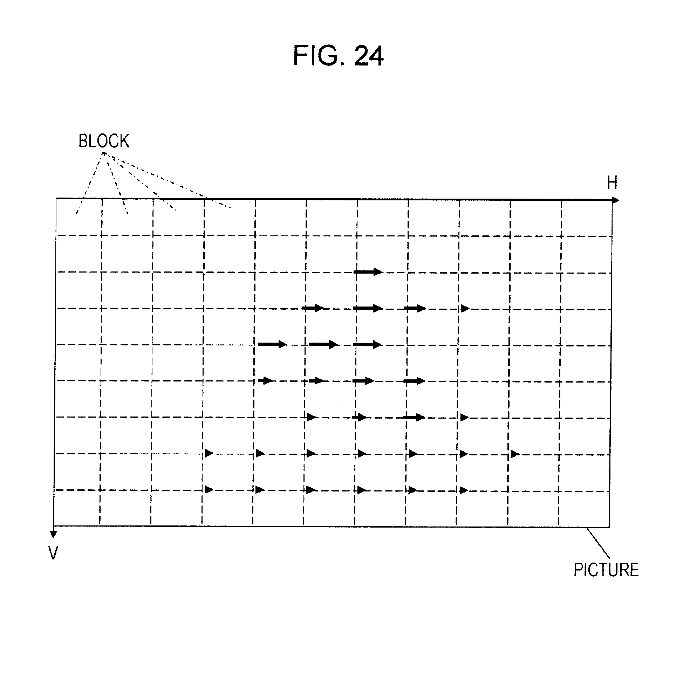

Fig. 24 illustrates an example of disparity vectors of respective blocks. The blocks are in the upper layer of pixels positioned in the bottom layer. These blocks are formed by dividing an image (picture) area into areas of a certain size in the horizontal direction and the vertical direction. The disparity vector of each block is obtained by selecting the disparity vector of the largest value from among the disparity vectors of all the pixels existing in the block, for example. In this example, the disparity vector of each block is represented by an arrow, and the length of the arrow corresponds to the size of the disparity vector.

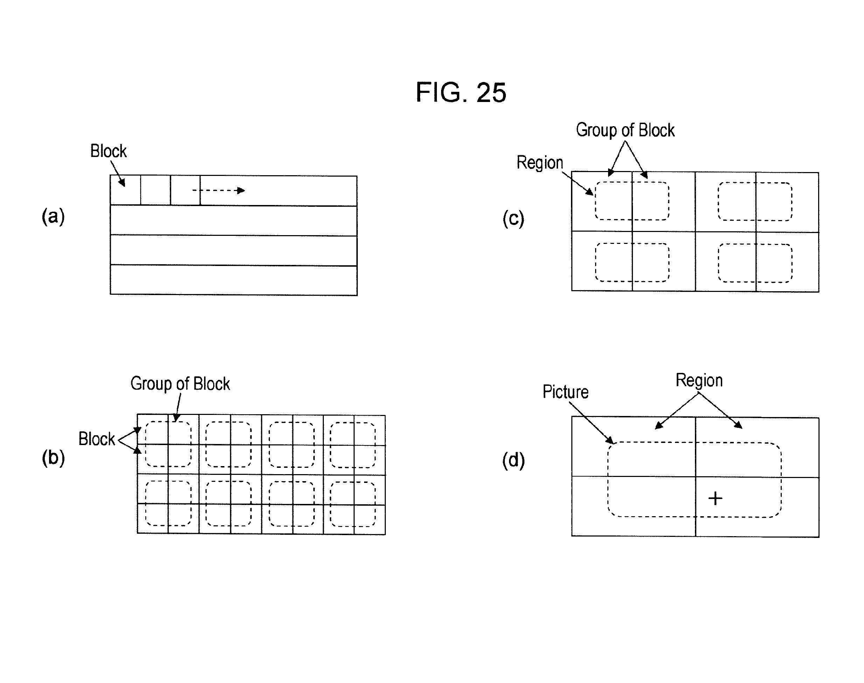

Fig. 25 illustrates an example of a downsizing process that is performed in the disparity information set creating unit 134. First, the disparity information set creating unit 134 obtains the disparity vectors of the respective blocks using the disparity vectors of the respective pixels, as illustrated in Fig. 25(a). As described above, the blocks are in the upper layer of pixels positioned in the bottom layer and are formed by dividing an image (picture) area into areas of a certain size in the horizontal direction and the vertical direction. Also, the disparity vector of each block is obtained by selecting the disparity vector of the largest value from among the disparity vectors of all the pixels existing in the block, for example.

Next, the disparity information set creating unit 134 obtains the disparity vectors of respective groups (Groups Of Blocks) using the disparity vectors of the respective blocks, as illustrated in Fig. 25(b). The groups are in the upper layer of blocks and are obtained by grouping a plurality of blocks close to each other. In the example in Fig. 25(b), each group is constituted by four blocks defined by a broken-line frame. Also, the disparity vector of each group is obtained by selecting the disparity vector of the largest value from among the disparity vectors of all the blocks existing in the group, for example.

Next, the disparity information set creating unit 134 obtains the disparity vectors of respective regions using the disparity vectors of the respective groups, as illustrated in Fig. 25(c). The regions are in the upper layer of groups and are obtained by grouping a plurality of groups close to each other. In the example in Fig. 25(c), each region is constituted by two groups defined by a broken-line frame. Also, the disparity vector of each region is obtained by selecting the disparity vector of the largest value from among the disparity vectors of all the groups existing in the region, for example.

Next, the disparity information set creating unit 134 obtains the disparity vector of the entire picture (entire image) positioned in the top layer using the disparity vectors of the respective regions, as illustrated in Fig. 25(d). In the example in Fig. 25(d), four regions defined by a broken-line frame are included in the entire picture. Also, the disparity vector of the entire picture is obtained by selecting the disparity vector of the largest value from among the disparity vectors of all the regions included in the entire picture, for example. In this case, information about the original position of the pixel where the disparity vector of the entire picture is obtained (indicated by "+") may be obtained in addition to the disparity vector, and the information may be regarded as additional information of the disparity vector. This is the same in the case of obtaining the disparity vectors of the above-described blocks, groups, and regions.

In this way, the disparity information set creating unit 134 performs a downsizing process on the disparity vectors of the respective pixels positioned in the bottom layer, thereby being able to obtain the disparity vectors of the respective areas in the individual layers, that is, blocks, groups, regions, and an entire picture. Note that, in the example of a downsizing process illustrated in Fig. 25, the disparity vectors in four layers, that is, blocks, groups, regions, and an entire picture, are eventually obtained in addition to the layer of pixels, but the number of layers, the method for dividing an area in each layer, and the number of areas are not limited thereto.

Also, the disparity information set creating unit 134 creates a disparity information set in which the disparity vectors of the respective areas in the layer selected on the basis of the space density of disparity vectors requested by a receiver side or a transmission band are arranged in hierarchical order.

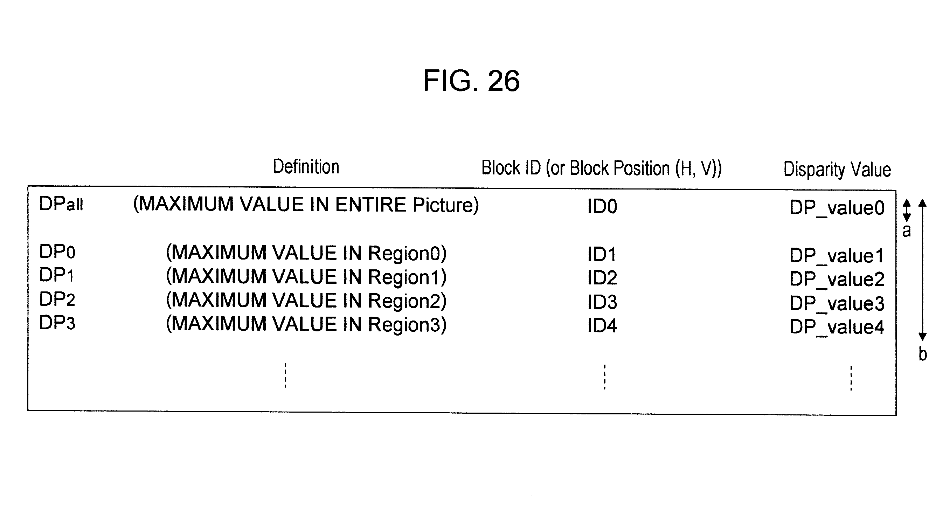

In the disparity information set creating unit 134, the disparity vectors of the respective areas in the individual layers, for example, an entire picture, regions, groups, blocks, and pixels, are obtained through the above-described downsizing process. The disparity information set creating unit 134 manages the disparity vectors of the respective areas in the individual layers. As illustrated in Fig. 26, a block ID (Block ID) is added to the disparity vectors of the respective areas in the individual layers. This block ID represents the position information of the bottom layer to which the target disparity vector belongs, and enables accurate detection of the disparity and position when viewed from the upper layer. Fig. 26 illustrates only the part of the disparity vectors of the entire picture (DPall) and the respective regions (DP0 to DP3) for simple illustration.

In Fig. 26, it is understood that the disparity vector (DP_value0) of the entire picture (DPall) is the disparity vector belonging to the position in the bottom layer represented by the block ID (IDO). Also, in Fig. 26, it is understood that the disparity vectors (DP_value1 to DP_value4) of the respective regions (DP0 to DP3) are the disparity vectors belonging to the position in the bottom layer represented by the block IDs (ID1 to ID4).

Note that the information indicating a position itself can be used instead of a block ID or together with a block ID. The information is an offset value from the top-left of a screen to the top-left of each area, for example, and is represented in units of pixels. Also, if the disparity vectors of the respective pixels are arranged in scan order (video pixel order), the addition of position information can be omitted.

In the case of selecting only the layer of the entire picture, which is the top layer, as a transmission layer, for example, the disparity information set creating unit 134 creates a disparity information set including the disparity vector (DP_value0), the range thereof being indicated by an arrow a in Fig. 26. Also, in the case of selecting the layers of the entire picture and the regions as transmission layers, for example, the disparity information set creating unit 134 creates a disparity information set including the disparity vectors (DP_value0 and DP_value1 to DP_value4), the range thereof being indicated by an arrow b in Fig. 26.

Hereinafter, the disparity information set creating unit 134 creates a disparity information set including the disparity vectors of the respective areas in each layer selected as a transmission layer in a similar manner. Note that the layer of the entire picture is not necessarily included as a transmission layer, and the region layer and lower, or the group layer and lower may be selected. Also, it is needless to say that the degree of freedom can be given to the method for dividing an entire picture in each layer, the number of areas, etc., regarding the configuration itself of each area in each layer, such as regions.

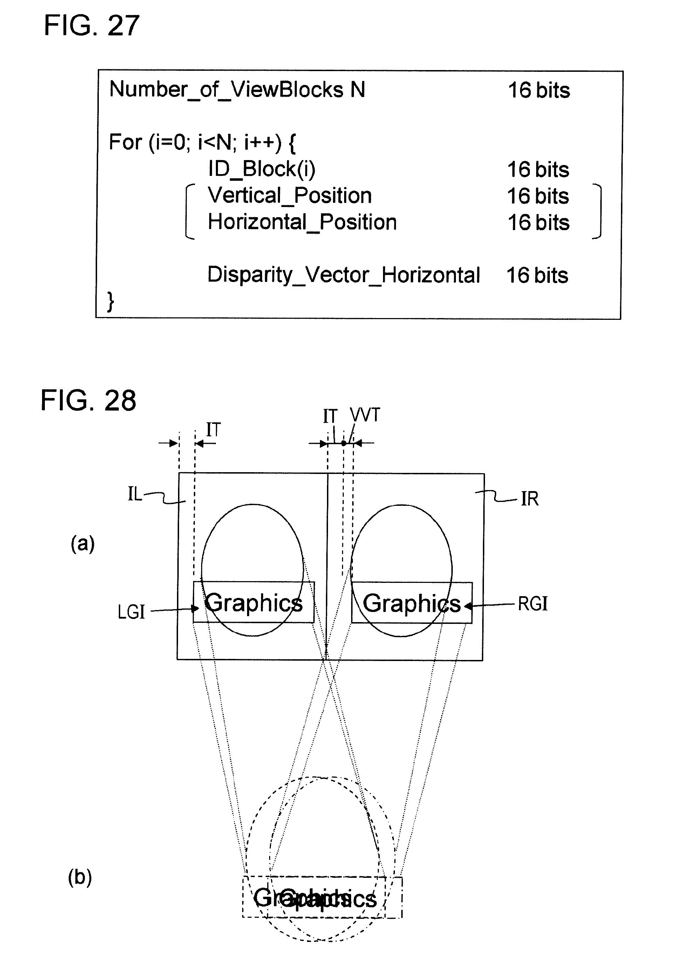

In the disparity information set creating unit 134, the disparity vectors of the respective areas in individual layers selected as a transmission layer are arranged in a disparity information set in hierarchical order, for example, in order from the higher layer. Fig. 27 illustrates an example of the content of a disparity information set.

Information sets of N disparity vectors are included in this disparity information set. Each information set is constituted by a block ID (ID_Block(i)) of sixteen bits, vertical position information (Vertical_Position) of sixteen bits, horizontal position information (Horizontal_Position) of sixteen bits, and a disparity vector in the horizontal direction (Disparity_Vector_Horizontal) of sixteen bits.

Note that, in a case where the position of the bottom layer to which the disparity vector belongs is recognized only with the block ID (ID_Block(i)) in a receiver side, the position information (Vertical_Position, Horizontal_Position) may be unnecessary. Also, in the case of arranging the disparity vectors of the respective pixels in scan order (video pixel order) when transmitting the disparity vectors, both the block ID and position information may be unnecessary.

The video encoder 113 performs encoding on the stereo image data supplied from the switch 131 in accordance with MPEG4-AVC, MPEG2, VC-1, or the like, thereby obtaining encoded video data. Also, the video encoder 113 generates a video elementary stream that includes the encoded video data in a payload portion. The disparity vector encoder 115 generates an elementary stream of disparity vectors including the disparity information set created by the disparity information set creating unit 134. Also, the audio encoder 117 performs encoding on the audio data supplied from the switch 133 in accordance with MPEG-2 Audio AAC or the like, thereby generating an audio elementary stream.

Other than that, the transmission data generating unit 110D illustrated in Fig. 22 is configured similarly to the transmission data generating unit 110 illustrated in Fig. 2, although a detailed description is omitted.

The operation of the transmission data generating unit 110D illustrated in Fig. 22 will be briefly described. First, the operation in the live mode will be described. In the live mode, all the switches 131 to 133 are connected to the a side.

The stereo image data obtained by the video framing unit 112 is supplied to the video encoder 113 via the switch 131. In the video encoder 113, encoding is performed on the stereo image data in accordance with MPEG4-AVC, MPEG2, VC-1, or the like, so that a video elementary stream including the encoded video data is generated. This video elementary stream is supplied to the multiplexer 122.

The left-eye image data and the right-eye image data obtained by the cameras 111L and 111R are supplied to the disparity vector detecting unit 114 via the video framing unit 112. In the disparity vector detecting unit 114, the disparity vectors of the respective pixels positioned in the bottom layer are detected, for example, on the basis of the left-eye image data and the right-eye image data. These disparity vectors are supplied to the disparity information set creating unit 134 via the switch 132.

In the disparity information set creating unit 134, a downsizing process is performed on the disparity vectors, that is, the disparity vectors of the respective pixels positioned in the bottom layer, and the disparity information of respective areas in individual layers obtained by hierarchically dividing an image area are obtained. For example, in the disparity information set creating unit 134, a downsizing process is performed on the disparity vectors of the respective pixels positioned in the bottom layer, so that the disparity vectors of the respective areas in the individual layers, that is, blocks, groups, regions, and an entire picture, are obtained.

Also, in the disparity information set creating unit 134, furthermore, in the disparity information set creating unit 134, a disparity information set is created in which the disparity vectors of the respective areas in the layer selected on the basis of the space density of disparity vectors requested by a receiver side or a transmission band are arranged in hierarchical order (see Fig. 27). This disparity information set is supplied to the disparity vector encoder 115. In the disparity vector encoder 115, a disparity vector elementary stream including the disparity information set is generated. This disparity vector elementary stream is supplied to the multiplexer 122.

Also, the audio data obtained by the microphone 116 is supplied to the audio encoder 117 via the switch 133. In the audio encoder 117, encoding is performed on the audio data in accordance with MPEG-2 Audio AAC or the like, so that an audio elementary stream including the encoded audio data is generated. The audio elementary stream is supplied to the multiplexer 122.

Also, an elementary stream including the encoded data of subtitle data or graphics data is supplied from the subtitle/graphics encoder 119 to the multiplexer 122. Furthermore, an elementary stream including the encoded data of text data is supplied from the text encoder 121 to the multiplexer 122. Then, in the multiplexer 122, the packets of the elementary streams supplied from the respective encoders are multiplexed, so that bit stream data (transport stream) BSD as transmission data is obtained.

Next, the operation in the reproduction mode will be described. In the reproduction mode, all the switches 131 to 133 are connected to the b side. The stereo image obtained by the data retrieving unit 130 is supplied to the video encoder 113 via the switch 131. Also, the disparity vectors obtained by the data retrieving unit 130, that is, the disparity vectors of the respective pixels positioned in the bottom layer, are supplied to the disparity information set creating unit 134 via the switch 132. Also, the audio data obtained by the data retrieving unit 130 is supplied to the audio encoder 117 via the switch 133.

The other operation in the reproduction mode is similar to that in the above-described live mode, although a detailed description is omitted.

In the transmission data generating unit 110D illustrated in Fig. 22, the disparity vectors (disparity information) of the respective areas in a layer selected from among the individual layers that are obtained by hierarchically dividing an image (picture) are arranged in hierarchical order in the disparity information set created by the disparity information set creating unit 134, as described above. Thus, on a receiver side, the disparity vector corresponding to the superimposed position of superimposition information can be easily retrieved from this disparity information set and can be used. That is, on the receiver side, calculation or the like for obtaining the disparity vector corresponding to the superimposed position of superimposition information is not necessary, and a simple configuration can be realized.

Note that, in the description given above of the transmission data generating unit 110D illustrated in Fig. 22, a description has been given that the disparity information set creating unit 134 performs a downsizing process on the disparity vectors of the respective pixels in the bottom layer to obtain the disparity vectors of the respective areas in the individual layers. However, the disparity vectors of the respective areas in the individual layers may be detected or obtained by the disparity vector detecting unit 114, and the disparity vectors may be used by the disparity information set creating unit 134. Alternatively, the disparity vectors of the respective areas in the individual layers may be recorded on the data recording medium 130a, and the disparity vectors may be used by the disparity information set creating unit 134.

Also, in the above description of the transmission data generating unit 110D illustrated in Fig. 22, a description has been given that the disparity information set creating unit 134 performs a downsizing process on the disparity vectors of the respective pixels in the bottom layer to obtain the disparity vectors of the respective areas in the individual layers. However, it is only necessary for the disparity information set creating unit 134 to obtain only the disparity vectors of the respective areas in each layer selected as a transmission layer.

Also, the transmission data generating unit 110D illustrated in Fig. 22 has a configuration for multiplexing, with the multiplexer 122, a disparity vector elementary stream including a disparity information set with other streams. That is, the transmission data generating unit 110D illustrated in Fig. 22 has a configuration corresponding to the transmission data generating unit 110 illustrated in Fig. 2. However, like the transmission data generating units 110A and 110B illustrated in Fig. 13 and Fig. 15, the transmission data generating unit 110D may have a configuration for inserting a disparity information set into another stream, such as an image data stream, and transmitting it to a receiver side.

### [Description of set top box]

Referring back to Fig. 1, the set top box 200 receives bit stream data (transport stream) that is transmitted using airwaves from the broadcast station 100. The bit stream data includes stereo image data including left-eye image data and right-eye image data, audio data, superimposition information data, and furthermore disparity information (disparity vectors). Here, the superimposition information data may be subtitle data, graphics data, text data (including closed-caption data), etc., for example.

The set top box 200 includes a bit stream processing unit 201. The bit stream processing unit 201 extracts stereo image data, audio data, superimposition information data, disparity vectors, etc., from bit stream data. The bit stream processing unit 201 generates the data of a left-eye image and a right-eye image on which superimposition information is superimposed, using stereo image data, superimposition information data (subtitle data, graphics data, or text data), etc.

Here, in a case where disparity vectors are transmitted as numerical information, left-eye superimposition information and right-eye superimposition information that are to be superimposed on a left-eye image and a right-eye image, respectively, are generated on the basis of the disparity vectors and the superimposition information data. In this case, the left-eye superimposition information and the right-eye superimposition information are the same superimposition information. However, the superimposed position in an image of the right-eye superimposition information is shifted in the horizontal direction by the horizontal direction component of the disparity vector with respect to the left-eye superimposition information, for example.

Fig. 28(a) illustrates the superimposed positions of left-eye graphics information and right-eye graphics information in a case where the transmission method is the above-described second transmission method ("Side By Side" method). The right-eye graphics information RGI superimposed on a right-eye image IR is at the position shifted in the horizontal direction by the horizontal direction component VVT of the disparity vector with respect to the left-eye graphics information LGI superimposed on a left-eye image IL. Note that IT is an idling offset value.

In the bit stream processing unit 201, graphics data is generated so that the individual pieces of graphics information LGI and RGI are superimposed on the respective images IL and IR in the manner illustrated in Fig. 28(a). The bit stream processing unit 201 combines the generated left-eye graphics data and right-eye graphics data with the stereo image data (left-eye image data and right-eye image data) extracted from the bit stream data, thereby obtaining processed stereo image data. According to the stereo image data, a viewer can observe the individual pieces of graphics information LGI and RGI with disparity together with the respective images IL and IR, as illustrated in Fig. 28(b), and perspective can be recognized also in the graphics information.

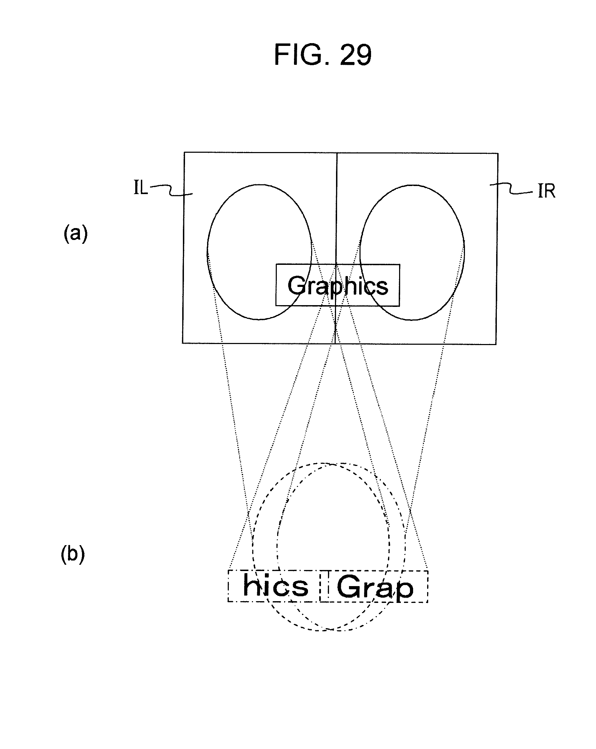

Note that Fig. 29(a) illustrates a state where a graphics image based on the graphics data extracted from the bit stream data is superimposed as is on the respective images IL and IR. In this case, a viewer observes the left half of the graphics information together with the left-eye image IL, and the right half of the graphics information together with the right-eye image IR, as illustrated in Fig. 29(b). Thus, the graphics information cannot be correctly recognized.

Fig. 28 illustrates the case of graphics information, and this is the same for other superimposition information (closed-caption information, subtitle information, text information, etc.). That is, in a case where disparity vectors are transmitted as numerical information, left-eye superimposition information and right-eye superimposition information that are to be superimposed on a left-eye image and a right-eye image, respectively, are generated on the basis of the disparity vectors and the superimposition information data data. In this case, the left-eye superimposition information and the right-eye superimposition information are the same superimposition information. However, the superimposed position in an image of the right-eye superimposition information is shifted in the horizontal direction by the horizontal direction component of the disparity vector with respect to the left-eye superimposition information, for example.

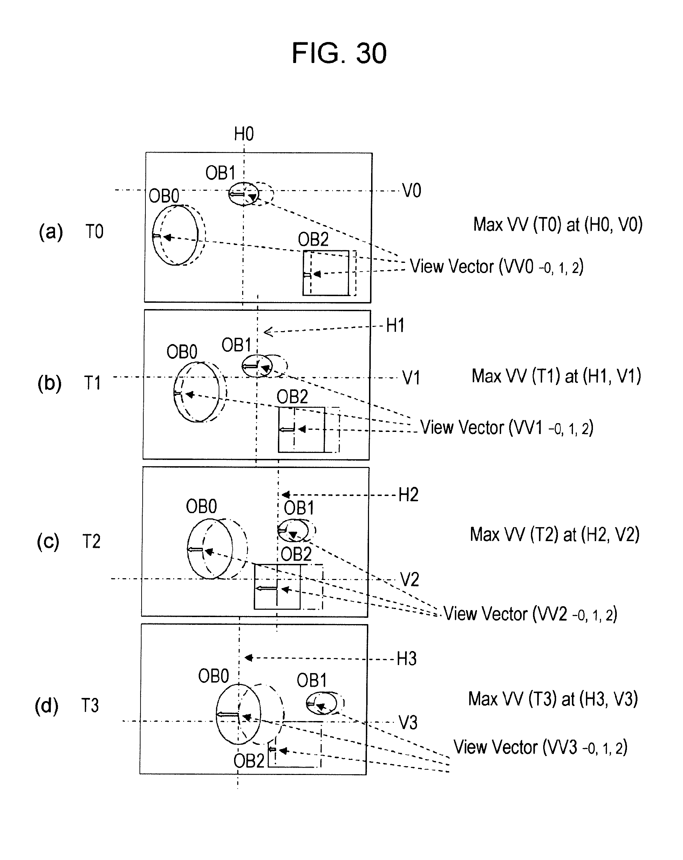

Here, the following disparity vector may be used as a disparity vector that gives disparity between the left-eye superimposition information and the right-eye superimposition information. For example, a disparity vector at the nearest position recognized in terms of perspective among disparity vectors detected at a plurality of positions in an image may be used as the disparity vector. Figs. 30(a), 30(b), 30(c), and 30(d) illustrate disparity vectors (View Vectors) at three object positions at times T0, T1, T2, and T3, respectively.

At time T0, the disparity vector VV0-1 at the position corresponding to an object 1 (H0, V0) is the maximum disparity vector MaxVV(T0). At time T1, the disparity vector VV1-1 at the position corresponding to the object 1 (H1, V1) is the maximum disparity vector MaxVV(T1). At time T2, the disparity vector W2-2 at the position corresponding to the object 2 (H2, V2) is the maximum disparity vector MaxVV(T2). At time T3, the disparity vector VV3-0 at the position corresponding to the object 1 (H3, V3) is the maximum disparity vector MaxVV(T3).

In this way, a disparity vector at the nearest position recognized in terms of perspective among disparity vectors detected at a plurality of positions in an image is used as the disparity vector, whereby superimposition information can be displayed in front of the nearest object in the image in terms of perspective.

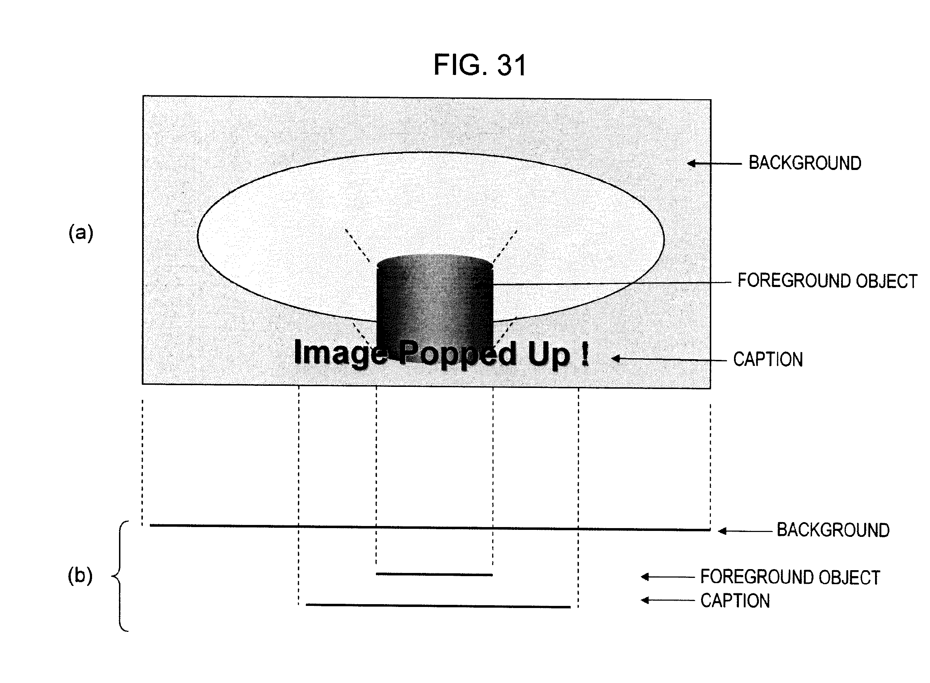

Fig. 31(a) illustrates an example display of a caption (e.g., closed-caption information or subtitle information) on an image. In this example display, a caption is superimposed on an image made up of a background and a foreground object. Fig. 31(b) illustrates the perspective of the background, foreground object, and caption, and illustrates that the caption is recognized as being the nearest.

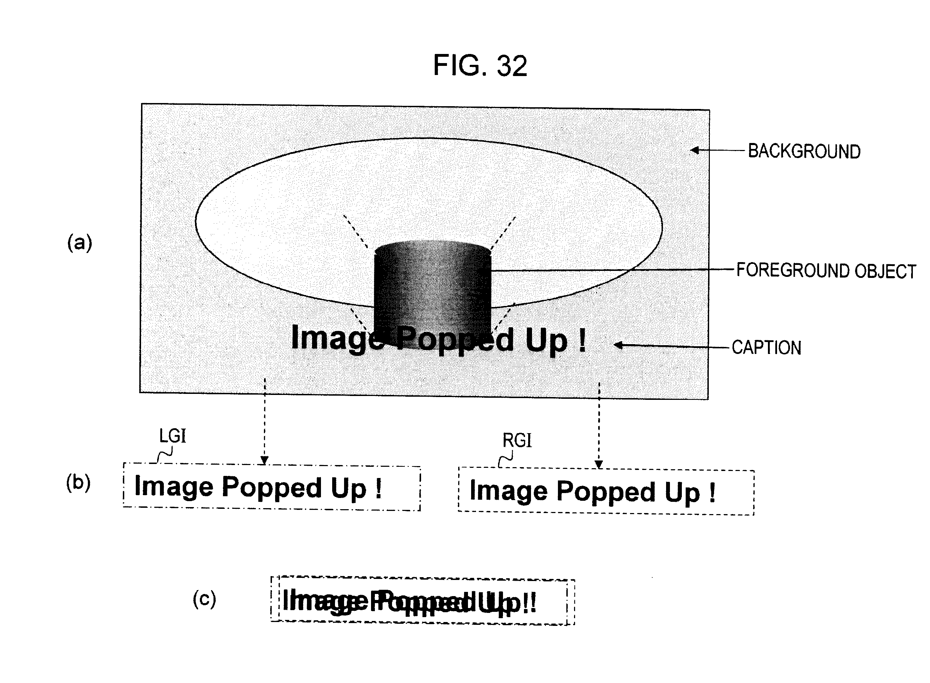

Fig. 32(a) illustrates an example display of a caption (e.g., closed-caption information or subtitle information) on an image, like Fig. 31(a). Fig. 32(b) illustrates left-eye subtitle information LGI and right-eye subtitle information RGI for displaying a caption. Fig. 32(c) illustrates that disparity is given to the individual pieces of subtitle information LGI and RGI so that the caption is recognized as being the nearest.

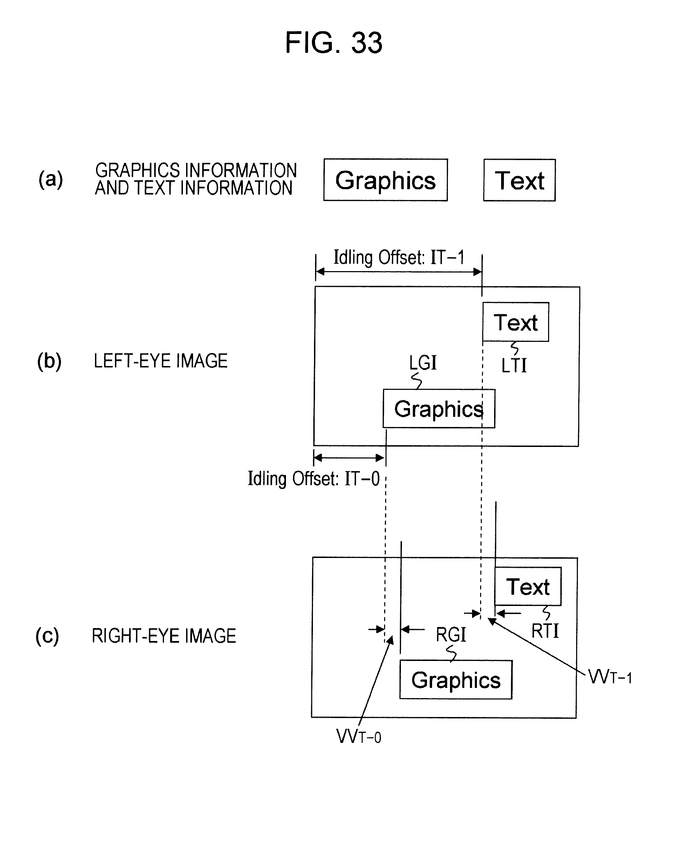

Also, the disparity vector corresponding to the superimposed position among disparity vectors detected at a plurality of positions in an image (including the disparity vectors of the respective areas in individual layers included in a disparity information set) may be used as the disparity vector. Fig. 33(a) illustrates graphic information based on graphic data extracted from bit stream data and text information based on text data extracted from the bit stream data.

Fig. 33(b) illustrates a state where left-eye graphics information LGI and left-eye text information LTI are superimposed on a left-eye image. In this case, the superimposed position of the left-eye graphics information LGI is restricted in the horizontal direction with an idling offset value (IT-0). Also, the superimposed position of the left-eye text information LTI is restricted in the horizontal direction with an idling offset value (IT-1).

Fig. 33(c) illustrates a state where right-eye graphics information RGI and right-eye text information RTI are superimposed on a right-eye image. In this case, the superimposed position of the right-eye graphics information RGI is restricted in the horizontal direction with an idling offset value (IT-0), and is furthermore shifted from the superimposed position of the left-eye graphics information LGI by a horizontal direction component VVT-0 of the disparity vector corresponding to this superimposed position. Also, the superimposed position of the right-eye text information RTI is restricted in the horizontal direction with an idling offset value (IT-1), and is furthermore shifted from the superimposed position of the left-eye text information LTI by a horizontal direction component VVT-1 of the disparity vector corresponding to this superimposed position.

In the above description, a description has been given of the case of superimposing graphics information based on graphics data extracted from bit stream data or text information based on text data extracted from the bit stream data on a left-eye image and a right-eye image. Other than this, the case of producing graphics data or text data in the set top box 200 and superimposing information based thereon on a left-eye image and a right-eye image is available.

In that case, too, disparity can be given between left-eye graphics information and right-eye graphics information or between left-eye text information and right-eye text information using disparity vectors at certain positions in an image extracted from the bit stream data. Accordingly, appropriate perspective in which perspective consistency is maintained among individual objects in an image can be given when graphics information and text information are displayed.

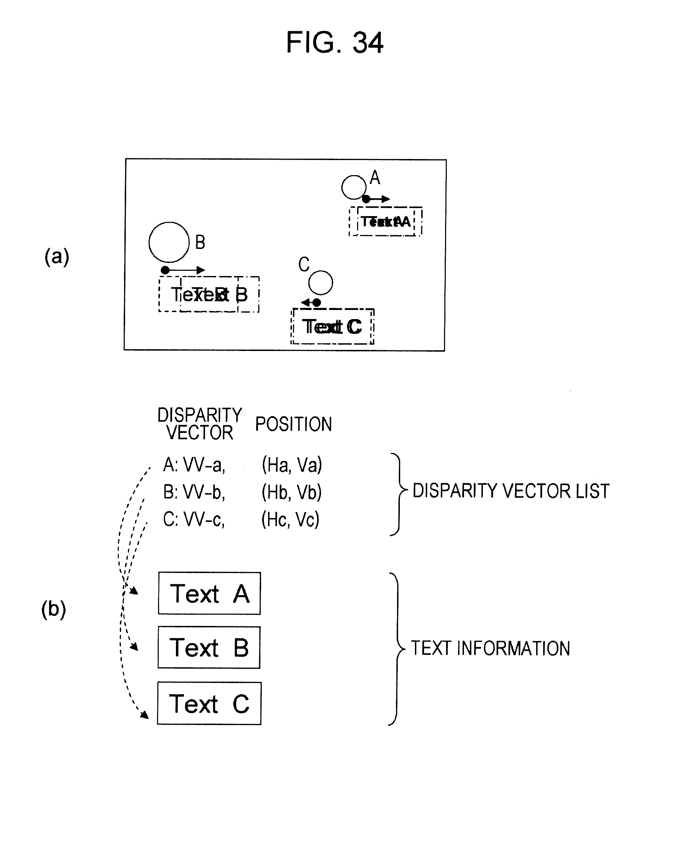

Fig. 34(a) illustrates that individual objects A, B, and C exist in an image and that text information showing annotations of the respective objects is superimposed at the vicinity of these respective objects. Fig. 34(b) illustrates a disparity vector list showing the correspondence between the positions of the respective objects A, B, and C and the disparity vectors at the positions, and also illustrates that the individual disparity vectors are used for giving disparity to the text information showing the annotations of the respective objects A, B, and C. For example, the text information "Text" is superimposed at the vicinity of the object A, and the disparity corresponding to a disparity vector VV-a at the position (Ha, Va) of the object A is given between the left-eye text information and the right-eye text information thereof. Note that this is the same for the text information superimposed at the vicinity of the objects B and C.

Note that Fig. 33 illustrates a case where the superimposition information includes graphics information and text information. Also, Fig. 34 illustrates a case where the superimposition information includes text information. This is the same for the case of the other superimposition information (such as closed-caption information and subtitle information), although a detailed description is omitted.

Next, a description will be given of a case where disparity vectors are transmitted while being reflected in advance in the data of superimposition information (such as closed-caption information, subtitle information, graphics information, and text information). In this case, the superimposition information data extracted from bit stream data includes the data of left-eye superimposition information and right-eye superimposition information to which disparity is given on the basis of a disparity vector.

Thus, the bit stream processing unit 201 simply combines the superimposition information data extracted from the bit stream data with the stereo image data (left-eye image data and right-eye image data) extracted from the bit stream data, thereby obtaining processed stereo image data. Note that, as for text data (including closed-caption data), a process of converting a character code into bitmap data or the like is necessary.

### [Example configuration of set top box]

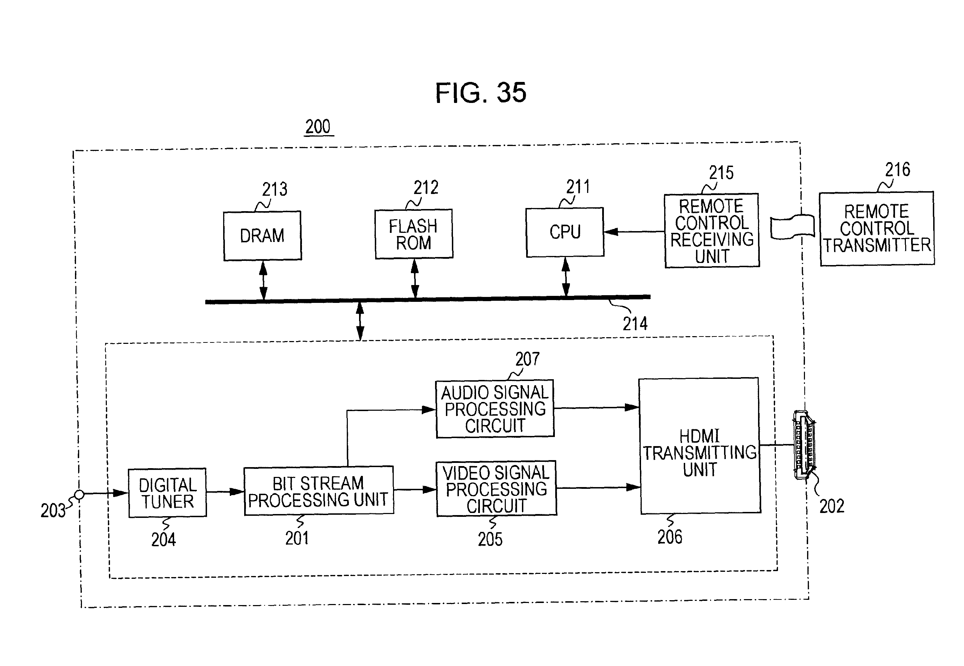

An example configuration of the set top box 200 will be described. Fig. 35 illustrates an example configuration of the set top box 200. The set top box 200 includes the bit stream processing unit 201, the HDMI terminal 202, an antenna terminal 203, a digital tuner 204, a video signal processing circuit 205, an HDMI transmitting unit 206, and an audio signal processing circuit 207. Also, the set top box 200 includes a CPU 211, a flash ROM 212, a DRAM 213, an internal bus 214, a remote control receiving unit 215, and a remote control transmitter 216.

The antenna terminal 203 is a terminal for inputting a television broadcast signal that is received by a receiving antenna (not illustrated). The digital tuner 204 processes the television broadcast signal input to the antenna terminal 203, and outputs certain bit stream data (transport stream) corresponding to a channel selected by a user.

The bit stream processing unit 201 extracts stereo image data (left-eye image data and right-eye image data), audio data, superimposition information data, disparity information (disparity vectors), etc., from the bit stream data, as described above. The superimposition information data may be subtitle data, graphics data, text data (including closed-caption data), or the like. The bit stream processing unit 201 combines the data of superimposition information (such as closed-caption information, subtitle information, graphics information, and text information) with the stereo image data, thereby obtaining stereo image data to be displayed, as described above. Also, the bit stream processing unit 201 outputs audio data. The detailed configuration of the bit stream processing unit 201 will be described below.

The video signal processing circuit 205 performs an image quality adjustment process or the like on the stereo image data output from the bit stream processing unit 201 as necessary, and supplies the processed stereo image data to the HDMI transmitting unit 206. The audio signal processing circuit 207 performs an audio quality adjustment process or the like on the audio data output from the bit stream processing circuit 201 as necessary, and supplies the processed audio data to the HDMI transmitting unit 206.

The HDMI transmitting unit 206 transmits the data of an image (video) and audio of the baseband from the HDMI terminal 202, through the communication compatible with HDMI. In this case, the data is transmitted using a TMDS channel of HDMI, and thus the data of the image and audio is packed and is output from the HDMI transmitting unit 206 to the HDMI terminal 202. The details of the HDMI transmitting unit 206 will be described below.

The CPU 211 controls the operation of the individual units of the set top box 200. The flash ROM 212 stores control software and stores data. The DRAM 213 forms a work area of the CPU 211. The CPU 211 expands software and data read from the flash ROM 212 on the DRAM 213 and starts the software, and controls the individual units of the set top box 200.

The remote control receiving unit 215 receives a remote control signal (remote control code) transmitted from the remote control transmitter 216, and supplies it to the CPU 211. The CPU 211 controls the individual units of the set top box 200 on the basis of this remote control code. The CPU 211, the flash ROM 212, and the DRAM 213 are connected to the internal bus 214.

The operation of the set top box 200 will be briefly described. A television broadcast signal input to the antenna terminal 203 is supplied to the digital tuner 204. The digital tuner 204 processes the television broadcast signal, and outputs certain bit stream data (transport stream) corresponding to a channel selected by a user.

The bit stream data output from the digital tuner 204 is supplied to the bit stream processing unit 201. In the bit stream processing unit 201, stereo image data (left-eye image data and right-eye image data), audio data, graphics data, text data, disparity vectors, etc. are extracted from the bit stream data. Also, in the bit stream processing unit 201, the data of superimposition information (such as closed-caption information, subtitle information, graphics information, and text information) is combined with the stereo image data, so that stereo image data to be displayed is generated.

The stereo image data to be displayed that is generated by the bit stream processing unit 201 is subjected to an image quality adjustment process or the like as necessary in the video signal processing circuit 205, and is then supplied to the HDMI transmitting unit 206. Also, the audio data obtained by the bit stream processing unit 201 is subjected to an audio quality adjustment process or the like as necessary in the audio signal processing circuit 207, and is then supplied to the HDMI transmitting unit 206. The stereo image data and the audio data supplied to the HDMI transmitting unit 206 are transmitted from the HDMI terminal 202 to the HDMI cable 400 using the TMDS channel of HDMI.

### [Example configuration of bit stream processing unit]

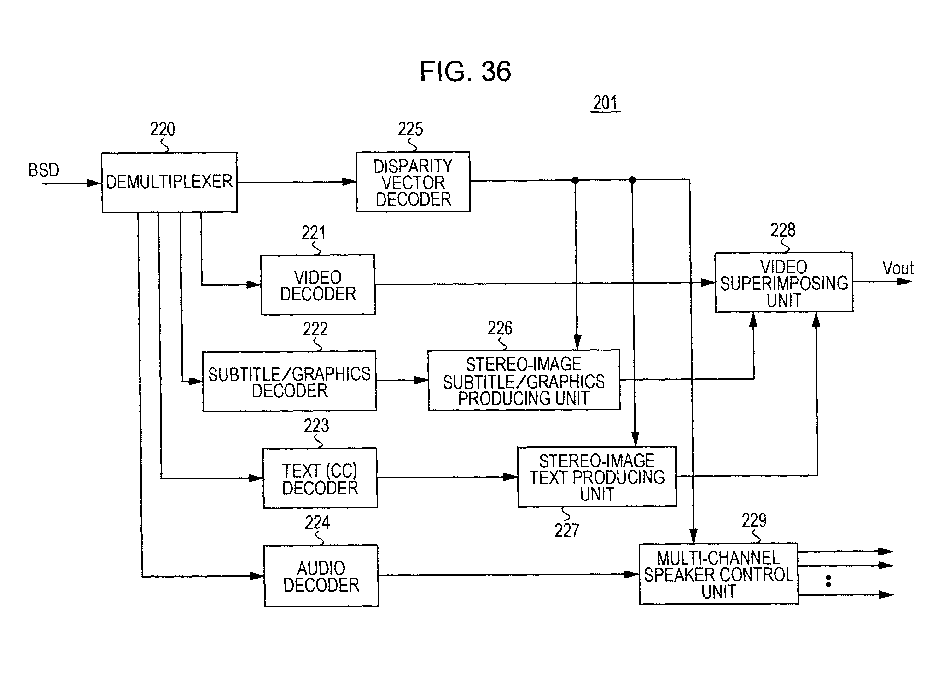

Fig. 36 illustrates an example configuration of the bit stream processing unit 201. The bit stream processing unit 201 has a configuration corresponding to the above-described transmission data generating units 110 and 110D illustrated in Fig. 2 and Fig. 22. The bit stream processing unit 201 includes a demultiplexer 220, a video decoder 221, a subtitle/graphics decoder 222, a text decoder 223, an audio decoder 224, and a disparity vector decoder 225. Also, the bit stream processing unit 201 includes a stereo-image subtitle/graphics producing unit 226, a stereo-image text producing unit 227, a video superimposing unit 228, and a multi-channel speaker control unit 229.

The demultiplexer 220 extracts packets of video, audio, disparity vector, subtitle or graphics, and text from the bit stream data BSD, and transmits them to the respective decoders.

The video decoder 221 performs an inverse process of the process performed by the above-described video encoder 113 of the transmission data generating unit 110. That is, the video decoder 221 reconstructs a video elementary stream from the video packets extracted by the demultiplexer 220, performs a decoding process, and obtains stereo image data including left-eye image data and right-eye image data. Examples of the method for transmitting the stereo image data are the above-described first transmission method ("Top & Bottom" method), second transmission method ("Side By Side" method), third transmission method ("Frame Sequential" method), and the like (see Figs. 4(a) to 4(c)).

The subtitle/graphics decoder 222 performs an inverse process of the process performed by the above-described subtitle/graphics encoder 119 of the transmission data generating unit 110. That is, the subtitle/graphics decoder 222 reconstructs a subtitle/graphics elementary stream from the subtitle/graphics packets extracted by the demultiplexer 220. Then, the subtitle/graphics decoder 222 further performs a decoding process to obtain subtitle data or graphics data.

The text decoder 223 performs an inverse process of the process performed by the above-described text encoder 121 of the transmission data generating unit 110. That is, the text decoder 223 reconstructs a text elementary stream from the text packets extracted by the demultiplexer 220, performs a decoding process, and obtains text data (including closed-caption data).

The audio decoder 224 performs an inverse process of the process performed by the above-described audio encoder 117 of the transmission data generating unit 110. That is, the audio decoder 224 reconstructs an audio elementary stream from the audio packets extracted by the demultiplexer 220, performs a decoding process, and obtains audio data.

The disparity vector decoder 225 performs an inverse process of the process performed by the above-described disparity vector encoder 115 of the transmission data generating unit 110. That is, the disparity vector decoder 225 reconstructs a disparity vector elementary stream from the disparity vector packets extracted by the demultiplexer 220, performs a decoding process, and obtains disparity vectors at certain positions in an image.

The stereo-image subtitle/graphics producing unit 226 generates pieces of subtitle information or graphics information for a left eye and a right eye that are to be superimposed on a left-eye image and a right-eye image, respectively. This generation process is performed on the basis of the subtitle data or graphics data obtained by the decoder 222 and the disparity vectors obtained by the decoder 225. In this case, the pieces of subtitle information or graphics information for the left eye and left eye are the same information. However, the superimposed position in an image of the right-eye subtitle information or graphics information is shifted in the horizontal direction by the horizontal direction component of the disparity vector with respect to the left-eye subtitle information or graphics information, for example. Then, the stereo-image subtitle/graphics producing unit 226 outputs the data (bitmap data) of the generated pieces of subtitle information or graphics information for a left eye and a left eye.

The stereo-image text producing unit 227 generates left-eye text information and right-eye text information that are to be superimposed on a left-eye image and a right-eye image, respectively, on the basis of the text data obtained by the decoder 223 and the disparity vectors obtained by the decoder 225. In this case, the left-eye text information and the right-eye text information are the same text information, but the superimposed position in an image of the right-eye text information is shifted in the horizontal direction by the horizontal direction component of the disparity vector with respect to the left-eye text information, for example. Then, the stereo-image text producing unit 227 outputs the data (bitmap data) of the generated left-eye text information and right-eye text information.

The video superimposing unit 228 superimposes the data produced by the producing units 226 and 227 on the stereo image data (left-eye image data and right-eye image data) obtained by the video decoder 221, thereby obtaining stereo image data to be displayed Vout. Note that the superimposition of the superimposition information data on the stereo image data (left-eye image data and right-eye image data) is started in accordance with a time stamp of a system layer.

The multi-channel speaker control unit 229 performs a process of generating audio data of a multi-channel speaker for realizing 5.1 ch surround or the like, for example, and a process of giving a certain sound field characteristic on the audio data obtained by the audio decoder 224. Also, the multi-channel speaker control unit 229 controls the output of the multi-channel speaker on the basis of a disparity vector obtained by the decoder 225.

As the disparity vector is larger, the stereo effect is higher. The output of the multi-channel speaker is controlled in accordance with the degree of stereo effect, whereby further provision of stereo experience can be realized.

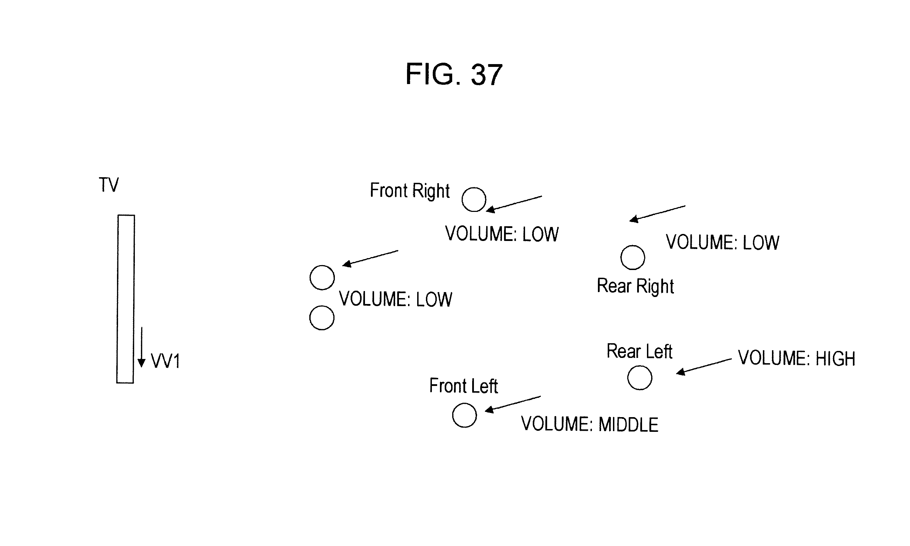

Fig. 37 illustrates an example of speaker output control in a case where a disparity vector VV1 is larger in a video object on the left side viewed in the direction of a television display. In this control example, the volume of the rear left speaker of the multi-channel speaker is high, the volume of the front left speaker is middle, and furthermore, the volume of the front right and rear right speakers is low. In this way, a disparity vector of video content (stereo image data) is applied to other medium data, such as audio data, on a receiver side, which enables a viewer to comprehensively experience a stereo effect.

The operation of the bit stream processing unit 201 illustrated in Fig. 36 will be briefly described. The bit stream data BSD output from the digital tuner 204 (see Fig. 35) is supplied to the demultiplexer 220. In the demultiplexer 220, TS packets of video, audio, disparity vector, subtitle or graphics, and text are extracted from the bit stream data BSD, and are supplied to the respective decoders.

In the video decoder 221, a video elementary stream is reconstructed from the video packets extracted by the demultiplexer 220, furthermore a decoding process is performed, and stereo image data including left-eye image data and right-eye image data is obtained. The stereo image data is supplied to the video superimposing unit 228. Also, in the disparity vector decoder 225, a disparity vector elementary stream is reconstructed from the disparity vector packets extracted by the demultiplexer 220, furthermore a decoding process is performed, and disparity vectors at certain positions in an image are obtained (see Fig. 8 and Fig. 27).

In the subtitle/graphics decoder 222, a subtitle/graphics elementary stream is reconstructed from the subtitle/graphics packets extracted by the demultiplexer 220. Furthermore, in the subtitle/graphics decoder 222, a decoding process is performed on the subtitle/graphics elementary stream, whereby subtitle data or graphics data is obtained. The subtitle data or graphics data is supplied to the stereo-image subtitle/graphics producing unit 226. The stereo-image subtitle/graphics producing unit 226 is also supplied with the disparity vectors obtained by the disparity vector decoder 225.

In the stereo-image subtitle/graphics producing unit 226, the data of pieces of subtitle information or graphics information for a left eye and a right eye that are to be superimposed on a left-eye image and a right-eye image, respectively, is generated. This generation process is performed on the basis of the subtitle data or graphics data obtained by the decoder 222 and the disparity vectors obtained by the decoder 225. In this case, the superimposed position in an image of the right-eye subtitle information or graphics information is shifted in the horizontal direction by the horizontal direction component of the disparity vector with respect to the left-eye subtitle information or left-eye graphics information, for example. The data (bitmap data) of the generated pieces of subtitle information or graphics information for a left eye and a right eye is output from the stereo-image subtitle/graphics producing unit 226.

Also, in the text decoder 223, a text elementary stream is reconstructed from the text TS packets extracted by the demultiplexer 220, furthermore a decoding process is performed, and text data is obtained. The text data is supplied to the stereo-image text producing unit 227. The stereo-image text producing unit 227 is also supplied with the disparity vectors obtained by the disparity vector decoder 225.

In the stereo-image text producing unit 227, left-eye text information and right-eye text information that are to be superimposed on a left-eye image and a right-eye image are generated, respectively, on the basis of the text data obtained by the decoder 223 and the disparity vectors obtained by the decoder 225. In this case, the left-eye text information and the right-eye text information are the same text information, but the superimposed position in an image of the right-eye text information is shifted in the horizontal direction by the horizontal direction component of the disparity vector with respect to the left-eye text information, for example. The data (bitmap data) of the generated left-eye text information and right-eye text information is output from the stereo-image text producing unit 227.

The data output from the subtitle/graphics producing unit 226 and the text producing unit 227, in addition to the stereo image data (left-eye image data and right-eye image data) from the above-described video decoder 221, is supplied to the video superimposing unit 228. In the video superimposing unit 228, the data produced by the subtitle/graphics producing unit 226 and the text producing unit 227 is superimposed on the stereo image data (left-eye image data and right-eye image data), so that stereo image data to be displayed Vout is obtained. The stereo image data to be displayed Vout is supplied as transmission image data to the HDMI transmitting unit 206 (see Fig. 35) via the video signal processing circuit 205.

Also, in the audio decoder 224, an audio elementary stream is reconstructed from the audio TS packets extracted by the demultiplexer 220, furthermore a decoding process is performed, and audio data is obtained. The audio data is supplied to the multi-channel speaker control unit 229. In the multi-channel speaker control unit 229, a process of generating audio data of a multi-channel speaker for realizing 5.1 ch surround or the like, for example, and a process of giving a certain sound field characteristic are performed on the audio data.

The multi-channel speaker control unit 229 is also supplied with the disparity vectors obtained by the disparity vector decoder 225. Also, in the multi-channel speaker control unit 229, the output of the multi-channel speaker is controlled on the basis of the disparity vectors. The multi-channel audio data obtained by the multi-channel speaker control unit 229 is supplied as transmission audio data to the HDMI transmitting unit 206 (see Fig. 35) via the audio signal processing circuit 207.

### [Giving disparity to superimposition information]

Now, a further description will be given of giving disparity to superimposition information in the stereo-image subtitle/graphics producing unit 226 and the stereo-image text producing unit 227 of the bit stream processing unit 201 illustrated in Fig. 36.

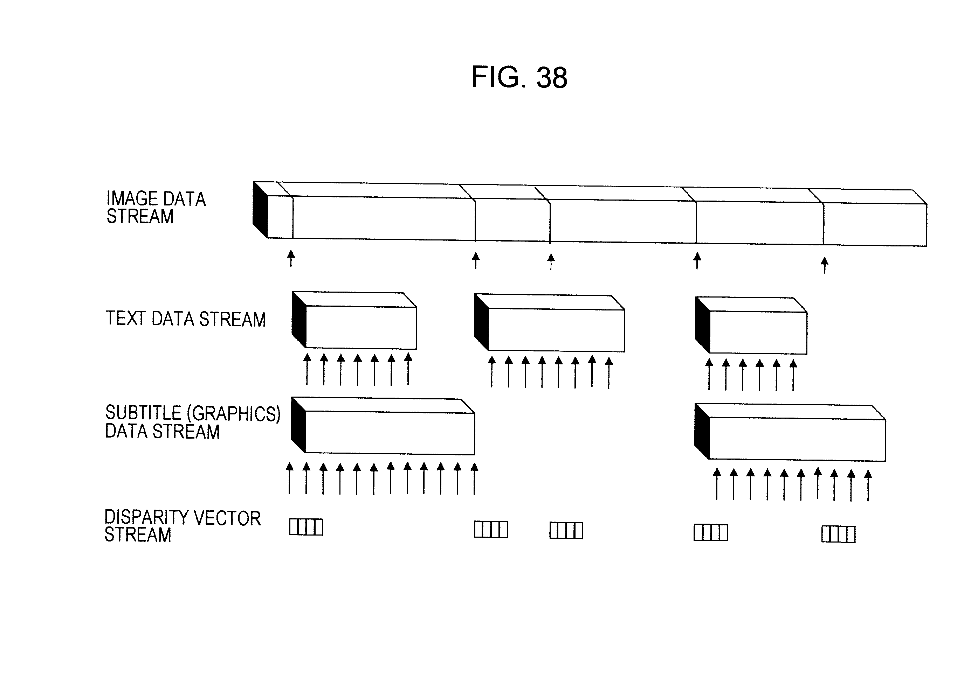

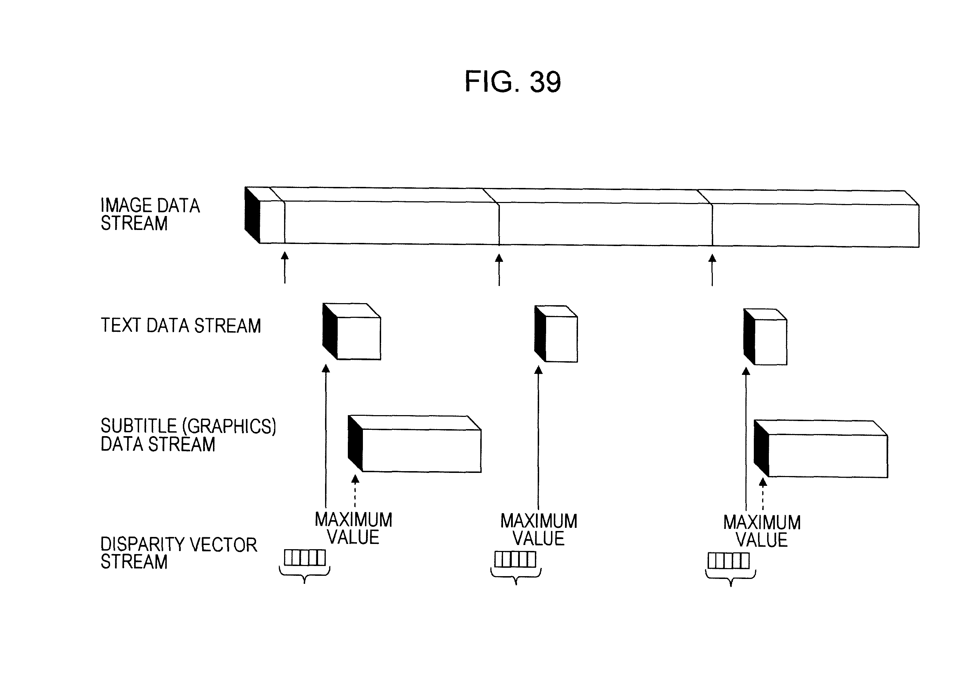

As illustrated in Fig. 38 and Fig. 39, for example, a disparity vector stream including disparity vectors (see Fig. 8 and Fig. 27) is transmitted from the broadcast station 100 (see Fig. 1), together with an image data stream, a subtitle or graphics data stream, and a text data stream. In this case, disparity vectors of respective certain units corresponding to respective certain periods are collectively transmitted in synchronization with the start timings of respective certain periods, such as GOPs (Groups Of Pictures) of encoded video, or I (Intra picture) pictures, or scenes. As the certain units, units of pictures (frames) or units of integral multiple of a picture is available, for example.

For example, in the stereo-image subtitle/graphics producing unit 226 and the stereo-image text producing unit 227, disparity based on a corresponding disparity vector (information information) is given to superimposition information for each certain unit during a superimposition period of the superimposition information. The arrows given to the portions of the subtitle (graphics) data stream and text data stream in Fig. 38 represent the timings at which disparity is given to the superimposition information for each certain unit. In such a configuration in which disparity is given to superimposition information, the disparity given to the superimposition information can be dynamically changed in conjunction with the change in content of an image.

Also, for example, in the stereo-image subtitle/graphics producing unit 226 and the stereo-image text producing unit 227, disparity based on a certain disparity vector (disparity information) selected from among disparity vectors in a superimposition period is given to superimposition information for each certain unit during the superimposition period of the superimposition information. The certain disparity vector is regarded as disparity information indicating the maximum disparity in the disparity information in the superimposition period, for example.

The arrows given to the portions of the subtitle (graphics) data stream and text data stream in Fig. 39 represent the timings at which disparity is given to superimposition information. In this case, disparity is given to superimposition information at the beginning of a superimposition period, and thereafter, the superimposition information to which the disparity is given is used as superimposition information that should be superimposed on a left-eye image and a right-eye image. In such a configuration in which disparity is given to superimposition information, the maximum disparity in the superimposition period of the superimposition information can be given to the superimposition information regardless of the change in content of an image.

### [Another example configuration of bit stream processing unit]

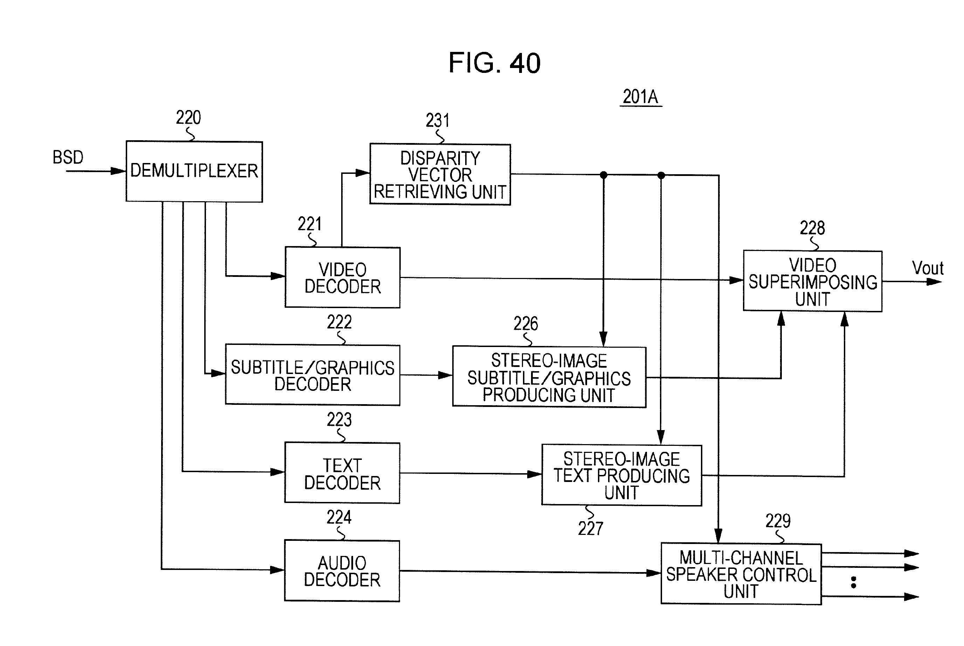

A bit stream processing unit 201A illustrated in Fig. 40 has a configuration corresponding to the above-described transmission data generating unit 110A illustrated in Fig. 13. In Fig. 40, the parts corresponding to those in Fig. 36 are denoted by the same reference numerals, and the detailed description thereof is omitted.

The bit stream processing unit 201A is provided with a disparity vector retrieving unit 231 instead of the disparity vector decoder 225 of the bit stream processing unit 201 illustrated in Fig. 36. The disparity vector retrieving unit 231 retrieves disparity vectors embedded in a user data area from the video stream that is obtained through the video decoder 221. Then, the disparity vector retrieving unit 231 supplies the retrieved disparity vectors to the stereo-image subtitle/graphics producing unit 226, the stereo-image text producing unit 227, and the multi-channel speaker control unit 229.

Other than that, the bit stream processing unit 201A illustrated in Fig. 40 is configured similarly to the bit stream processing unit 201 illustrated in Fig. 36, and operates similarly thereto, although a detailed description is omitted.

### [Giving disparity to superimposition information]

Now, a further description will be given of giving disparity to superimposition information in the stereo-image subtitle/graphics producing unit 226 and the stereo-image text producing unit 227 of the bit stream processing unit 201A illustrated in Fig. 40.

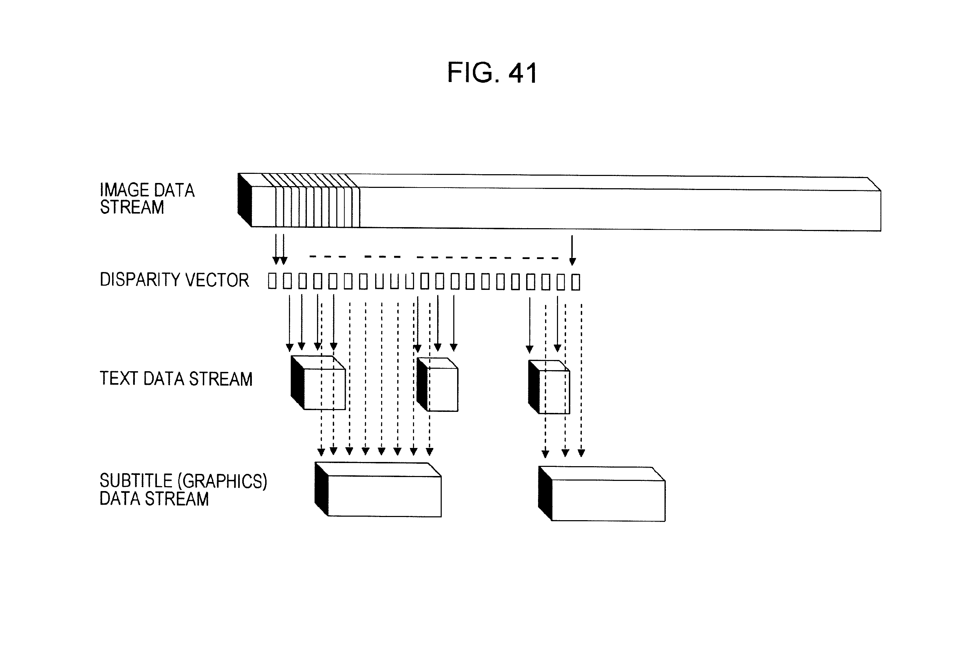

As illustrated in Fig. 41, for example, an image data stream, a subtitle or graphics data stream, and a text data stream are transmitted from the broadcast station 100 (see Fig. 1). Also, disparity vectors (see Fig. 8 and Fig. 27) are transmitted while being embedded in the image data stream. In this case, the disparity vectors corresponding to certain units are transmitted while being embedded in the image data stream for each certain unit of the image data, e.g., in units of pictures of encoded video.

In the stereo-image subtitle/graphics producing unit 226 and the stereo-image text producing unit 227, disparity based on a corresponding disparity vector (information information) is given to superimposition information for each certain unit during a superimposition period of the superimposition information. The arrows given to the portions of the subtitle (graphics) data stream and text data stream in Fig. 41 represent the timings at which disparity is given to superimposition information for each certain unit. In such a configuration in which disparity is given to superimposition information, the disparity given to the superimposition information can be dynamically changed in conjunction with the change in content of an image.

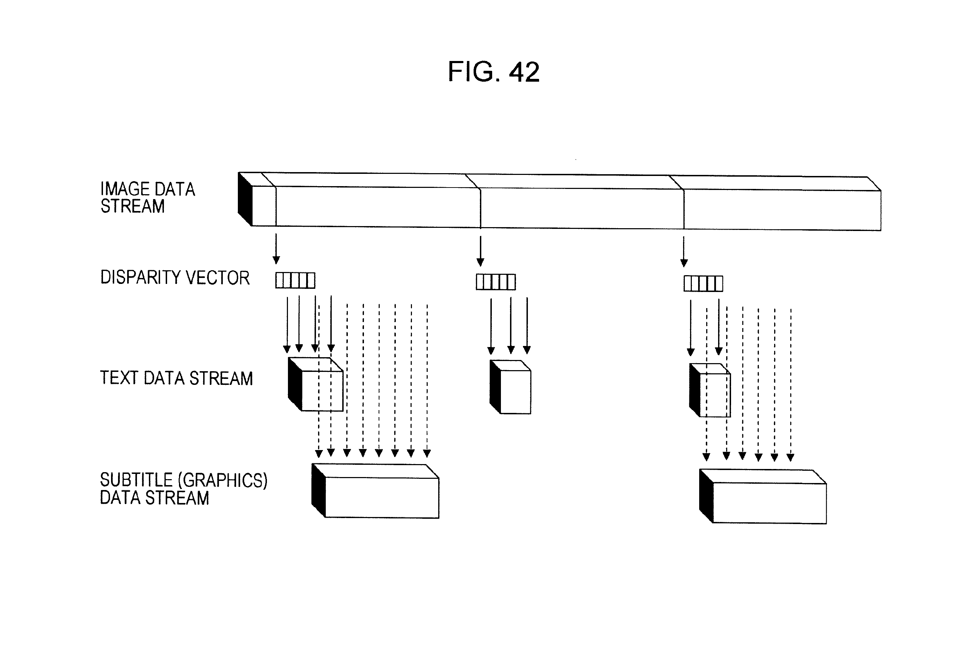

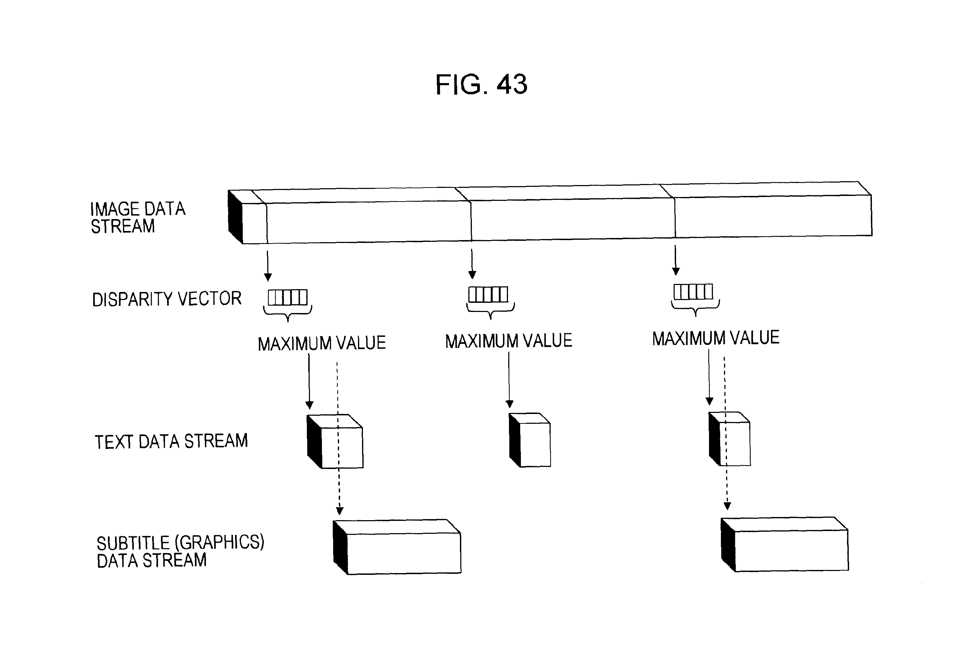

Also, as illustrated in Fig. 42 and Fig. 43, for example, an image data stream, a subtitle or graphics data stream, and a text data stream are transmitted from the broadcast station 100 (see Fig. 1). Also, disparity vectors (see Fig. 8 and Fig. 27) are transmitted while being embedded in the image data stream. In this case, disparity vectors of respective certain units corresponding to respective certain periods are collectively transmitted in synchronization with the start timings of the respective certain periods, such as GOPs of encoded video, or I pictures, or scenes or the like. As the certain units, units of pictures (frames) or units of integral multiple of a picture is available, for example.

For example, in the stereo-image subtitle/graphics producing unit 226 and the stereo-image text producing unit 227, disparity based on a corresponding disparity vector (information information) is given to superimposition information for each certain unit during a superimposition period of the superimposition information. The arrows given to the portions of the subtitle (graphics) data stream and text data stream in Fig. 42 represent the timings at which disparity is given to superimposition information for each certain unit. In such a configuration in which disparity is given to superimposition information, the disparity given to the superimposition information can be dynamically changed in conjunction with the change in content of an image.

Also, for example, in the stereo-image subtitle/graphics producing unit 226 and the stereo-image text producing unit 227, disparity based on a certain disparity vector (disparity information) selected from among disparity vectors in a superimposition period is given to superimposition information for each certain unit during the superimposition period of the superimposition information. The certain disparity vector, for example, the certain disparity information, is regarded as disparity information indicating the maximum disparity in the disparity information in the superimposition period.

The arrows given to the portions of the subtitle (graphics) data stream and text data stream in Fig. 43 represent the timings at which disparity is given to superimposition information. In this case, disparity is given to superimposition information at the beginning of a superimposition period, and thereafter, the superimposition information to which the disparity is given is used as superimposition information that should be superimposed on a left-eye image and a right-eye image. In such a configuration in which disparity is given to superimposition information, the maximum disparity in the superimposition period of the superimposition information can be given to the superimposition information regardless of the change in content of an image.

### [Another example configuration of bit stream processing unit]

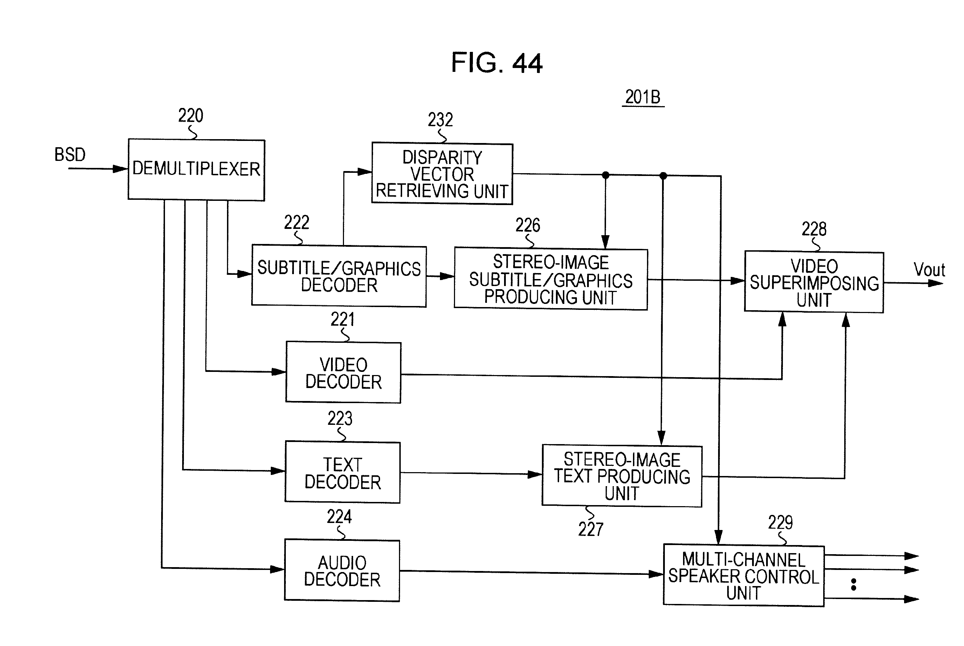

A bit stream processing unit 201B illustrated in Fig. 44 has a configuration corresponding to the above-described transmission data generating unit 110B illustrated in Fig. 15. In Fig. 44, the parts corresponding to those in Fig. 36 are denoted by the same reference numerals, and the detailed description thereof is omitted.

The bit stream processing unit 201B is provided with a disparity vector retrieving unit 232 instead of the disparity vector decoder 225 of the bit stream processing unit 201 illustrated in Fig. 36. The disparity vector retrieving unit 232 retrieves disparity vectors embedded in a subtitle or graphics stream that is obtained through the subtitle/graphics decoder 222. Then, the disparity vector retrieving unit 232 supplies the retrieved disparity vectors to the stereo-image subtitle/graphics producing unit 226, the stereo-image text producing unit 227, and the multi-channel speaker control unit 229.

Other than that, the bit stream processing unit 201B illustrated in Fig. 44 is configured similarly to the bit stream processing unit 201 illustrated in Fig. 36, and operates similarly thereto, although a detailed description is omitted. Note that giving disparity to superimposition information in the bit stream processing unit 201B in Fig. 44 is similar to the giving disparity to superimposition information in the above-described bit stream processing unit 201A in Fig. 40 (see Fig. 41 to Fig. 43).

### [Another example configuration of bit stream processing unit]

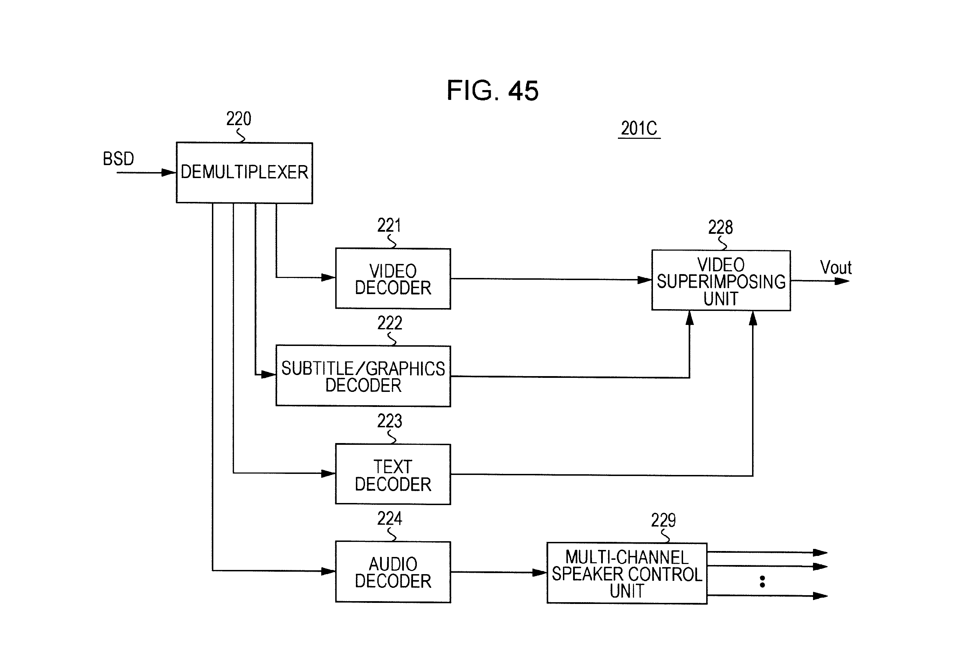

A bit stream processing unit 201C illustrated in Fig. 45 has a configuration corresponding to the above-described transmission data generating unit 110C illustrated in Fig. 21. In Fig. 45, the parts corresponding to those in Fig. 36 are denoted by the same reference numerals, and the detailed description thereof is omitted.

The bit stream processing unit 201C is obtained by removing the disparity vector decoder 225, the stereo-image subtitle/graphics producing unit 226, and the stereo-image text producing unit 227 from the bit stream processing unit 201 illustrated in Fig. 36. In this case, disparity vectors are reflected in advance in the data of subtitle information, graphics information, and text information.

As described above, the subtitle data or graphics data that is transmitted includes the data of left-eye subtitle information or graphics information that is to be superimposed on a left-eye image and the data of right-eye subtitle information or graphics information that is to be superimposed on a right-eye image. Likewise, the text data that is transmitted includes the data of left-eye text information that is to be superimposed on a left-eye image and the data of right-eye text information that is to be superimposed on a right-eye image, as described above. Thus, the disparity vector decoder 225, the stereo-image subtitle/graphics producing unit 226, and the stereo-image text producing unit 227 are not necessary.

Note that, since the text data obtained by the text decoder 223 is code data (character code), a process of converting this into bitmap data is necessary. This process is performed in the last stage of the text decoder 223 or in the input stage of the video superimposing unit 228, for example.

### [Description of television receiver]

Referring back to Fig. 1, the television receiver 300 receives stereo image data that is transmitted from the set top box 200 via the HDMI cable 400. The television receiver 300 includes a 3D signal processing unit 301. The 3D signal processing unit 301 performs a process (decoding process) corresponding to a transmission method on the stereo image data, thereby generating left-eye image data and right-eye image data. That is, the 3D signal processing unit 301 performs an inverse process of the process performed by the video framing unit 112 in the transmission data generating units 110, 110A, 110B, 110C, and 110D illustrated in Fig. 2, Fig. 13, Fig. 15, Fig. 21, and Fig. 22. Then, the 3D signal processing unit 301 obtains left-eye image data and right-eye image data forming the stereo image data.

### [Example configuration of television receiver]

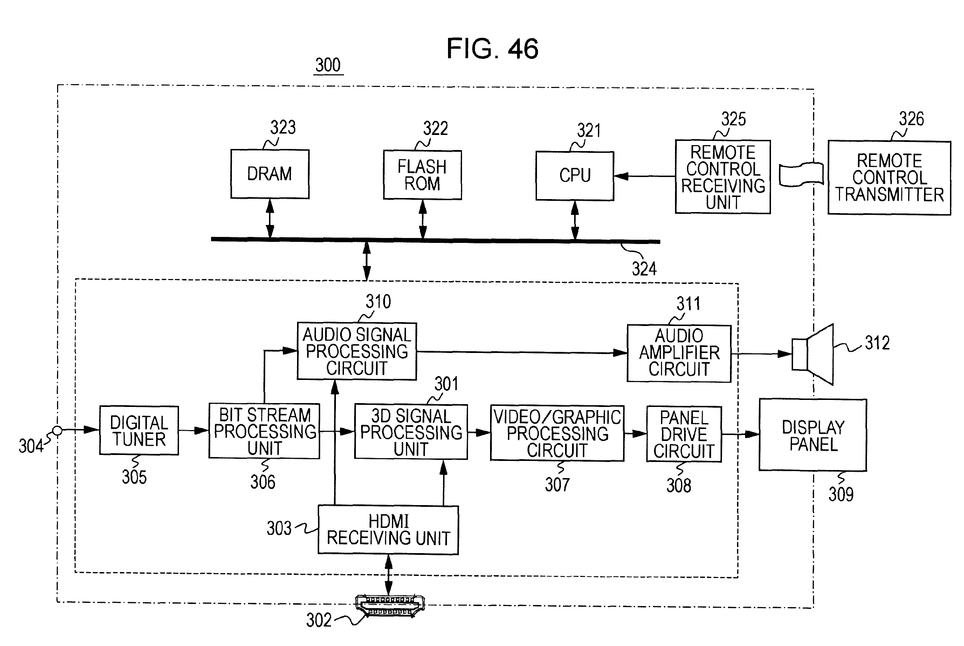

An example configuration of the television receiver 300 will be described. Fig. 46 illustrates an example configuration of the television receiver 300. The television receiver 300 includes a 3D signal processing unit 301, an HDMI terminal 302, an HDMI receiving unit 303, an antenna terminal 304, a digital tuner 305, and a bit stream processing unit 306.

Also, the television receiver 300 includes a video/graphic processing circuit 307, a panel drive circuit 308, a display panel 309, an audio signal processing circuit 310, an audio amplifier circuit 311, and a speaker 312. Also, the television receiver 300 includes a CPU 321, a flash ROM 322, a DRAM 323, an internal bus 324, a remote control receiving unit 325, and a remote control transmitter 326.

The antenna terminal 304 is a terminal for inputting a television broadcast signal that is received by a receiving antenna (not illustrated). The digital tuner 305 processes the television broadcast signal input to the antenna terminal 304, and outputs certain bit stream data (transport stream) corresponding to a channel selected by a user.

The bit stream processing unit 306 is configured similarly to the bit stream processing unit 201 of the set top box 200 illustrated in Fig. 35. The bit stream processing unit 306 extracts stereo image data (left-eye image data and right-eye image data), audio data, superimposition information data, disparity vectors (disparity information), etc., from the bit stream data. The superimposition information data may be subtitle data, graphics data, text data (including closed-caption data), or the like. The bit stream processing unit 306 combines superimposition information data with the stereo image data, thereby obtaining stereo image data to be displayed. Also, the bit stream processing unit 306 outputs audio data.

The HDMI receiving unit 303 receives uncompressed image data and audio data that are supplied to the HDMI terminal 302 via the HDMI cable 400 through the communication compatible with HDMI. The version of the HDMI receiving unit 303 is HDMI 1.4, for example, and is in a state of being able to handle stereo image data. The details of the HDMI receiving unit 303 will be described below.

The 3D signal processing unit 301 performs a decoding process on the stereo image data that is received by the HDMI receiving unit 303 or that is obtained by the bit stream processing unit 306, thereby generating left-eye image data and right-eye image data. In this case, the 3D signal processing unit 301 performs a decoding process corresponding to the transmission method (see Fig. 4) on the stereo image data obtained by the bit stream processing unit 306. Also, the 3D signal processing unit 301 performs a decoding process corresponding to a TMDS transmission data structure (described below) on the stereo image data received by the HDMI receiving unit 303.

The video/graphic processing circuit 307 generates image data for displaying a stereo image on the basis of the left-eye image data and right-eye image data generated by the 3D signal processing unit 301. Also, the video/graphic processing circuit 307 performs an image quality adjustment process on the image data as necessary. Also, the video/graphic processing circuit 307 combines the data of superimposition information, such as a menu and a program table, with the image data as necessary. The panel drive circuit 308 drives the display panel 309 on the basis of the image data output from the video/graphic processing circuit 307. The display panel 309 is constituted by an LCD (Liquid Crystal Display), a PDP (Plasma Display Panel), or the like.

The audio signal processing circuit 310 performs a necessary process, such as D/A conversion, on the audio data that is received by the HDMI receiving unit 303 or that is obtained by the bit stream processing unit 306. The audio amplifier circuit 311 amplifies an audio signal output from the audio signal processing circuit 310 and supplies it to the speaker 312.

The CPU 321 controls the operation of the individual units of the television receiver 300. The flash ROM 322 stores control software and stores data. The DRAM 323 forms a work area of the CPU 321. The CPU 321 expands software and data read from the flash ROM 322 on the DRAM 323 and starts the software, and controls the individual units of the television receiver 300.

The remote control receiving unit 325 receives a remote control signal (remote control code) transmitted from the remote control transmitter 326, and supplies it to the CPU 321. The CPU 321 controls the individual units of the television receiver 300 on the basis of this remote control code. The CPU 321, the flash ROM 322, and the DRAM 323 are connected to the internal bus 324.

The operation of the television receiver 300 illustrated in Fig. 46 will be briefly described. The HDMI receiving unit 303 receives stereo image data and audio data that are transmitted from the set top box 200 connected to the HDMI terminal 302 via the HDMI cable 400. The stereo image data received by the HDMI receiving unit 303 is supplied to the 3D signal processing unit 301. Also, the audio data received by the HDMI receiving unit 303 is supplied to the audio signal processing circuit 310.

A television broadcast signal input to the antenna terminal 304 is supplied to the digital tuner 305. The digital tuner 305 processes the television broadcast signal, and outputs certain bit stream data (transport stream) corresponding to a channel selected by a user.

The bit stream data output from the digital tuner 305 is supplied to the bit stream processing unit 306. In the bit stream processing unit 306, stereo image data (left-eye image data and right-eye image data), audio data, superimposition information data, disparity vectors (disparity information), etc., are extracted from the bit stream data. Also, in the bit stream processing unit 306, the data of superimposition information (closed-caption information, subtitle information, graphics information, and text information) is combined with the stereo image data, so that stereo image data to be displayed is generated.

The stereo image data to be displayed that is generated by the bit stream processing unit 306 is supplied to the 3D signal processing unit 301. Also, the audio data obtained by the bit stream processing unit 306 is supplied to the audio signal processing circuit 310.

In the 3D signal processing unit 301, a decoding process is performed on the stereo image data that is received by the HDMI receiving unit 303 or that is obtained by the bit stream processing unit 306, so that left-eye image data and right-eye image data are generated. The left-eye image data and the right-eye image data are supplied to the video/graphic processing circuit 307. In the video/graphic processing circuit 307, image data for displaying a stereo image is generated on the basis of the left-eye image data and the right-eye image data, and an image quality adjustment process and a process of combining superimposition information data are performed as necessary.

The image data obtained by the video/graphic processing circuit 307 is supplied to the panel drive circuit 308. Accordingly, a stereo image is displayed on the display panel 309. For example, left-eye images based on the left-eye image data and right-eye images based on the right-eye image data are alternately displayed on the display panel 309 in a time division manner. A viewer can view only left-eye images with a left eye and can view only right-eye images with a right eye by wearing shutter glasses in which a left-eye shutter and a right-eye shutter alternately open in synchronization with display on the display panel 309, thereby being able to perceive a stereo image.

Also, in the audio signal processing circuit 310, a necessary process, such as D/A conversion, is performed on the audio data that is received by the HDMI receiving unit 303 or that is obtained by the bit stream processing unit 306. The audio data is amplified by the audio amplifier circuit 311 and is then supplied to the speaker 312. Accordingly, the audio corresponding to an image displayed on the display panel 309 is output from the speaker 312.

### [Example configuration of HDMI transmitting unit and HDMI receiving unit]

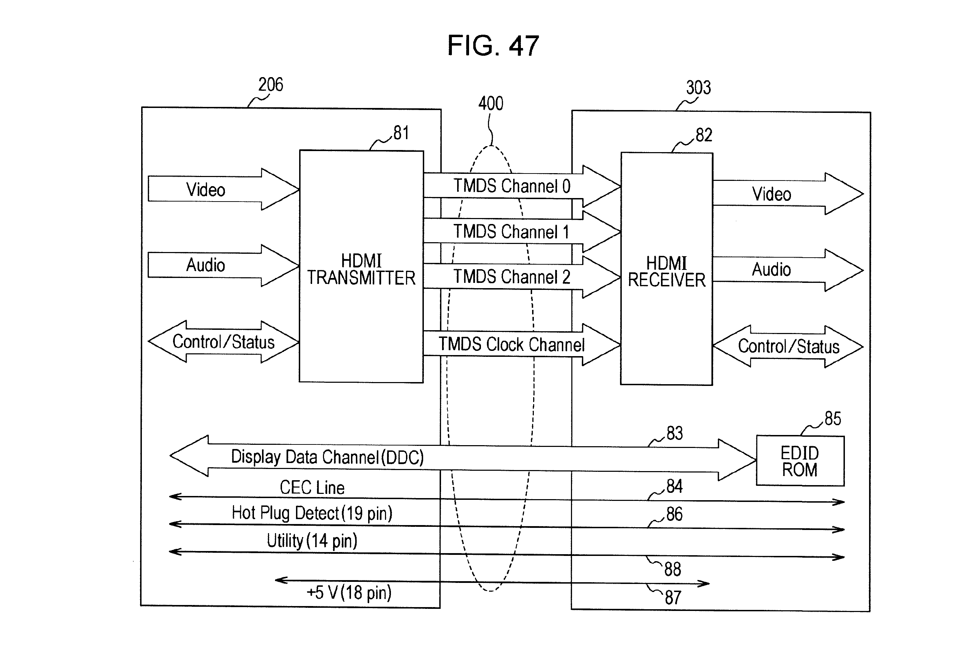

Fig. 47 illustrates an example configuration of the HDMI transmitting unit (HDMI source) 206 of the set top box 200 and the HDMI receiving unit (HDMI sink) 303 of the television receiver 300 in the stereo image display system 10 in Fig. 1.

The HDMI transmitting unit 206 transmits differential signals corresponding to the pixel data of an uncompressed image for one screen to the HDMI receiving unit 303 in a unidirectional manner using a plurality of channels in an effective image period (hereinafter also referred to as active video period as necessary). Here, the effective image period is obtained by removing a horizontal blanking period and a vertical blanking period from the period from one vertical synchronization signal to the next vertical synchronization signal. Also, the HDMI transmitting unit 206 transmits differential signals corresponding to at least audio data accompanying an image and control data, other auxiliary data, and the like to the HDMI receiving unit 303 in a unidirectional manner using a plurality of channels in the horizontal blanking period or the vertical blanking period.

The transmission channels in the HDMI system made up of the HDMI transmitting unit 206 and the HDMI receiving unit 303 include the following transmission channels. That is, there are three TMDS channels #0 to #2 serving as transmission channels for serially transmitting pixel data and audio data from the HDMI transmitting unit 206 to the HDMI receiving unit 303 in a unidirectional manner in synchronization with a pixel clock. Also, there is a TMDS clock channel serving as a transmission channel for transmitting a pixel clock.

The HDMI transmitting unit 206 includes an HDMI transmitter 81. The transmitter 81 converts pixel data of an uncompressed image into corresponding differential signals and serially transmits them in a unidirectional manner to the HDMI receiving unit 303 connected via the HDMI cable 400 using a plurality of channels: three TMDS channels #0, #1, and #2, for example.

Also, the transmitter 81 converts audio data accompanying an uncompressed image, necessary control data, other auxiliary data, and the like into corresponding differential signals, and serially transmits them in a unidirectional manner to the HDMI receiving unit 303 using the three TMDS channels #0, #1, and #2.

Furthermore, the transmitter 81 transmits a pixel clock synchronized with the pixel data, which is transmitted using the three TMDS channels #0, #1, and #2, to the HDMI receiving unit 303 connected via the HDMI cable 400 using the TMDS clock channel. Here, in one TMDS channel #i (i = 0, 1, or 2), 10-bit pixel data is transmitted in one clock of the pixel clock.

The HDMI receiving unit 303 receives the differential signals corresponding to the pixel data, transmitted in a unidirectional manner from the HDMI transmitting unit 206 using the plurality of channels, in the active video period. Also, the HDMI receiving unit 303 receives the differential signals corresponding to audio data and control data, transmitted in a unidirectional manner from the HDMI transmitting unit 206 using the plurality of channels, in the horizontal blanking period or the vertical blanking period.

That is, the HDMI receiving unit 303 includes an HDMI receiver 82. The HDMI receiver 82 receives a differential signal corresponding to pixel data and differential signals corresponding to audio data and control data transmitted in a unidirectional manner from the HDMI transmitting unit 206 using the TMDS channels #0, #1, and #2. In this case, the HDMI receiver 82 receives the differential signals in synchronization with the pixel clock transmitted from the HDMI transmitting unit 206 using the TMDS clock channel.

The transmission channels in the HDMI system include transmission channels called a DDC (Display Data Channel) 83 and a CEC line 84, in addition to the above-described TMDS channels #0 to #2 and the TMDS clock channel. The DDC 83 is made up of two signal lines that are included in the HDMI cable 400 and that are not illustrated. The DDC 83 is used by the HDMI transmitting unit 206 to read E-EDID (Enhanced Extended Display Identification Data) from the HDMI receiving unit 303.

That is, the HDMI receiving unit 303 includes, in addition to the HDMI receiver 81, an EDID ROM (Read Only Memory) 85 that stores E-EDID, which is performance information about its performance (configuration/capability). The HDMI transmitting unit 206 reads the E-EDID from the HDMI receiving unit 303 connected via the HDMI cable 400 using the DDC 83 in response to a request supplied from the CPU 211 (see Fig. 35), for example.

The HDMI transmitting unit 206 transmits the read E-EDID to the CPU 211. The CPU 211 stores the E-EDID in the flash ROM 212 or the DRAM 213. The CPU 211 can recognize the setting of the performance of the HDMI receiving unit 303 on the basis of the E-EDID. For example, the CPU 211 recognizes whether the television receiver 300 including the HDMI receiving unit 303 is capable of handling stereo image data or not, and if so, recognizes whether the television receiver 300 is compatible with which TMDS transmission data structure.

The CEC line 84 is made up of a single signal line (not illustrated) included in the HDMI cable 400 and is used for performing bidirectional communication of control data between the HDMI transmitting unit 206 and the HDMI receiving unit 303. The CEC line 84 constitutes a control data line.

Also, the HDMI cable 400 includes a line (HPD line) 86 connected to a pin called an HPD (Hot Plug Detect). A source apparatus can detect connection of a sink apparatus using the line 86. Note that the HPD line 86 is also used as an HEAC-line forming a bidirectional communication path. Also, the HDMI cable 400 includes a line (power supply line) 87 used for supplying power from a source apparatus to a sink apparatus. Furthermore, the HDMI cable 400 includes a utility line 88. The utility line 88 is also used as an HEAC+line forming a bidirectional communication path.

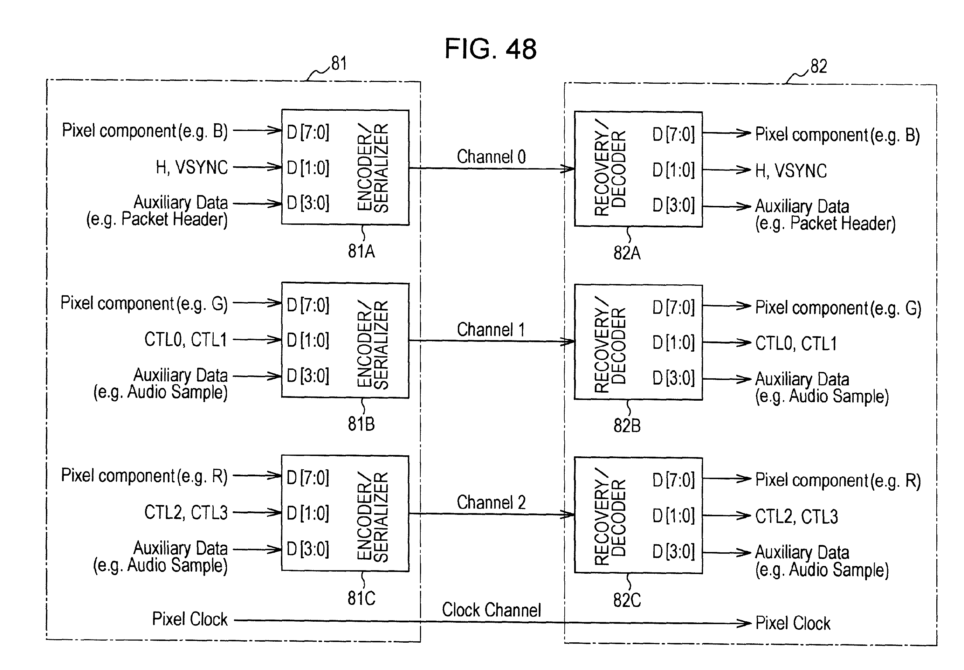

Fig. 48 illustrates an example configuration of the HDMI transmitter 81 and the HDMI receiver 82 in Fig. 47. The HDMI transmitter 81 includes three encoders/serializers 81A, 81B, and 81C corresponding to the three TMDS channels #0, #1, and #2, respectively. Also, each of the encoders/serializers 81A, 81B, and 81C encodes image data, auxiliary data, and control data supplied thereto, converts the data from parallel data into serial data, and transmits the data as differential signals. Here, in a case where the image data has three components of R, G, and B, the B component is supplied to the encoder/serializer 81A, the G component is supplied to the encoder/serializer 81B, and the R component is supplied to the encoder/serializer 81C.

Also, the auxiliary data includes, for example, audio data and a control packet. The control packet is supplied to the encoder/serializer 81A, and the audio data is supplied to the encoders/serializers 81B and 81C, for example. Furthermore, the control data includes a 1-bit vertical synchronization signal (VSYNC), a 1-bit horizontal synchronization signal (HSYNC), and 1-bit control bits CTL0, CTL1, CTL2, and CTL3. The vertical synchronization signal and the horizontal synchronization signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits the B component of the image data, vertical synchronization signal and horizontal synchronization signal, and auxiliary data supplied thereto in a time-division manner. That is, the encoder/serializer 81A regards the B component of the image data supplied thereto as parallel data of 8 bit units, which is a fixed number of bits. Furthermore, the encoder/serializer 81A encodes the parallel data, converts it into serial data, and transmits it using the TMDS channel #0.

Also, the encoder/serializer 81A encodes 2-bit parallel data of the vertical synchronization signal and horizontal synchronization signal supplied thereto, converts it into serial data, and transmits it using the TMDS channel #0. Furthermore, the encoder/serializer 81A regards the auxiliary data supplied thereto as parallel data of 4 bit units. Then, the encoder/serializer 81A encodes the parallel data, converts it into serial data, and transmits it using the TMDS channel #0.

The encoder/serializer 81B transmits the G component of the image data, control bits CTL0 and CTL1, and auxiliary data supplied thereto in a time-division manner. That is, the encoder/serializer 81B regards the G component of the image data supplied thereto as parallel data of 8 bit units, which is a fixed number of bits. Furthermore, the encoder/serializer 81B encodes the parallel data, converts it into serial data, and transmits it using the TMDS channel #1.

Also, the encoder/serializer 81B encodes 2-bit parallel data of the control bits CTL0 and CTL1 supplied thereto, converts it into serial data, and transmits it using the TMDS channel #1. Furthermore, the encoder/serializer 81B regards the auxiliary data supplied thereto as parallel data of 4 bit units. Then, the encoder/serializer 81B encodes the parallel data, converts it into serial data, and transmits it using the TMDS channel #1.

The encoder/serializer 81C transmits the R component of the image data, control bits CTL2 and CTL3, and auxiliary data supplied thereto in a time-division manner. That is, the encoder/serializer 81C regards the R component of the image data supplied thereto as parallel data of 8 bit units, which is a fixed number of bits. Furthermore, the encoder/serializer 81C encodes the parallel data, converts it into serial data, and transmits it using the TMDS channel #2.

Also, the encoder/serializer 81C encodes 2-bit parallel data of the control bits CTL2 and CTL3 supplied thereto, converts it into serial data, and transmits it using the TMDS channel #2. Furthermore, the encoder/serializer 81C regards the auxiliary data supplied thereto as parallel data of 4 bit units. Then, the encoder/serializer 81C encodes the parallel data, converts it into serial data, and transmits it using the TMDS channel #2.

The HDMI receiver 82 includes three recovery/decoders 82A, 82B, and 82C corresponding to the three TMDS channels #0, #1, and #2, respectively. The recovery/decoders 82A, 82B, and 82C receive image data, auxiliary data, and control data transmitted as differential signals using the TMDS channels #0, #1, and #2, respectively. Furthermore, each of the recovery/decoders 82A, 82B, and 82C converts the image data, the auxiliary data, and the control data from serial data into parallel data, decodes it, and outputs it.

That is, the recovery/decoder 82A receives the B component of image data, vertical synchronization signal and horizontal synchronization signal, and auxiliary data transmitted thereto as differential signals using the TMDS channel #0. Then, the recovery/decoder 82A converts the B component of the image data, vertical synchronization signal and horizontal synchronization signal, and auxiliary data from serial data into parallel data, decodes it, and outputs it.

The recovery/decoder 82B receives the G component of image data, control bits CTL0 and CTL1, and auxiliary data transmitted thereto as differential signals using the TMDS channel #1. Then, the recovery/decoder 82B converts the G component of the image data, the control bits CTL0 and CTL1, and the auxiliary data from serial data into parallel data, decodes it, and outputs it.

The recovery/decoder 82C receives the R component of image data, control bits CTL2 and CTL3, and auxiliary data transmitted thereto as differential signals using the TMDS channel #2. Then, the recovery/decoder 82C converts the R component of the image data, the control bits CTL2 and CTL3, and the auxiliary data from serial data into parallel data, decodes it, and outputs it.

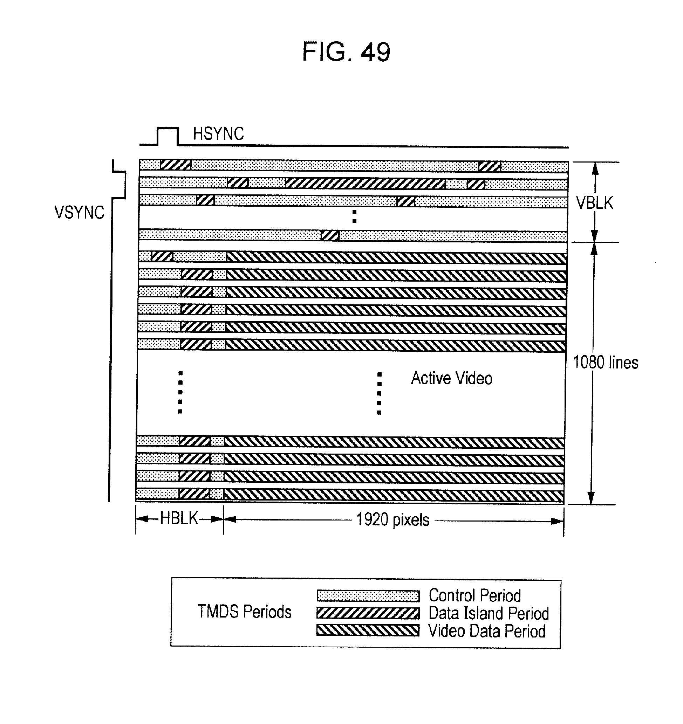

Fig. 49 illustrates an example structure of TMDS transmission data. Fig. 49 illustrates the periods of respective pieces of transmission data in a case where image data of horizontal 1920 pixels × vertical 1080 lines is transmitted using the TMDS channels #0, #1, and #2.

In a video field where transmission data is transmitted using the three TMDS channels #0, #1, and #2 of HDMI, three types of periods exist in accordance with the type of transmission data. The three types of periods include a video data period, a data island period, and a control period.

Here, the video field period is a period from an active edge of a vertical synchronization signal to an active edge of the next vertical synchronization signal. This video field period includes a horizontal blanking period, a vertical blanking period, and an active video period. This active video period is a period obtained by removing the horizontal blanking period and the vertical blanking period from the video field period.

The video data period is assigned to the active video period. In this video data period, data of active pixels corresponding to 1920 pixels × 1080 lines forming uncompressed image data for one screen is transmitted.

The data island period and the control period are assigned to the horizontal blanking period and the vertical blanking period. In the data island period and the control period, auxiliary data is transmitted. That is, the data island period is assigned to part of the horizontal blanking period and the vertical blanking period. In this data island period, data unrelated to control in the auxiliary data, for example, packets of audio data or the like, are transmitted.

The control period is assigned to the other part of the horizontal blanking period and the vertical blanking period. In this control period, data related to control in the auxiliary data, for example, a vertical synchronization signal and a horizontal synchronization signal, control packets, etc. are transmitted.

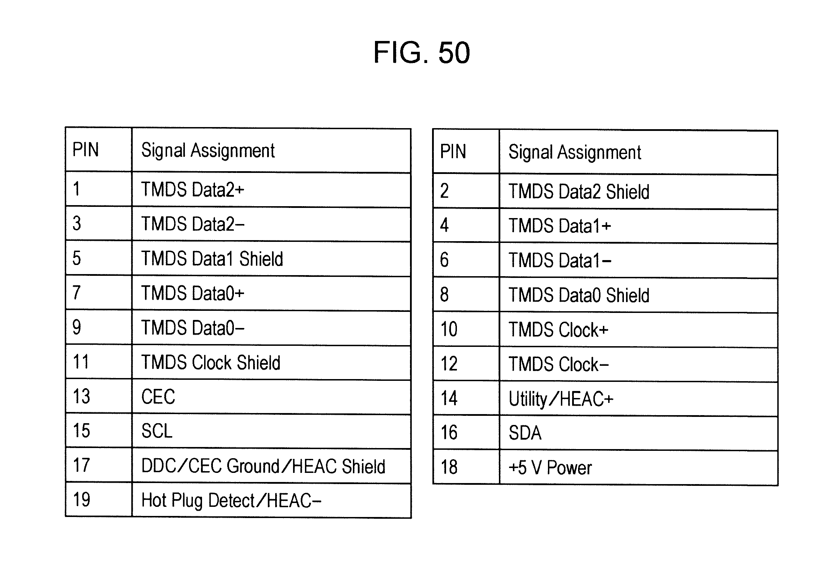

Fig. 50 illustrates an example of a pin-out of an HDMI terminal. The pin-out illustrated in Fig. 50 is called type-A. TMDS Data#i+ and TMDS Data#i-, which are differential signals of the TMDS channel #i, are transmitted using two lines serving as differential lines. The two lines are connected to the pins to which TMDS Data#i+ is assigned (the pins having pin numbers 1, 4, and 7) and the pins to which TMDS Data#i-is assigned (the pins having pin numbers 3, 6, and 9).

Also, the CEC line 84 through which a CEC signal serving as data for control is transmitted is connected to the pin having a pin number 13. Also, the line through which an SDA (Serial Data) signal, such as E-EDID, is transmitted is connected to the pin having a pin number 16. The line through which an SCL (Serial Clock) signal, which is a clock signal used for synchronization at the transmission/reception of the SDA signal, is transmitted is connected to the pin having a pin number 15. The above-described DDC 83 is constituted by a line through which an SDA signal is transmitted and a line through which an SCL signal is transmitted.

Also, as described above, the HPD line (HEAC-line) 86 used by a source apparatus to detect the connection of a sink apparatus is connected to the pin having a pin number 19. Also, the utility line (HEAC+ line) 88 is connected to the pin having a pin number 14. Also, as described above, the line 87 for supplying power is connected to the pin having a pin number 18.

### [E-EDID structure]

As described above, the HDMI transmitting unit 206 reads E-EDID from the HDMI receiving unit 303 connected via the HDMI cable 400 using the DDC 83 in response to a request supplied from the CPU 211 (see Fig. 35), for example. Then, the CPU 211 recognizes the setting of the performance of the HDMI receiving unit 303, for example, whether stereo image data can be handled or not, on the basis of the E-EDID.

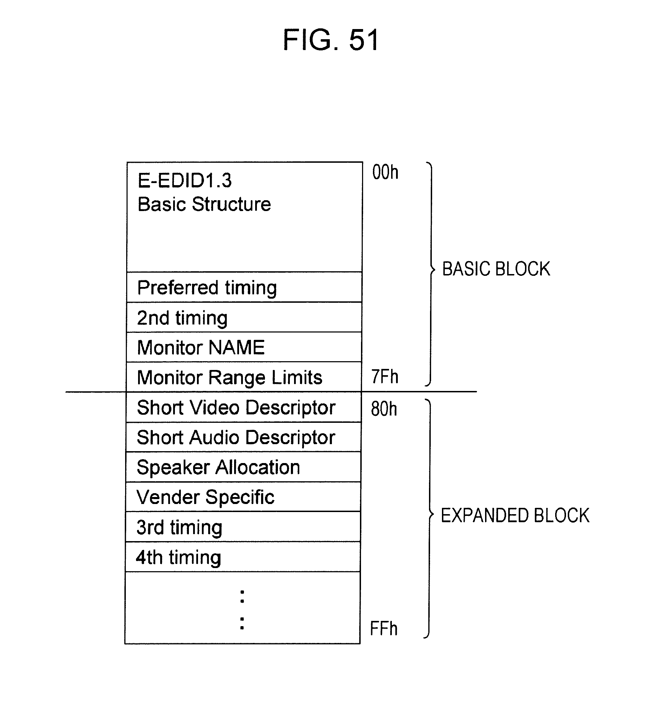

Fig. 51 illustrates an example of a data structure of E-EDID. The E-EDID is made up of a basic block and an expanded block. In the basic block, the data defined by the standard of E-EDID1.3 that is represented by "E-EDID.3 Basic Structure" is arranged at the head. In the basic block, timing information for maintaining the compatibility with the conventional EDID represented by "Preferred timing" follows. Also, in the basic block, timing information different from "Preferred timing" for maintaining the compatibility with the conventional EDID represented by "2nd timing" follows.

Also, in the basic block, the information indicating the name of a display device represented by "Monitor NAME" follows "2nd timing". In the basic block, the information indicating the number of pixels that can be displayed when the aspect ratio is 4:3 and 16:9, represented by "Monitor Range Limits", follows.

"Short Video Descriptor" is arranged at the head of the expanded block. This is the information indicating a displayable image size (resolution), frame rate, and interlace or progressive. "Short Audio Descriptor" is arranged next. This is the information indicating an audio codec method that can be used for reproduction, sampling frequency, cutoff band, the number of codec bits, etc. Next, the information about left and right speakers represented by "Speaker Allocation" is arranged.

Also, in the expanded block, the data uniquely defined for each manufacturer, represented by "Vender Specific", follows "Speaker Allocation". In the expanded block, timing information for maintaining the compatibility with the conventional EDID represented by "3rd timing" follows. In the expanded block, timing information for maintaining the compatibility with the conventional EDID represented by "4th timing" further follows.

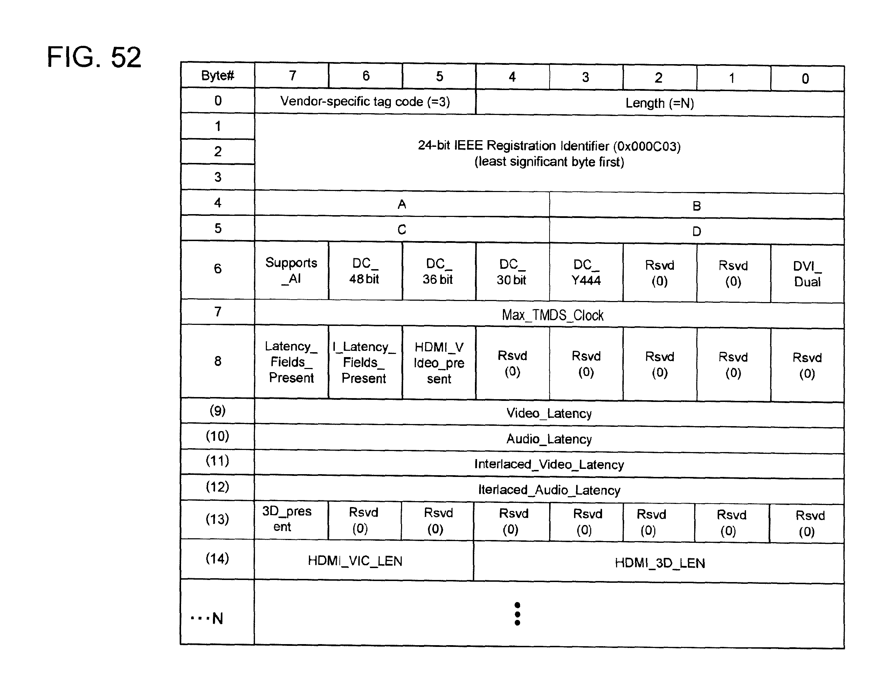

Fig. 52 illustrates an example of a data structure of a Vender Specific area (HDMI Vendor Specific DataBlock). In this Vender Specific area, zeroth block to N-th block of one byte are provided.

In the zeroth block, a header indicating the data area of the data "Vender Specific", represented by "Vendor-Specific tag code (=3)", is arranged. Also, in this zeroth block, information indicating the length of the data "Vender Specific", represented by "Length (=N)", is arranged. Also, in the first to third blocks, information indicating the number "0 × 000C03" registered for HDMI(R), represented by "24bit IEEE Registration Identifier (0 × 000C03) LSB first", is arranged. Furthermore, in the fourth block and fifth block, information indicating the physical addresses of sink apparatuses of twenty-four bits, represented by "A", "B", "C", and "D", respectively, is arranged.

In the sixth block, a flag showing the function with which a sink apparatus is compatible, represented by "Supports-AI", is arranged. Also, in this sixth block, pieces of information specifying the number of bits per pixel, represented by "DC-48bit", "DC-36bit", and "DC-30bit", respectively, are arranged. Also, in this sixth block, a flag showing whether a sink apparatus is compatible with transmission of an image of YCbCr 4:4:4, represented by "DC-Y444", is arranged. Furthermore, in this sixth block, a flag showing whether a sink apparatus is compatible with a dual DVI (Digital Visual Interface), represented by "DVI-Dual", is arranged.

Also, in the seventh block, information indicating the maximum frequency of a pixel clock of TMDS, represented by "Max-TMDS-Clock", is arranged. Also, in the sixth bit and seventh bit of the eighth block, a flag showing the presence/absence of delay information of video and audio, represented by "Latency", is arranged. Also, in the fifth bit of the eighth block, a flag showing whether an additional HDMI video format (3D, 4k × 2k) can be handled or not, represented by "HDMI_Video_present", is arranged.

Also, in the ninth block, delay time data of progressive video, represented by "Video Latency", is arranged. In the tenth block, delay time data of audio accompanying progressive video, represented by "Audio Latency", is arranged. Also, in the eleventh block, delay time data of interlace video, represented by "Interlaced Video Latency", is arranged. Furthermore, in the twelfth block, delay time data of audio accompanying interlace video, represented by "Interlaced Audio Latency", is arranged.

Also, in the seventh bit of the thirteenth block, a flag showing whether 3D image data can be handled or not, represented by "3D_present", is arranged. Also, in the seventh bit to the fifth bit of the fourteenth block, size information of a block indicating a data structure that can be handled as well as a mandatory 3D data structure arranged in the fifteenth block or thereafter not illustrated, represented by "HDMI_VIC_LEN", is arranged. Also, in the fourth bit to the zeroth bit of the fourteenth block, size information of a block that is arranged in the fifteenth block or thereafter not illustrated and that indicates a video format of 4k × 2k that can be handled, represented by "HDMI_3D_LEN", is arranged.

### [TMDS transmission data structure of stereo image data]

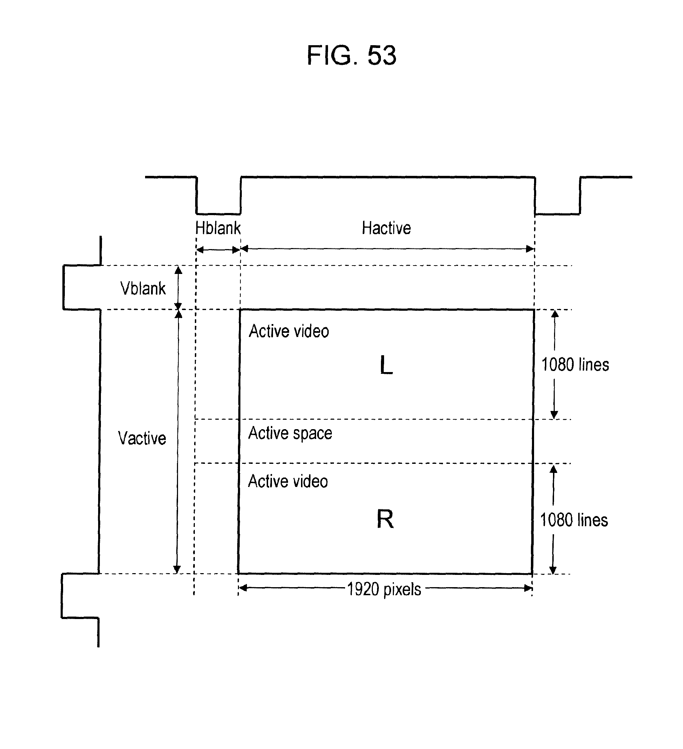

Fig. 53 illustrates a 3D video format of a frame packing method, which is one of TMDS transmission data structures of stereo image data. This 3D video format is a format for transmitting left-eye (L) and right-eye (R) image data in the progressive method as stereo image data.

In this 3D video format, image data of pixel formats of 1920 × 1080 pixels and 1080 × 720 pixels is transmitted as left-eye (L) and right-eye (R) image data. Note that Fig. 53 illustrates an example in which each of the left-eye (L) image data and the right-eye (R) image data is made up of 1920 lines × 1080 pixels.

With this 3D video format, transmission data in which a video field period serves as a unit is generated, the video field period being divided using a vertical synchronization signal and including a horizontal blanking period (Hblank), a vertical blanking period (Vblank), and an active video period (Hactive × Vactive). In this 3D video format, the active video period has two active video areas (Active video) and one active space area (Active space) therebetween. Left-eye (L) image data is arranged in the first active video area, and right-eye (R) image data is arranged in the second active video area.

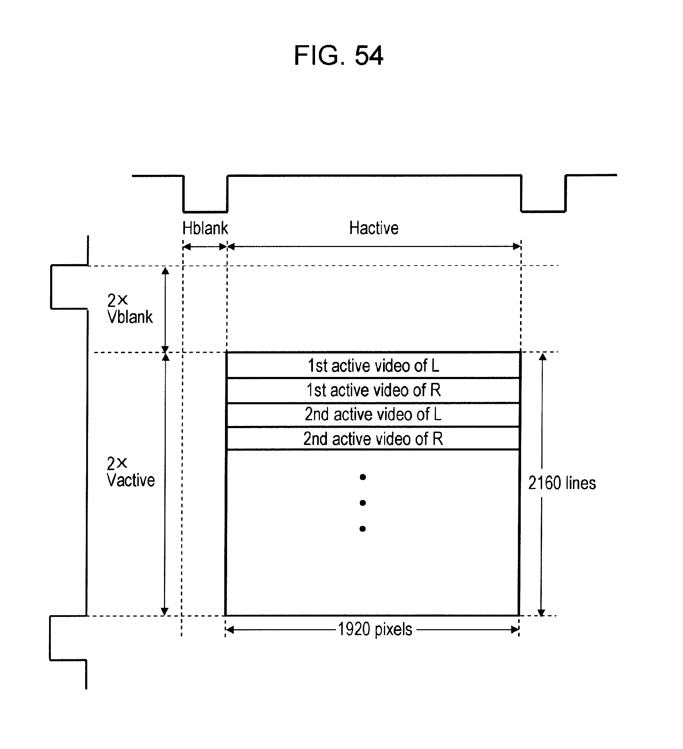

Fig. 54 illustrates a 3D video format of a line alternative method, which is one of TMDS transmission data structures of stereo image data. This 3D video format is a format for transmitting left-eye (L) and right-eye (R) image data in the progressive method as stereo image data. In this 3D video format, image data of a pixel format of 1920 × 1080 pixels is transmitted as left-eye (L) and right-eye (R) image data.

With this 3D video format, transmission data in which a video field period serves as a unit is generated, the video field period being divided using a vertical synchronization signal and including a horizontal blanking period (Hblank), a vertical blanking period (2 × Vblank), and an active video period ((Hactive × 2Vactive). In this 3D video format, one line of left-eye image data and one line of right-eye image data are alternately arranged in the active video period.

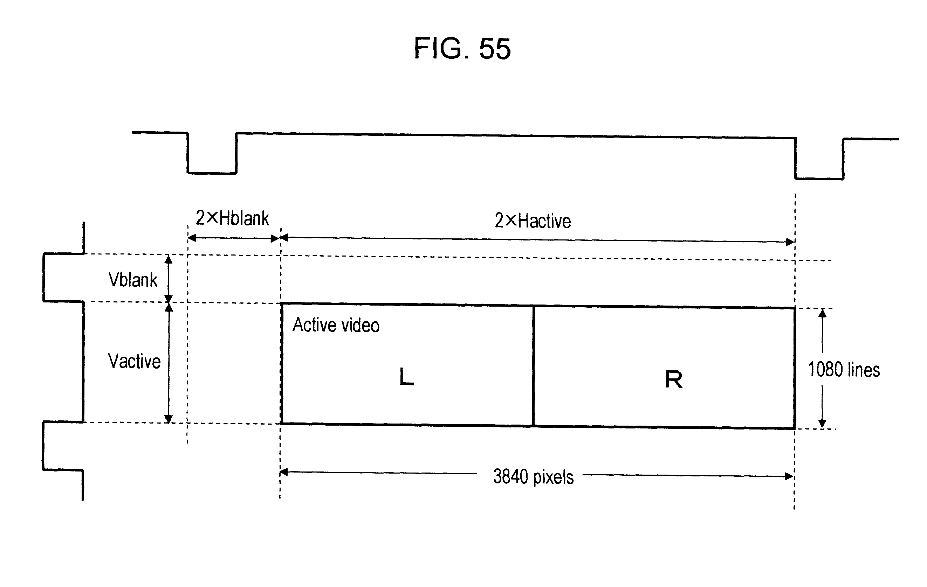

Fig. 55 illustrates a 3D video format of a side by side (Full) method, which is one of TMDS transmission data structures of stereo image data. This 3D video format is a format for transmitting left-eye (L) and right-eye (R) image data in the progressive method as stereo image data. In this 3D video format, image data of a pixel format of 1920 × 1080 pixels is transmitted as left-eye (L) and right-eye (R) image data.

With this 3D video format, transmission data in which a video field period serves as a unit is generated, the video field period being divided using a vertical synchronization signal and including a horizontal blanking period (2 × Hblank), a vertical blanking period (Vblank), and an active video period ((2Hactive × Vactive). In this 3D video format, left-eye (L) image data is arranged in the first half in the horizontal direction, and right-eye (R) image data is arranged in the latter half in the horizontal direction in the active video period.

Note that, although a detailed description is omitted, 3D video formats other than the above-described 3D video formats illustrated in Fig. 53 to Fig. 55 are defined as a TMDS transmission data structure of stereo image data in HDMI1.4. For example, a frame packing (Frame packing for interlaced format) method, a field alternative method, a side by side (Half) method, etc.

### [Another example configuration of set top box and television receiver]

The set top box 200 illustrated in Fig. 35 is configured to transmit stereo image data and audio data of a baseband to the television receiver 300 using an HDMI interface. However, all or some of disparity vectors (see Fig. 8 and Fig. 27) used in the bit stream processing unit 201 may be transmitted as a disparity information set from the set top box to the television receiver using an HDMI interface, and may be used.

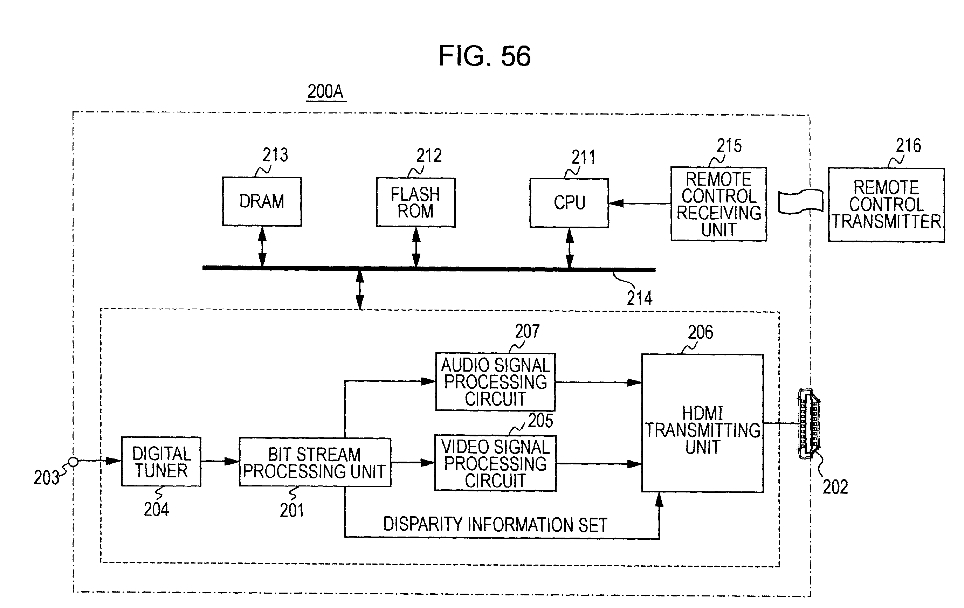

Fig. 56 illustrates an example configuration of a set top box 200A that transmits a disparity information set. In Fig. 56, the parts corresponding to those in Fig. 35 are denoted by the same reference numerals, and the detailed description thereof is appropriately omitted. In the set top box 200A, a disparity information set is supplied from the bit stream processing unit 201 to the HDMI transmitting unit 206. Then, this disparity information set is transmitted by the HDMI transmitting unit 206 from the HDMI terminal 202 to the HDMI cable 400, together with stereo image data and audio data. Other than that, the set top box 200A is configured similarly to the set top box 200 illustrated in Fig. 35 and operates similarly.

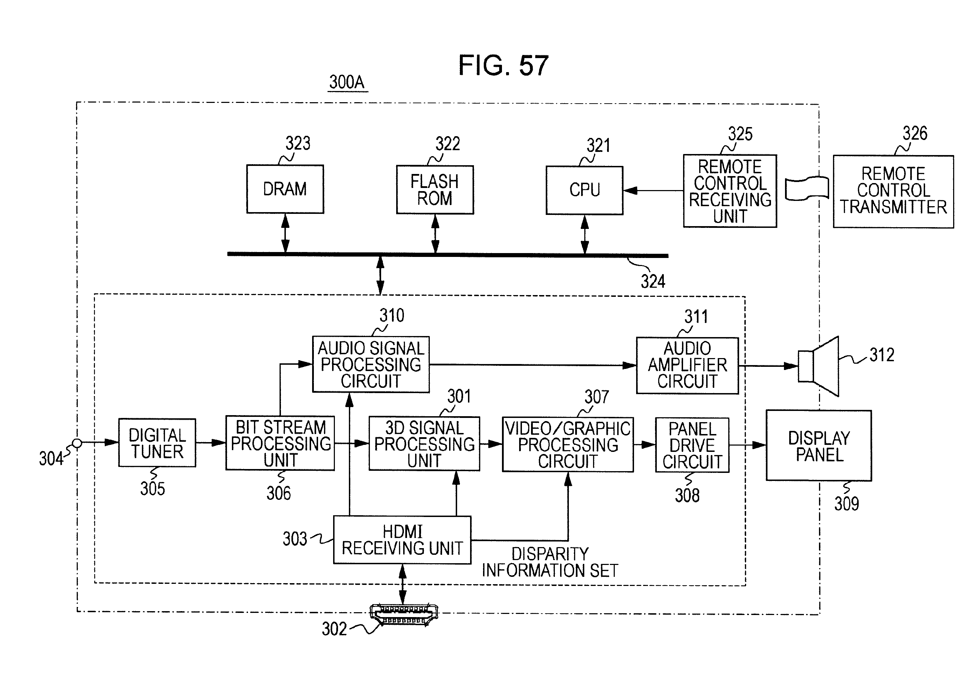

Also, Fig. 57 illustrates an example configuration of a television receiver 300A that receives and uses a disparity information set. In Fig. 57, the parts corresponding to those in Fig. 46 are denoted by the same reference numerals, and the detailed description thereof is appropriately omitted. In the television receiver 300A, the disparity information set received by the HDMI receiving unit 303 is supplied to the video/graphic processing circuit 307. In the video/graphic processing circuit 307, disparity is given to the same pieces of superimposition information, such as a menu and a program table, to be pasted on a left-eye image and a right-eye image, on the basis of the disparity vectors included in the disparity information set.

That is, in the television receiver 300A, information in which disparity adjustment has been performed in accordance with the perspective of individual objects in an image can be used as the same pieces of superimposition information (such as a menu and a program table) to be superimposed on a left-eye image and a right-eye image, and the perspective consistency among the individual objects in the image can be maintained in displaying the superimposition information. Other than that, the television receiver 300A is configured similarly to the television receiver 300 illustrated in Fig. 46, and operates similarly.

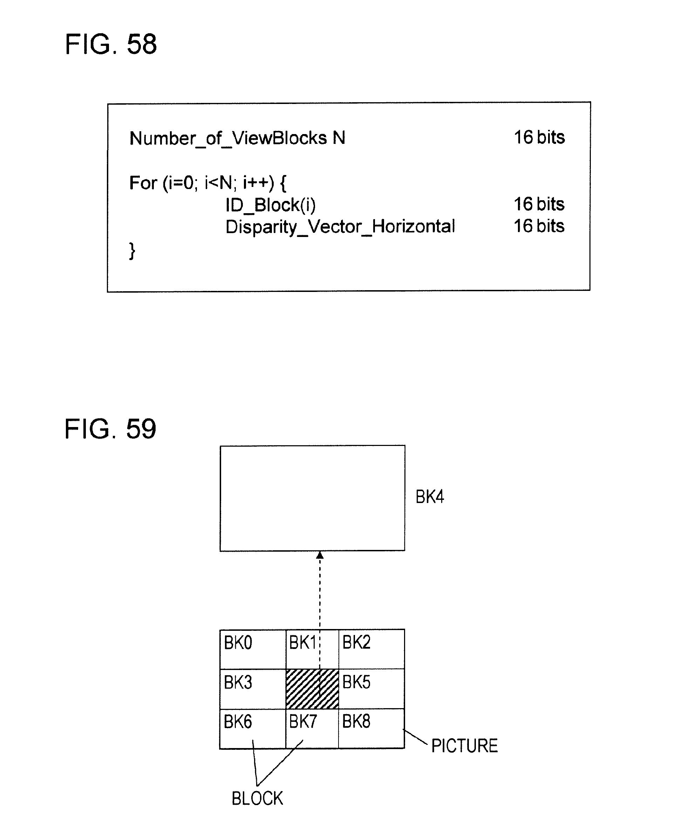

Fig. 58 illustrates an example of the content of a disparity information set that is transmitted from the set top box 200A to the television receiver 300A. This disparity information set includes information sets of N disparity vectors. Each information set is constituted by a block ID (ID_Block(i)) of sixteen bits and a disparity vector in the horizontal direction (Disparity_Vector_Horizontal) of sixteen bits.

Here, for example, as illustrated in Fig. 59, in the case of a disparity information set including the disparity vectors of individual blocks BK0 to BK8 that are obtained by dividing an image (picture) area into nine blocks, the disparity vector having the largest value, that is, the disparity vector of the block BK4 in this example, is arranged first, and then the disparity vectors of the residual blocks are sequentially arranged.

### [Method for transmitting disparity information set in HDMI]

The following methods (1) and (2) may be used as a method for transmitting a disparity information set using an HDMI interface, for example.

### (1) Method of using HDMI Vendor Specific InfoFrame

### (2) Method of using an active space of a 3D video format, such as a frame packing method

First, the method of using HDMI Vendor Specific InfoFrame in (1) will be described. In this method, it is assumed that HDMI_Video_Format = "010" and 3D_Meta_present = 1 in HDMI Vendor Specific InfoFrame paket, and Vendor Specific InfoFrame extension is specified. In that case, 3D_Metadata_type is defined as unused "010", for example, and information of a disparity information set (Disparrity Set) is specified.

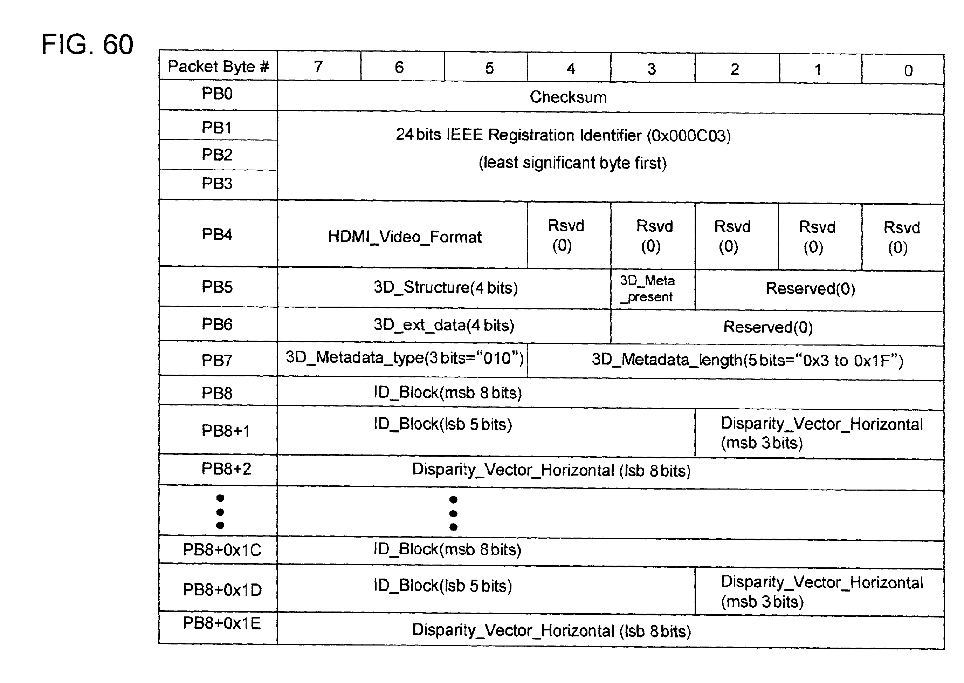

Fig. 60 illustrates a packet structure of HDMI Vendor Specific InfoFrame. This HDMI Vendor Specific InfoFrame is defined in CEA-861-D, and thus the detailed description thereof is omitted.

In the seventh bit to the fifth bit of the fourth byte (PB4), 3-bit information "HDMI_Video_Format" indicating the type of image data is arranged. In a case where image data is 3D image data, the 3-bit information is "010". Also, in a case where image data is 3D image data, 4-bit information "3D_Structure" indicating a TMDS transmission data structure is arranged in the seventh bit to the fourth bit of the fifth byte (PB5). For example, in the case of the frame packing method (see Fig. 53), the 4-bit information is "0000". Also, for example, in the case of the line alternative method (see Fig. 54), the 4-bit information is "0010". Also, for example, in the case of the side by side (Full) method (see Fig. 55), the 4-bit information is "0011".

Also, "3D_Meta_present" is arranged in the third bit of the fifth byte (PB5), and in the case of specifying Vendor Specific InfoFrame extension, this one bit is "1". Also, "3D_Metadata_type" is arranged in the seventh bit to the fifth bit of the seventh byte (PB7). In the case of specifying information of a disparity information set (Disparrity Set), the 3-bit information is unused "010", for example. Also, "3D_Metadata_length" is arranged in the fourth byte to the zeroth byte of the seventh byte (PB7). The 5-bit information indicates the length of the 3D_Metadata area arranged thereafter.

Each information set of a disparity vector constituting a disparity information set is constituted by a block ID (ID_Block(i)) of sixteen bits and a disparity vector in the horizontal direction (Disparity_Vector_Horizontal) of sixteen bits, as illustrated in Fig. 58 described above. For example, when an image (picture) area of 1920 × 1080 is divided into blocks of 16 × 16 pixels, the number of blocks is 8100, and the individual blocks can be represented by an ID of thirteen bits. Also, it is understood that, in the case of representing disparity in the horizontal direction using the number of pixels in an image size of 1920 × 1080, eleven bits with code may be used without problem in general.

Thus, the three bytes of the first to third bytes are used to arrange the information sets of respective disparity vectors. The upper eight bits of "ID_Block (i)" are arranged in the first byte, and the lower five bits of "ID_Block(i)" are arranged in the seventh bit to the third bit of the second byte. Also, the upper three bits of "Disparity_Vector_Horizontal" are arranged in the second bit to the zeroth bit of the second byte, and the lower eight bits of "Disparity_Vector_Horizontal" are arranged in the third byte. In order to transmit disparity vectors of nine blocks, as illustrated in Fig. 59 described above, an area of 3 bytes × 9 = 27 bytes is used.

The layers from the top layer included in the disparity information set can be specified by 3D_Metadata_length. Alternatively, definition can be added to a vacant bit of 3D_Metadata_type, and it can be specified to insert the first layer (maximum disparity in the entire screen) when 3D_Metadata_type = "010" and insert the second layer (intra-region maximum disparity in each of a plurality of regions) when 3D_Metadata_type = "110".

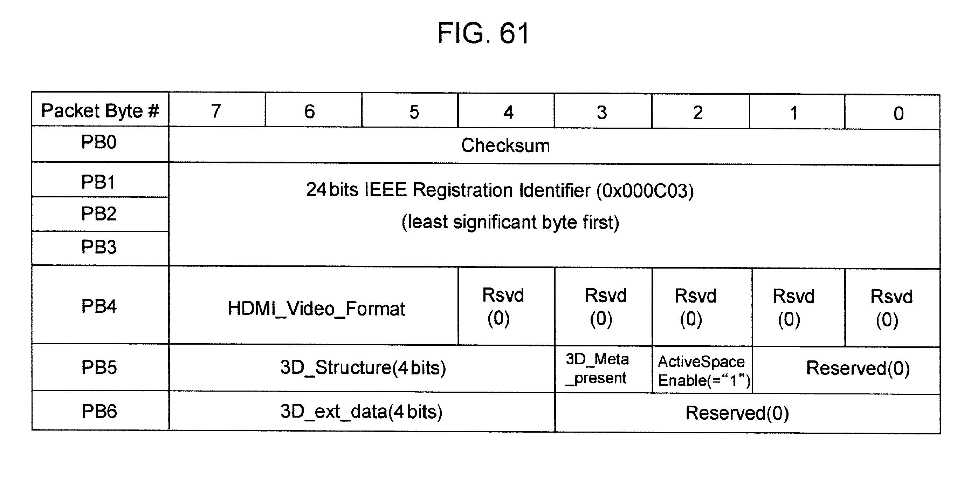

Next, the method of using an active space in (2) will be described. In this method, as illustrated in Fig. 61 that illustrates a packet structure of HDMI Vendor Specific InfoFrame, "ActiveSpace Enable" is defined in the second bit of the fifth byte (PB5), which is a Reserved bit now, and the 1-bit information is "1". In this state, an information area is newly defined using the active space area, which is reserved now, and a disparity information set is arranged there.

The active space area forms an active video period together with an active video area where left-eye image data and right-eye image data are arranged. Here, the active video area forms a main video area, and the active space area forms an auxiliary video area. The active space area varies depending on the image size of video, and has a capacity of 45 lines (86400 bytes) per frame when the image size is 1920 × 1080.

When an image (picture) area of 1920 × 1080 is divided into blocks of 16 × 16 pixels, the number of blocks is 8100. In this case, three bytes are used to arrange the information sets of the respective disparity vectors, as described above. That is, thirteen bits are used for "ID_Block(i)", and eleven bits are used for "Disparity_Vector_Horizontal". Thus, a capacity of 3 bytes × 8100 = 24300 bytes is necessary for arranging a disparity information set including the disparity vectors of all the blocks. As described above, the active space area has a capacity of 86400 bytes. Thus, a disparity information set including the disparity vectors of all the blocks can be transmitted in units of frames of video by using this active space area.

Also, it is possible to reduce the size of blocks and increase the space density of disparity vectors (disparity information). In that case, the capacity may exceed the capacity that can be transmitted in an active space area of one frame. In that case, coupling with the active space of the next frame is clearly specified using coupling information.

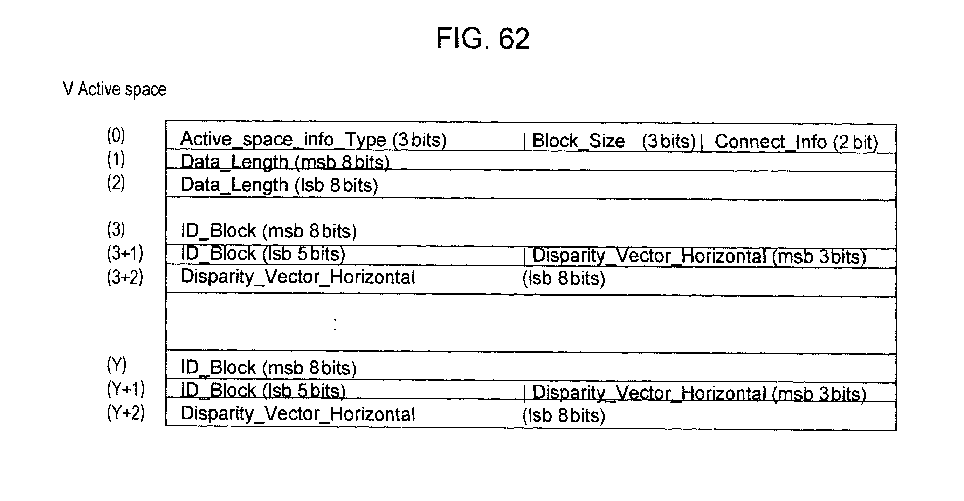

Fig. 62 illustrates a structure of a disparity information set arranged in the active space area. In the zeroth byte, the information "Active_space_info_Type" of three bits, "Block_Size" of three bits, and "Connect_Info" of two bits is arranged. In the first byte and the second byte, the upper eight bits and the lower eight bits of "Data_Length" of sixteen bits indicating the length of the area where the subsequent disparity information set is arranged are arranged.

The information set of each disparity vector is arranged using an area of three bytes. The upper eight bits of "ID_Block (i)" are arranged in the first byte, and the lower five bits of "ID_Block(i)" are arranged in the seventh bit to the third bit of the second byte. Also, the upper three bits of "Disparity_Vector_Horizontal" are arranged in the second bit to the zeroth bit of the second byte, and the lower eight bits of "Disparity_Vector_Horizontal" are arranged in the third byte.

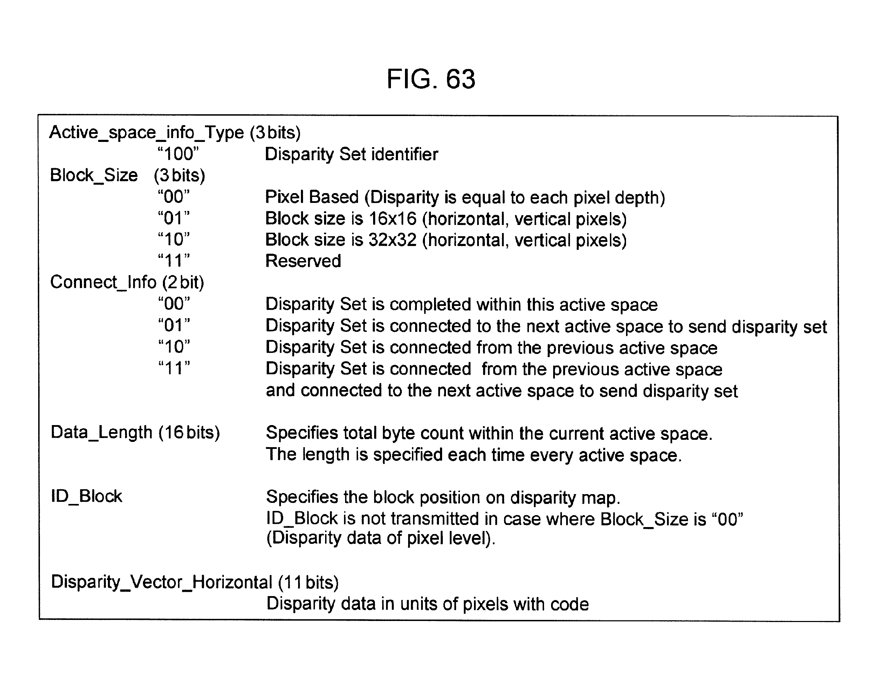

Fig. 63 illustrates the content of each piece of information of the disparity information set structure illustrated in Fig. 62. The information "Active_space_info_Type" is identification information representing a disparity information set. The information "Block_Size" indicates the block size representing the space density of disparity vectors (disparity information). "00" represents that the block size is 1 × 1 pixels, that is, a pixel. "01" represents that the block size is 16 × 16 pixels. "10" represents that the block size is 32 × 32 pixels.

The information "Connect_Info" indicates the connection information of the active space area. "00 "represents that the disparity information set arranged in this active space area is at the end. "01 "represents that the disparity information set arranged in this active space area is connected to the disparity information set arranged in the subsequent active space area. "10 "represents that the disparity information set arranged in this active space area is connected to the disparity information set arranged in the preceding active space area. "11 "represents that the disparity information set arranged in this active space area is connected to the disparity information sets arranged in the preceding and subsequent active space areas.

Note that it is important in terms of handling on the sink side that the timing of the video frame when the last connected active space ends is arranged to end transmission at least the same time as the frame for transmitting target image data or earlier.

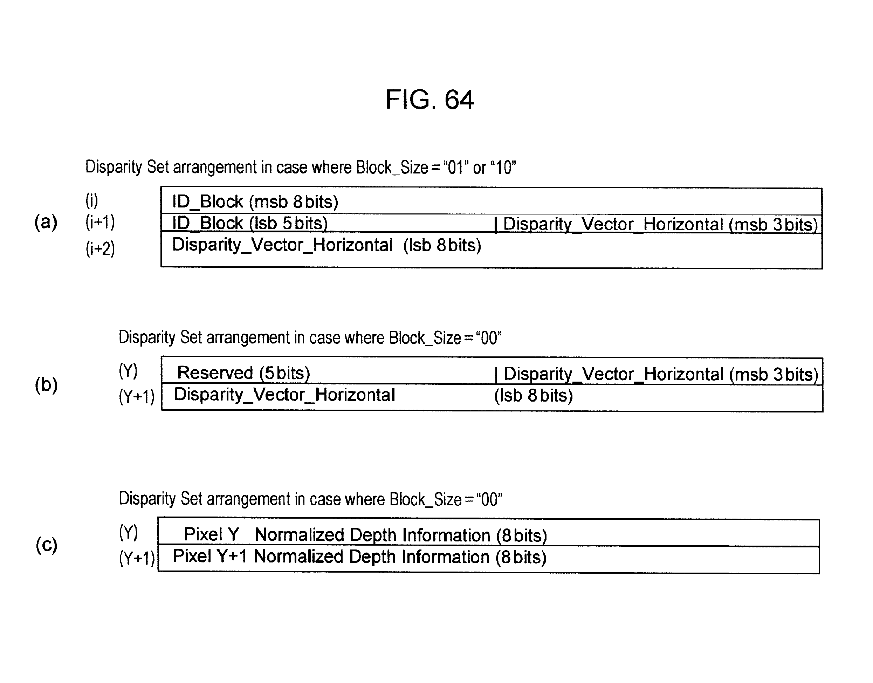

Fig. 64(a) illustrates an example arrangement of information sets of respective disparity vectors in a case where "Block_Size" is "01" or "10". In this case, the information set of each disparity vector is arranged using an area of three bytes, as described above. Fig. 64(b) illustrates an example arrangement of information sets of respective disparity vectors in a case where "Block_Size" is "00". In this case, "ID_Block(i)" can be omitted by arranging all the pixels of a picture in scan order (video pixel order). That is, in this case, the information set of each disparity vector is arranged using an area of two bytes.

Note that, in this case, the information "Disparity_Vector_Horizontal" of eleven bits with code is normalized into eight bits with code, whereby the information set of each disparity vector can be arranged using an area of one byte, as illustrated in Fig. 64(c), and a transmission band can be reduced to half.

Note that, a description has been given above of the first type in which a certain number of disparity vectors (disparity information) and position information (block ID) indicating the positions in an image area to which the respective disparity vectors belong are included as a disparity information set that is transmitted from the set top box 200A to the television receiver 300A. However, as this disparity information set, the second type is also available in which division information of an image area and disparity information representing the respective division areas are included.

First, a description will be given of a method for selectively transmitting a disparity information set of the first type or second type using HDMI Vendor Specific InfoFrame. In this method, it is assumed that HDMI_Video_Format = "010" and 3D_Meta_present = 1 in HDMI Vendor Specific InfoFrame paket, and Vendor Specific InfoFrame extension is specified. In that case, 3D_Metadata_type is defined as unused "010", for example, and information of a disparity information set (Disparrity Set) is specified.

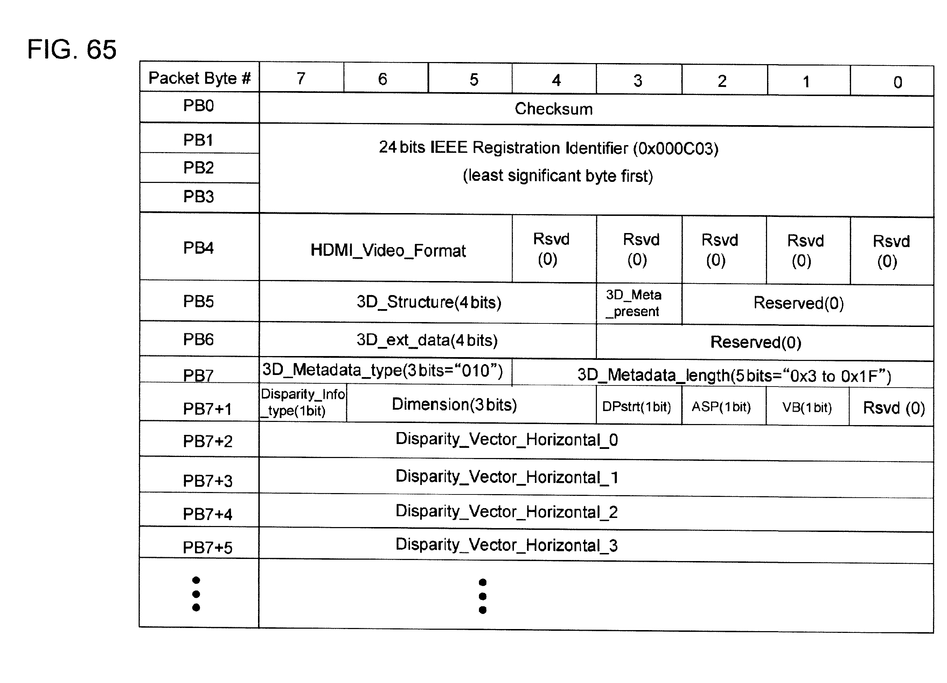

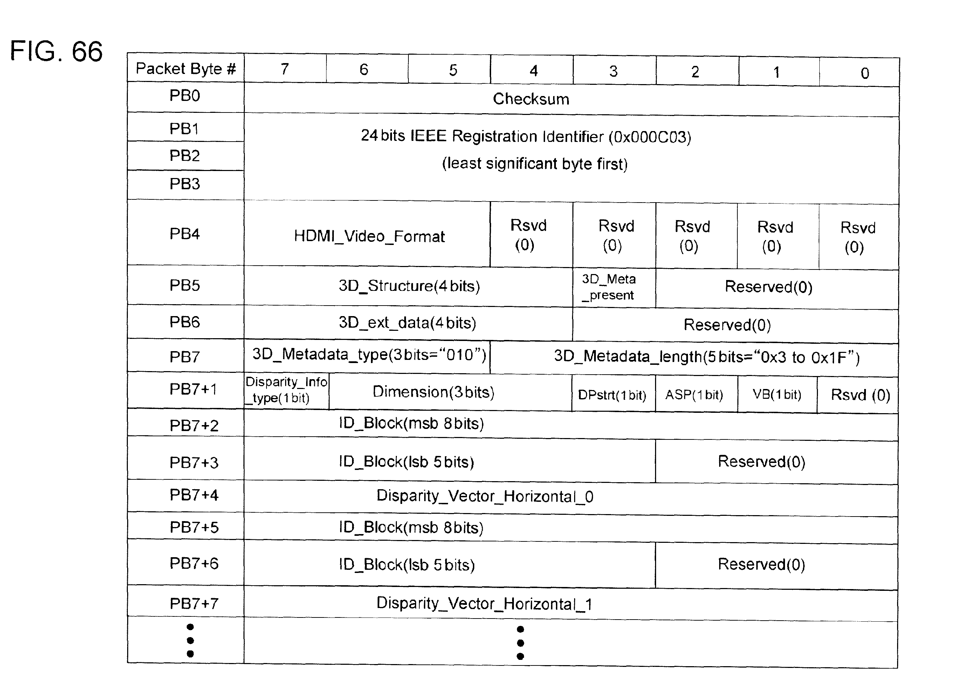

Fig. 65 and Fig. 66 illustrate a packet structure of HDMI Vendor Specific InfoFrame. This HDMI Vendor Specific InfoFrame is defined in CEA-861-D, and thus a detailed description is omitted.

In the seventh bit to the fifth bit of the fourth byte (PB4), 3-bit information "HDMI_Video_Format" indicating the type of image data is arranged. In a case where image data is 3D image data, the 3-bit information is "010". Also, in such a case where image data is 3D image data, 4-bit information "3D_Structure" indicating a TMDS transmission data structure is arranged in the seventh bit to the fourth bit of the fifth byte (PB5). For example, in the case of the frame packing method (see Fig. 53), the 4-bit information is "0000". Also, for example, in the case of the line alternative method (see Fig. 54), the 4-bit information is "0010". Also, for example, in the case of the side by side (Full) method (see Fig. 55), the 4-bit information is "0011".

Also, "3D_Meta_present" is arranged in the third bit of the fifth byte (PB5), and in the case of specifying Vendor Specific InfoFrame extension, this one bit is "1". Also, "3D_Metadata_type" is arranged in the seventh bit to the fifth bit of the seventh byte (PB7). In the case of specifying information of a disparity information set (Disparity Set), the 3-bit information is unused "010", for example. Also, "3D_Metadata_length" is arranged in the fourth byte to the zeroth byte of the seventh byte (PB7). The 5-bit information indicates the length of the 3D_Metadata area arranged thereafter.

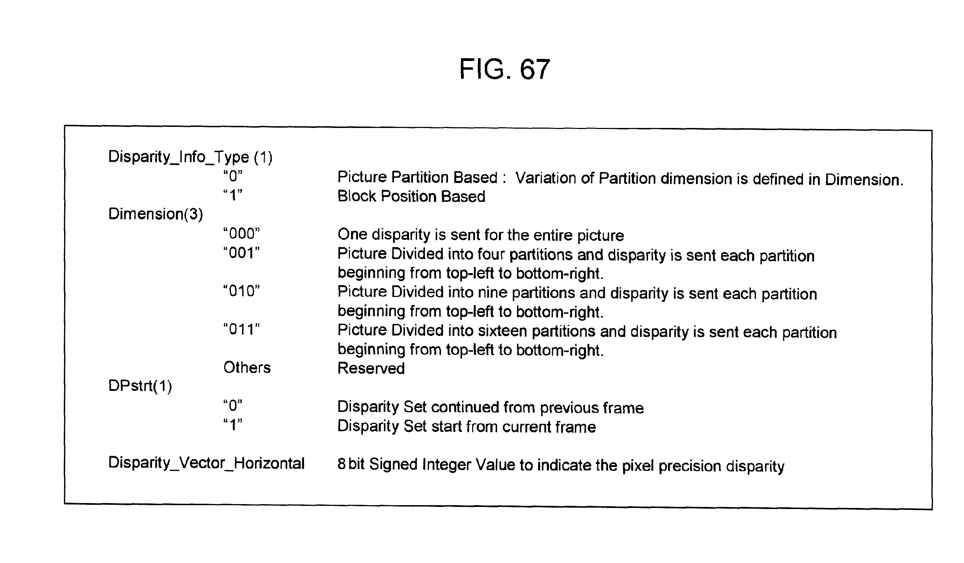

Also, "Disparity_Info_type (1bit)" is arranged in the seventh bit of the seventh + 1 byte (PB7+1). The information indicates whether the type of the disparity information set is the first type or second type. As illustrated in Fig. 67, when "Disparity_Infor_type" is "1", which indicates that the type of the disparity information set is the first type. In this case, the disparity information set includes a certain number of disparity vectors (disparity information) and position information (block ID) indicating the positions in an image area to which the respective disparity vectors belong. Also, when "Disparity_Infor_type" is "0", which indicates that the type of the disparity information set is the second type. In this case, the disparity information set includes division information of an image area and disparity information representing the respective division areas.

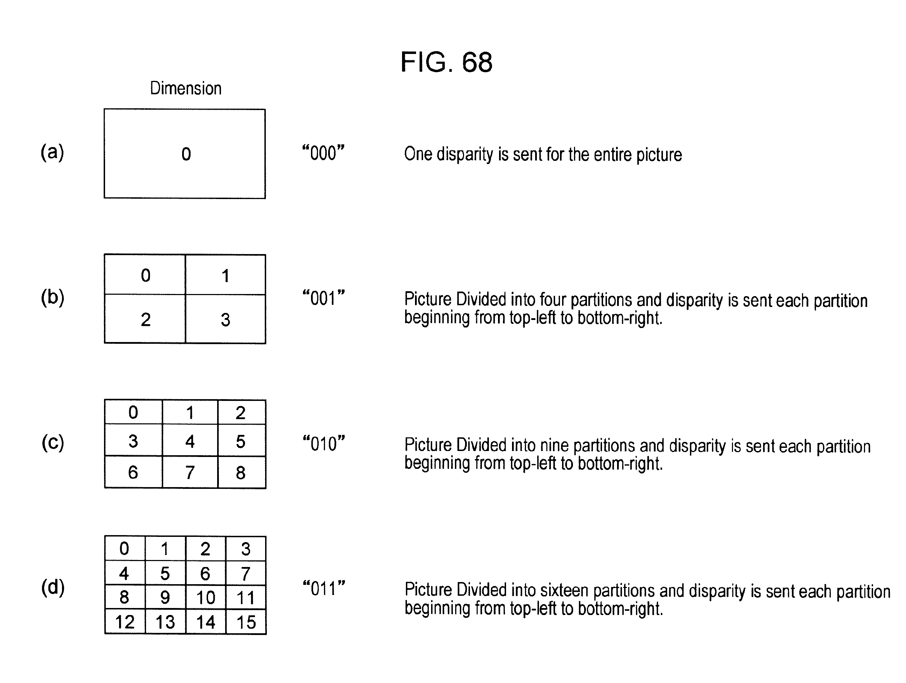

Also, "Dimension (3 bits)" is arranged in the sixth to fourth bits of the seventh + 1 byte. The information is division information of an image (picture) area. As illustrated in Fig. 67 and Fig. 68(a), when "Dimension" is "00", the image (picture) area is not divided, which represents that one disparity vector (disparity information) representing this image (picture) area is transmitted.

Also, as illustrated in Fig. 67 and Fig. 68(b), when "Dimension" is "001", the image (picture) area is divided into four blocks, which represents that four disparity vectors (disparity information) representing the respective division areas are transmitted. In this case, arrangement is performed so that the disparity vector in the top-left area is the first and the disparity vector in the bottom-right area is the last (in order from 0 to 3 in Fig. 68(b)).

Also, as illustrated in Fig. 67 and Fig. 68(c), when "Dimension" is "010", the image (picture) is divided into nine blocks, which represents that nine disparity vectors (disparity information) representing the respective division areas are transmitted. In this case, arrangement is performed so that the disparity vector in the top-left area is the first and the disparity vector in the bottom-right area is the last (in order from 0 to 8 in Fig. 68(c)).

Also, as illustrated in Fig. 67 and Fig. 68(d), when "Dimension" is "011", the image (picture) area is divided into sixteen blocks, which represents that sixteen disparity vectors (disparity information) representing the respective division areas are transmitted. In this case, arrangement is performed so that the disparity vector in the top-left area is the first and the disparity vector in the bottom-right area is the last (in order from 0 to 15 in Fig. 68(d)).

Also, "DPstrt (1bit)" is arranged in the third bit of the seventh + 1 byte (PB7+1). The information indicates continuity information of the disparity information set of the current frame. As illustrated in Fig. 67, when "DPstrt" is "0", which represents that the disparity information set of the current frame continues from the disparity information set of the preceding frame. Also, as illustrated in Fig. 67, when "DPstrt" is "1", which represents that the disparity information set of the current frame starts from the current frame.

Also, "ASP (1bit)" is arranged in the second bit of the seventh + 1 byte (PB7+1). The information indicates whether the disparity information set is transmitted using an active space area. When "ASP" is "1", which represents that the disparity information set is transmitted using the active space area. Note that the disparity information set is transmitted using HDMI Vendor Specific InfoFrame, and "ASP" is "0".

Also, "VB (1bit)" is arranged in the first bit of the seventh + 1 byte (PB7+1). The information indicates whether the disparity information set is transmitted in the blanking period of image data using packets other than HDMI Vendor Specific InfoFrame packets. When "VB" is "1", which indicates that the disparity information set is transmitted in the blanking period of image data using packets other than HDMI Vendor Specific InfoFrame packets. Note that the disparity information set is transmitted using HDMI Vendor Specific InfoFrame, and "VB" is "0".

An actual disparity information set is arranged in the seventh + 2 byte and thereafter. Fig. 65 illustrates a case where "Disparity_Info_type" is "0". A disparity information set of the second type is arranged as a disparity information set. Disparity vectors (disparity information) in the horizontal direction representing the respective division areas are sequentially arranged. In this case, each disparity vector is 8-bit information. Here, when "Dimension" is "000", "001", "010", and "011" one disparity vector, four disparity vectors, nine disparity vectors, and sixteen disparity vectors (disparity information) are arranged, respectively.

Fig. 66 illustrates a case where "Disparity_Info_type" is "1". A disparity information set of the first type is arranged as a disparity information set. Sets of position information (block ID) and a disparity vector are sequentially arranged. For example, when an image (picture) area of 1920 × 1080 is divided into blocks of 16 × 16 pixels, the number of blocks is 8100, and the individual blocks can be represented by an ID of thirteen bits.

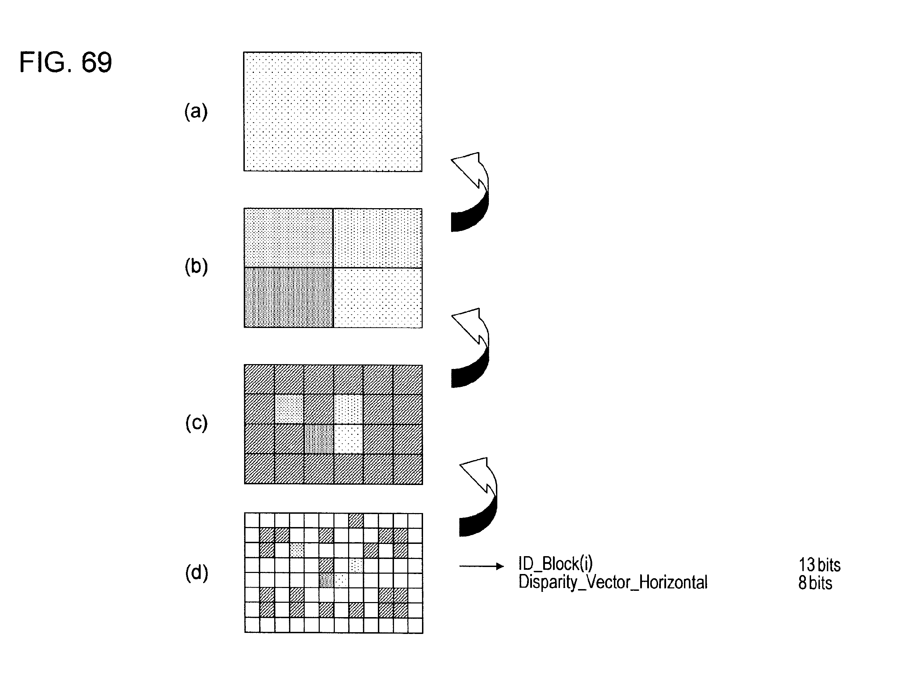

Here, each set of a disparity vector is constituted by a block ID (ID_Block(i)) of thirteen bits and a disparity vector in the horizontal direction (Disparity_Vector_Horizontal) of eight bits, as illustrated in Fig. 69(d). Thus, three bytes of the first to third bytes are used to arrange each set of a disparity vector. The upper eight bits of "ID_Block (i)" are arranged in the first byte, and the lower five bits of "ID_Block(i)" are arranged in the seventh bit to the third bit of the second byte. "Disparity_Vector_Horizontal" is arranged in the third byte.

The number of sets of disparity vectors depends on the layer included in the disparity information set. For example, when only the layer illustrated in Fig. 69(a) is included, the number of sets is one, and the disparity vector of the set indicates the maximum disparity among the disparity vectors detected in the respective areas (blocks) in the bottom layer illustrated in Fig. 69(d), for example. Also, the block ID of the set represents the area position of the bottom layer to which the disparity vector indicating the maximum disparity belongs.

Likewise, for example, in a case where only the layer illustrated in Fig. 69(b) is included, the number of sets is four, which corresponds to the respective areas. In a case where only the layer illustrated in Fig. 69(c) is included, the number of sets is twenty-four, which corresponds to the respective areas. In this case, the disparity vectors of the respective sets indicate the maximum disparity among the disparity vectors detected in the respective areas (blocks) in the bottom layer included in the respective areas. Also, the block ID of each set represents the area position of the bottom layer to which the disparity vector indicating the maximum disparity belongs.

Note that the packet structures of HDMI Vendor Specific InfoFrame illustrated in Fig. 65 and Fig. 66 show, with the information "Disparity_Info_type", whether the type of the disparity information set transmitted using this packet is the first type or the second type. However, in a case where the type of disparity information set transmitted using this packet is limited to only the first type or the second type from the beginning, the information "Disparity_Info_type" is not necessary.

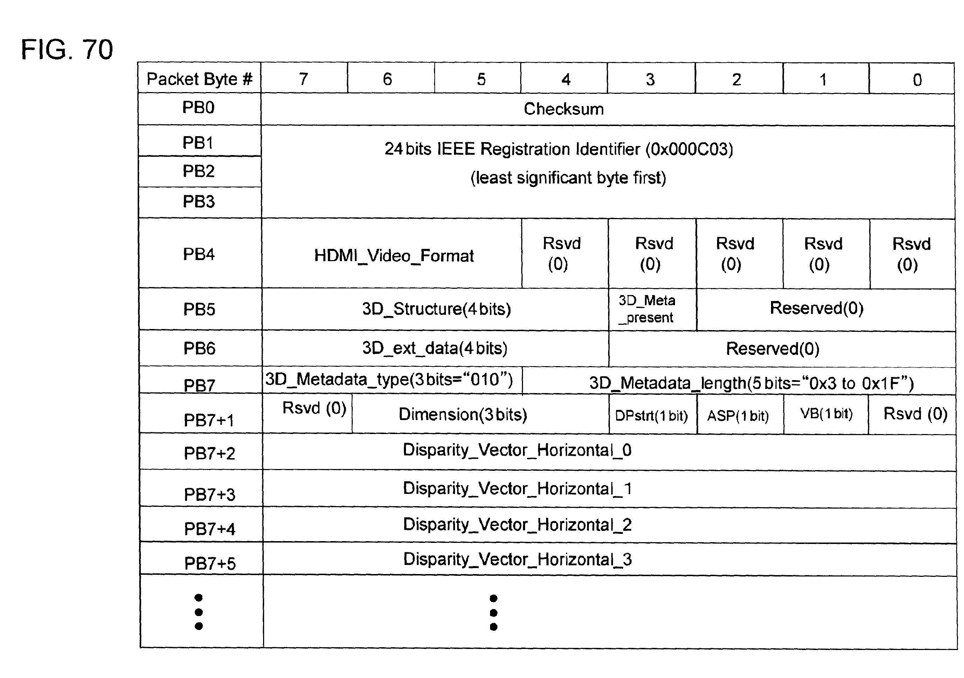

Fig. 70 illustrates a packet structure of HDMI Vendor Specific InfoFrame in a case where the type of disparity information set to be transmitted is limited to only the second type. In this case, the seventh bit of the seventh + 1 byte (PB7+1) is reserved (Reserved(0).

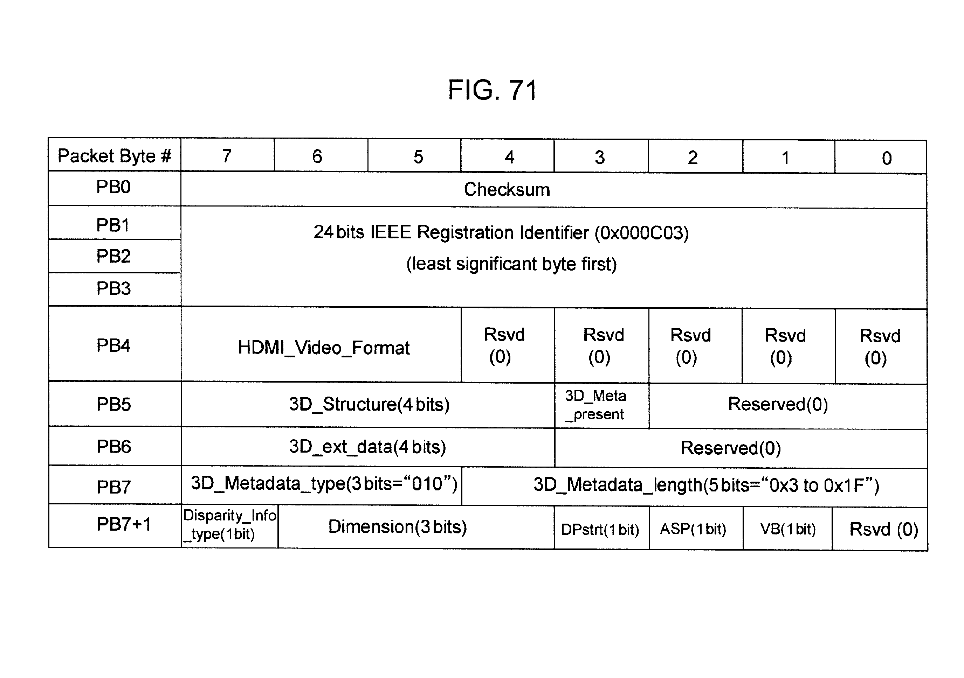

Next, a description will be given of a method for selectively transmitting a disparity information set of the first type or second type using an active space. In this method, as illustrated in Fig. 71 that illustrates a packet structure of HDMI Vendor Specific InfoFrame, "ASP(1bit)" is defined in the second bit of the seventh + 1 byte (PB7+1), which is a Reserved bit now, and the 1-bit information is "1". In this state, an information area is newly defined using the active space area, which is reserved now, and a disparity information set is arranged there.

Note that, in the packet structure of HDMI Vendor Specific InfoFrame in Fig. 71, information similar to that of the packet structure of HDMI Vendor Specific InfoFrame illustrated in Fig. 65 and Fig. 66 described above is arranged in the seventh byte.

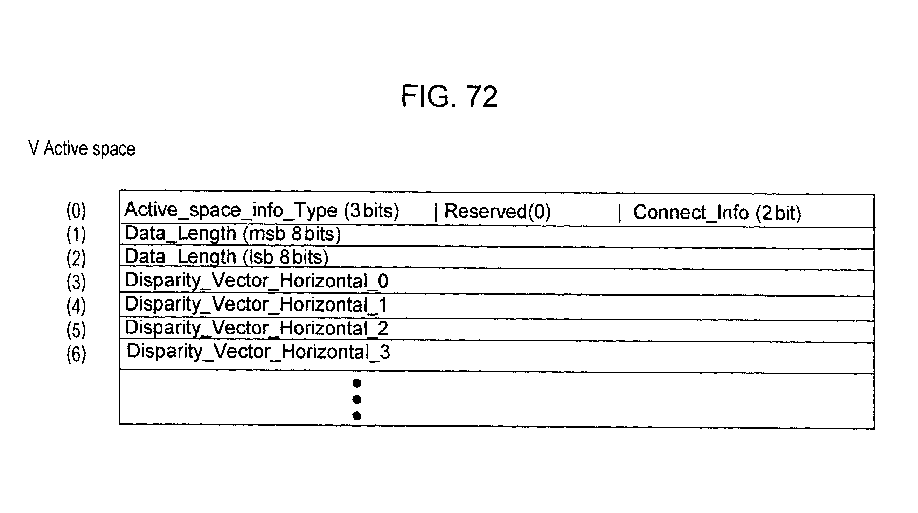

Fig. 72 illustrates the structure of a disparity information set arranged in the active space area in a case where "Disparity Infor_type" is "0", that is, in a case where a disparity information set of the second type is transmitted as a disparity information set. In this case, disparity vectors (disparity information) in the horizontal direction representing the respective division areas are sequentially arranged as a disparity information set. In the zeroth byte, the information "Active_space_info_Type" of three bits and "Connect_Info" of two bits is arranged. Also, in the first byte and the second byte, the upper eight bits and the lower eight bits of "Data_Length" of sixteen bits indicating the length of the area where the subsequent disparity information set is arranged are arranged.

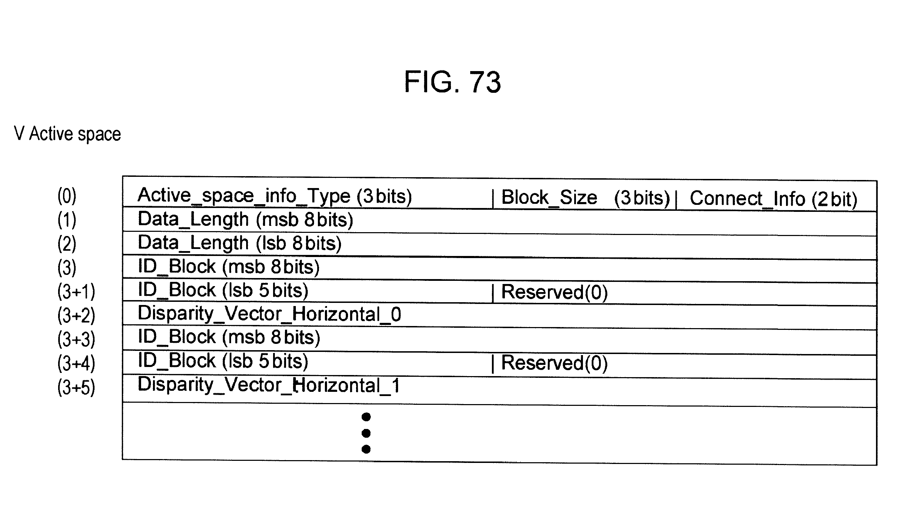

Fig. 73 illustrates the structure of a disparity information set arranged in the active space area in a case where "Disparity Infor_type" is "1", that is, in a case where a disparity information set of the first type is transmitted as a disparity information set. In this case, position information (block ID) and sets of disparity vectors are sequentially arranged as a disparity information set.

In the zeroth byte, the information "Active_space_info_Type" of three bits, "Block_Size" of three bits, and "Connect_Info" of two bits is arranged. In the first byte and the second byte, the upper eight bits and the lower eight bits of "Data_Length" of sixteen bits indicating the length of the area where the subsequent disparity information set is arranged are arranged.

The information set of each disparity vector is arranged using an area of three bytes. The upper eight bits of "ID_Block (i)" are arranged in the first byte, and the lower five bits of "ID_Block(i)" are arranged in the seventh bit to the third bit of the second byte. "Disparity_Vector_Horizontal" is arranged in the third byte.

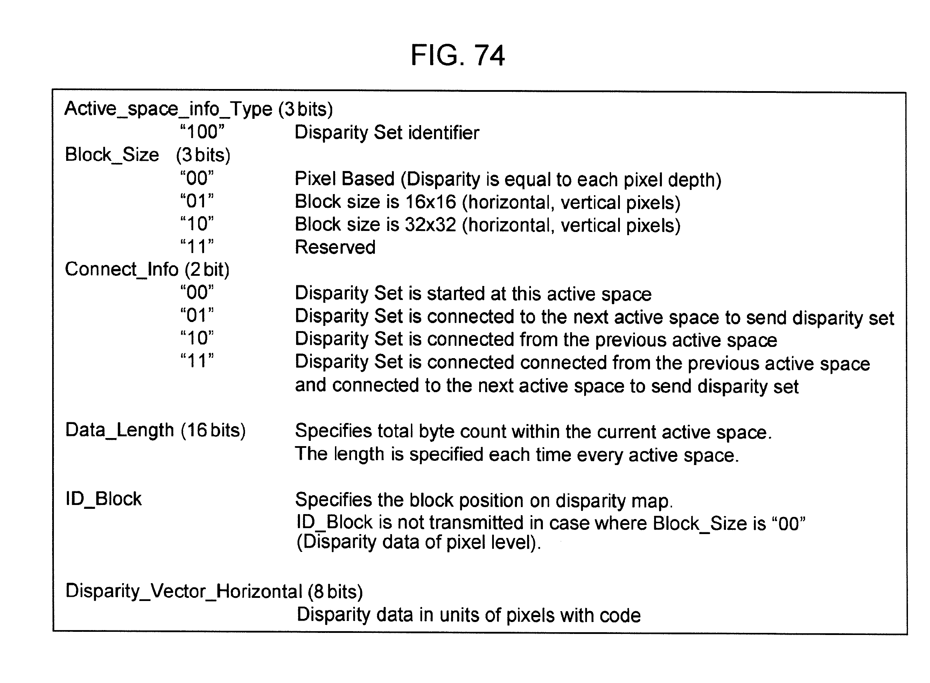

Fig. 74 illustrates the content of each piece of information of the disparity information set structures illustrated in Fig. 72 and Fig. 73. The information "Active_space_info_Type" is identification information representing a disparity information set. The information "Block_Size" indicates the block size representing the space density of disparity vectors (disparity information). "00" represents that the block size is 1 × 1 pixels, that is, a pixel. "01" represents that the block size is 16 × 16 pixels. "10" represents that the block size is 32 × 32 pixels.

The information "Connect_Info" shows the connection information of the active space area. "00 "represents that the disparity information set arranged in the current active space area starts from the current active space area. "01 "represents that the disparity information set arranged in this active space area is connected to the disparity information set arranged in the subsequent active space area. "10 "represents that the disparity information set arranged in this active space area is connected to the disparity information set arranged in the preceding active space area. "11 "represents that the disparity information set arranged in this active space area is connected to the disparity information sets arranged in the preceding and subsequent active space areas.

Note that it is important in terms of handling on the sink side that the timing of the video frame when the last connected active space ends is arranged to end transmission at least the same time as the frame for transmitting target image data or earlier.

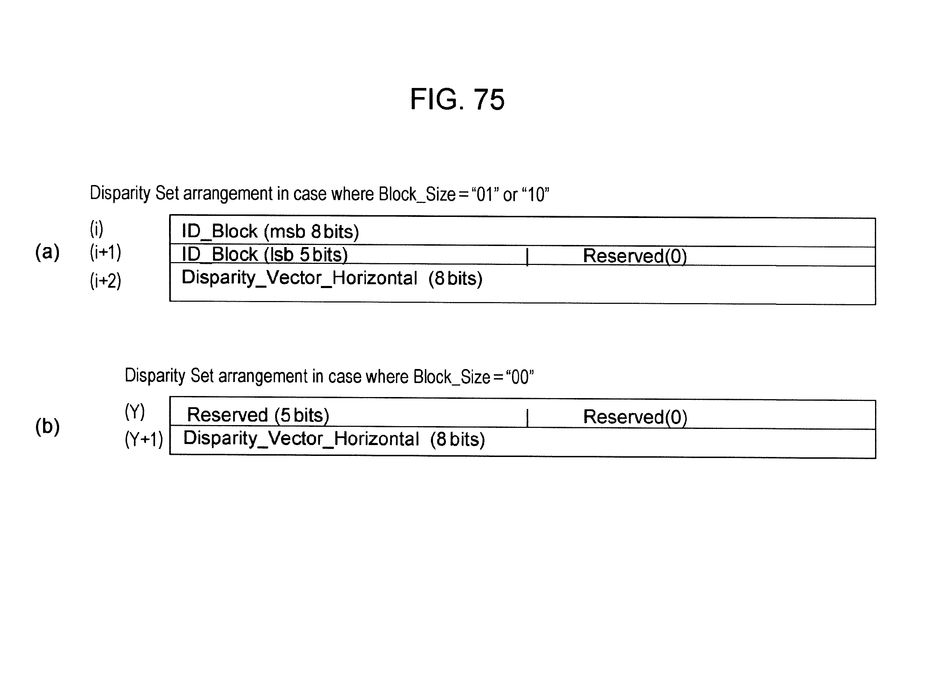

Fig. 75(a) illustrates an example arrangement of information sets of respective disparity vectors in a case where the type of disparity information set is the first type and where "Block_Size" is "01", or "10". In this case, the information set of each disparity vector is arranged using an area of three bytes, as described above. Fig. 75(b) illustrates an example arrangement of information sets of respective disparity vectors in a case where the type of disparity information set is the first type and where "Block_Size" is "00". In this case, "ID_Block(i)" can be omitted by arranging all the pixels of a picture in scan order (video pixel order). That is, in this case, the information set of each disparity vector is arranged using an area of two bytes.

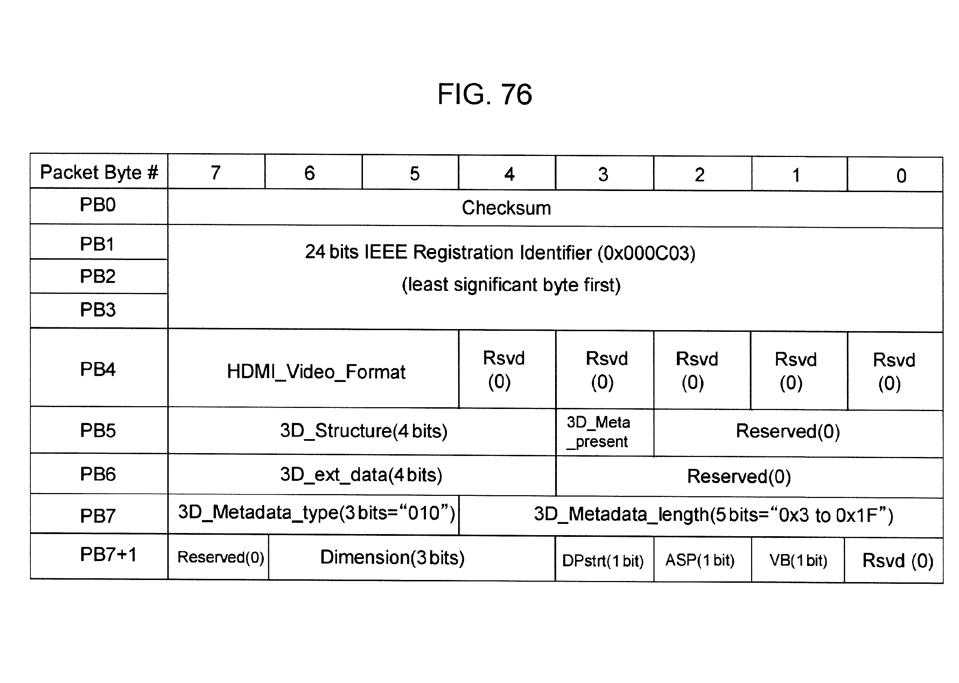

Note that the packet structure of HDMI Vendor Specific InfoFrame illustrated in Fig. 71 shows, with the information "Disparity_Info_type", whether the type of the disparity information set transmitted in the active space area is the first type or the second type. However, in a case where the type of disparity information set transmitted in the active space area is limited to only the first type or the second type from the beginning, the information "Disparity_Info_type" is not necessary. In that case, the seventh bit of the seventh + 1 byte (PB7+1) is reserved (Reserved(0), as illustrated in Fig. 76.

As described above, in the stereo image display system 10 illustrated in Fig. 1, disparity is given to the same pieces of superimposition information that are to be superimposed on a left-eye image and a right-eye image (such as closed-caption information, subtitle information, graphics information, and text information), on the basis of the disparity information of one of the left-eye image and the right-eye image with respect to the other. Thus, information in which disparity adjustment has been performed in accordance with the perspective of individual objects in an image can be used as the same pieces of superimposition information that are to be superimposed on a left-eye image and a right-eye image, and the perspective consistency among the individual objects in the image can be maintained in displaying the superimposition information.

### <2. Modification>

Note that, in the above-described embodiment, the stereo image display system 10 is constituted by the broadcast station 100, the set top box 200, and the television receiver 300. However, the television receiver 300 is provided with the bit stream processing unit 201 that functions equivalently to the bit stream processing unit 201 in the set top box 200, as illustrated in Fig. 46. Thus, a stereo image display system 10A constituted by the broadcast station 100 and the television receiver 300 is available, as illustrated in Fig. 77.

Also, in the above-described embodiment, an example in which a data stream (bit stream data) including stereo image data is broadcasted by the broadcast station 100 has been described. However, the present invention can of course be applied to a system having a configuration in which this data stream is distributed to a reception terminal using a network, such as the Internet.

Also, in the above-described embodiment, a method of using HDMI Vendor Specific InfoFrame and a method of using an active space have been described as a method for transmitting a disparity information set from the set top box 200A to the television receiver 300A. Instead, the disparity information set may be transmitted through a bidirectional communication path constituted by the HPD line 86 (HEAC-line) and the utility line 88 (HEAC+line).

Also, in the above-described embodiment, the set top boxes 200 and 200A are connected to the television receivers 300 and 300A via a digital interface of HDMI. However, the present invention can of course be applied to a case where those are connected via a digital interface (including wireless as well as wired) similar to the digital interface of HDMI.

Also, in the above-described embodiment, a description has been given of an example of transmitting all or some of the disparity vectors (see Fig. 8 and Fig. 27) used in the bit stream processing unit 201 as a disparity information set from the set top box 200A to the television receiver 300A using an HDMI interface. However, such a technique of transmitting a disparity information set via the HDMI interface can of course be applied to a combination of another source apparatus and sink apparatus. For example, a disc player such as a BD and DVD, and furthermore a game machine may be used as a source apparatus, and a monitor apparatus and a projector apparatus may be used as a sink apparatus.

Note that this application refers to Japanese Patent Application No. 2009-153686.

### Industrial Applicability

The present invention can be applied to a stereo image display system or the like for superimposing superimposition information, such as closed-caption information, subtitle information, graphics information, and text information, on an image and displaying the image.

### Reference Signs List

10, 10A ··· stereo image display system, 100 ··· broadcast station, 110, 110A to 110D ··· transmission data generating unit, 111L, 111R ··· camera, 112 ··· video framing unit, 113 ··· video encoder, 113a ··· stream formatter, 114 ··· disparity vector detecting unit, 115 ··· disparity vector encoder, 116 ··· microphone, 117 ··· audio encoder, 118 ··· subtitle/graphics producing unit, 119 ··· subtitle/graphics encoder, 119a ··· stream formatter, 120 ··· text producing unit, 121 ··· text encoder, 122 ··· multiplexer, 124 ··· subtitle/graphics processing unit, 125 ··· text processing unit, 130 ··· data retrieving unit, 130a ··· data recording medium, 131 to 133 ··· switch, disparity information set creating unit, 200, 200A ··· set top box, 201, 201A, 201B, 201C ··· bit stream processing unit, 202 ··· HDMI terminal, 203 ··· antenna terminal, 204 ··· digital tuner, 205 ··· video signal processing circuit, 206 ··· HDMI transmitting unit, 207 ··· audio signal processing circuit, 211 ··· CPU, 212 ··· flash ROM, 213 ··· DRAM, 214 ··· internal bus, 215 ··· remote control receiving unit, 216 ··· remote control transmitter, 220 ··· demultiplexer, 221 ··· video decoder, 222 ··· subtitle/graphics decoder, 223 ··· text decoder, 224 ··· audio decoder, 225 ··· disparity vector decoder, 226 ··· stereo-image subtitle/graphics producing unit, 227 ··· stereo-image text producing unit, 228 ··· video superimposing unit, 229 ··· multi-channel speaker control unit, 231 ··· disparity vector extracting unit, 232 ··· disparity vector retrieving detecting unit, 300, 300A ··· television receiver, 301 ··· 3D signal processing unit, 302 ··· HDMI terminal, 303 ··· HDMI receiving unit, 304 ··· antenna terminal, 305 ··· digital tuner, 306 ··· bit stream processing unit, 307 ··· video/graphic processing circuit, 308 ··· panel drive circuit, 309 ··· display panel, 310 ··· audio signal processing circuit, 311 ··· audio amplifier circuit, 312 ··· speaker, 321 ··· CPU, 322 ··· flash ROM, 323 ··· DRAM, 324 ··· internal bus, 325 ··· remote control receiving unit, 326 ··· remote control transmitter, 400 ··· HDMI cable

## Claims

1. A stereo image data transmitting apparatus comprising:
a data transmitting unit that transmits stereo image data including left-eye image data and right-eye image data and a disparity information set including disparity information of one of a left-eye image and a right-eye image with respect to the other to an external apparatus via a transmission path.

2. The stereo image data transmitting apparatus according to Claim 1,
wherein the data transmitting unit
transmits the image data to the external apparatus via the transmission path using a plurality of channels and using a differential signal, and
transmits the disparity information to the external apparatus by inserting the disparity information set in a blanking period of the image data.

3. The stereo image data transmitting apparatus according to Claim 2,
wherein the disparity information set includes pieces of disparity information corresponding to a certain number of positions in an image area and pieces of position information indicating positions in the image area to which the respective pieces of disparity information belong.

4. The stereo image data transmitting apparatus according to Claim 2,
wherein the disparity information set includes division information of an image area and pieces of disparity information representing respective division areas.

5. The stereo image data transmitting apparatus according to Claim 2,
wherein the disparity information set is added with identification information indicating whether the type of the disparity information set is a first type or a second type, and
wherein the disparity information set
includes pieces of disparity information corresponding to a certain number of positions in an image area and pieces of position information indicating positions in the image area to which the respective pieces af disparity information belong when the identification information indicates the first type, and
includes division information of the image area and pieces of disparity information representing respective division areas when the identification information indicates the second type.

6. The stereo image data transmitting apparatus according to Claim 1,
wherein the data transmitting unit includes
a transmission data generating unit that generates transmission data in which a video field period serves as a unit, the video field period being divided using a vertical synchronization signal and including a horizontal blanking period, a vertical blanking period, and an active video period, and
a transmission data transmitting unit that transmits the transmission data generated by the transmission data generating unit to the external apparatus via the transmission path using a plurality of channels and using a differential signal,
wherein the active video period includes a main video area and an auxiliary video area, and
wherein the transmission data generating unit arranges image data in the main video area and arranges the disparity information set related to the image data arranged in the main video area in the auxiliary video area.

7. The stereo image data transmitting apparatus according to Claim 6,
wherein the disparity information set includes pieces of disparity information corresponding to a certain number of positions in an image area and pieces of position information indicating positions in the image area to which the respective pieces of disparity information belong.

8. The stereo image data transmitting apparatus according to Claim 6,
wherein the disparity information set includes division information of an image area and pieces of disparity information representing respective division areas.

9. The stereo image data transmitting apparatus according to Claim 6,
wherein the disparity information set is added with identification information indicating whether the type of the disparity information set is a first type or a second type, and
wherein the disparity information set
includes pieces of disparity information corresponding to a certain number of positions in an image area and pieces of position information indicating positions in the image area to which the respective pieces of disparity information belong when the identification information indicates the first type, and
includes division information of the image area and pieces of disparity information representing respective division areas when the identification information indicates the second type.

10. A stereo image data transmitting method comprising:
a data transmitting step of transmitting stereo image data including left-eye image data and right-eye image data and a disparity information set including disparity information of one of a left-eye image and a right-eye image with respect to the other to an external apparatus via a transmission path.
